# EUROPEAN PATENT APPLICATION

(11) **EP 1 257 126 A2**
(43) Date of publication of application: **13.11.2002**
(21) Application number: 01308437.1
(22) Date of filing: 02.10.2001
(51) Int. Cl.: H04N 7/173, G06F 17/30

(54) **Control system and controlling method for controlling a display device, a server and a medium**

(30) Priority: 09.05.2001 JP 2001139197
(71) Applicant: FUJITSU LIMITED, Kawasaki-shi, Kanagawa 211-8588 (JP)
(72) Inventor: Hatanaka, Itaru, c/o Fujitsu Personal Computer, Inagi-shi, Tokyo (JP); Nita, Mio, c/o Fujitsu Personal Computer, Inagi-shi, Tokyo (JP); Nakamura, Yoshimoto, c/o Fujitsu Personal Computer, Inagi-shi, Tokyo (JP); Ochiai, Mikako, c/o Fujitsu Personal Computer, Inagi-shi, Tokyo (JP); Yanagi, Yoshiharu, c/o Fujitsu Limited, Kawasaki-shi, Kanagawa 211-8588 (JP); Tsutsumi, Shinji, c/o Fujitsu Limited, Kawasaki-shi, Kanagawa 211-8588 (JP); Kurimoto, Eiji, c/o Fujitsu Limited, Kawasaki-shi, Kanagawa 211-8588 (JP); Urushihara, Masashi, c/o Fujitsu Limited, Kawasaki-shi, Kanagawa 211-8588 (JP)
(74) Representative: Fenlon, Christine Lesley

(57) **Abstract**

A control system (2) controls a display device including a display unit (5) for displaying a motion picture, and a pointing unit (7) for pointing to a position on the motion picture. The control system (2) includes a unit for recognizing an object in the motion picture on which the pointing manipulation is effected, and a processing unit for executing a predetermined process related to the object recognized. Thereby an audience can view an advertisement related to a desire-to-see object when desiring without compulsion from a broadcaster.

## Description

The present invention relates to a technology of controlling a display device.

A previously-proposed TV advertisement has taken a mode in which the advertisement determined by a broadcaster is broadcast in a way that inserts the advertisement in between programs. Further, the previously-proposed TV advertisement is inserted by compulsion into the program irrespective of whether the audiences wish to see or not, and alternatively no advertisement is inserted. Hence, there arise the following problem inherent to the previously-proposed TV advertisement.

For instance, the audiences must see advertisements that they do not want to see. Reversely, the audiences are unable to see when desiring. Moreover, the insertion of the advertisement that interrupts the program might spoil an atmosphere of the program. In such a case, there is given no chance to avoid the insertion of the advertisement.

Further, the priority is given to how much a commercial article impresses the audiences, so that the advertisements tend to concentrate on gaudier contents. Accordingly, there are not a few cases where the advertisements that fit makers' image and articles' images as well.

What can be considered as a measure for obviating such defects of the TV advertisements is that, for example, when displaying a substantial program picture, an advertisement related to this picture is linked, and this advertisement may be displayed in response to a request of the user. An example of this type of mechanism is a Web browser. What is displayed on the Web is not defined as a program. According to the Web browser, however, button-based options are displayed in the text, and the audience selects a hyperlink by clicking the button or the like to invoke a related text file, thereby actualizing a function of executing the application.

The hyperlinks on the Web browser are, however, limited to those from display components such as buttons and created images like bitmap images. Moreover, the Web browser is incapable of linking, to other information, what naturally merges into the program as seen in analog animated images and a picture segment of an actually recorded video picture.

An example of what the picture is changed similarly by the audience's selection is a interactive video like a laser disk. According to the interactive video, for instance, the button-based options are displayed in the program, and a story of the program diverts by the audience's selecting the button.

In the interactive video, however, the audience must select the story by the button-based manipulation. Besides, the audience can not select beyond a range of the preset options.

Further, the interactive programs are provided in the BS digital broadcasting and so on. Namely, the button-based options are displayed in the program, and the story diverts by the audience's selecting the button. These programs are streamed partially by picture-based processing. The diverting function thereof is, however, confined to a still image and animated images with a simple motion, and there is no scheme to divert the story from the natural and actual picture in the program.

It is desirable to provide a technology by which the audience is able to get information related to an object that the audience wants when desiring without receiving any compulsion from a broadcaster.

It is also desirable to provide a technology capable of recognizing such an intention of the audience from a manipulation of the audience.

It is desirable to provide a technology capable of easily producing such information and providing such information to the audience.

According to an embodiment of a first aspect of the present invention, there is provided a control system for controlling a display device including a display unit for displaying a motion picture, and a pointing unit for pointing a position on the motion picture, the control system comprising a unit for recognizing an object in the motion picture on which the pointing manipulation is effected, and a processing unit for executing a predetermined process related to the object recognized.

Preferably, the display device further may include a receiving unit for receiving data, the receiving unit may receive first data containing the motion picture, and second data related to the object in the motion picture contained in the first data.

Preferably, the processing unit may make the display device output the second data related to the object recognized.

Preferably, the second data may contain an image related to the motion picture of the first data.

Preferably, the second data may be multiplexed with the first data and thus distributed.

Preferably, the second data may be embedded in a margin of the first data.

Preferably, the motion picture of the first data may contain an image related to a commercial article or a service becoming an advertisement target, and the second data may be an advertisement of the article or the service.

Preferably, the processing unit may execute an application program related to the object recognized.

Preferably, the processing unit may execute a task related to the object recognized.

Preferably, the display device may further include a communication unit for transmitting a command to other task executing device, and the processing unit, via the communication unit, may command the other task executing device to execute a task related to the object recognized.

Preferably, the task executing device may be an E-mail server for delivering an E-mail, and the command may be a request for transmitting E-mail data related to the object. The processing unit may receive the transmitted E-mail data via the communication unit.

Preferably, the display device may further include a communication unit for transmitting information to an add-up server for adding up pieces of information, and the processing unit, via the communication unit, may notify the add-up server of the information related to the recognized object, and makes the add-up server add up results of the recognition.

Preferably, the motion picture may be formed of a plurality of frames. The receiving unit may further receive definition information for defining an area of the object of each frame, and the recognizing unit may collate a position on the motion picture receiving the pointing manipulation with the definition information with respect to the frame of the motion picture receiving the pointing manipulation.

Preferably, the control system may further comprise a unit for displaying the area in the motion picture with enhancement.

Preferably, the receiving unit may further receive information for describing a characteristic of the object, and the processing unit may generate an object corresponding to the motion picture on the basis of the motion picture and the information for describing the characteristic of the object.

Preferably, when the pointing manipulation occurs during the display of the motion picture contained in the first data, the processing unit , after an end of displaying the motion picture, may command the display device to output the second data related to the object recognized by the pointing manipulation.

Preferably, the display device may further include a recording unit for recording data, and the processing unit, when the object is recognized from the pointing manipulation during the display of the motion picture, may command the recording unit to record the second data related to the object, and after the end of displaying the motion picture, may command the display device to output the second data recorded.

Preferably, the processing unit, when the object is recognized from the pointing manipulation during the display of the motion picture contained in the first data, may command the display device to effect a first changeover to an output of the second data related to the object.

Preferably, the processing unit may command the display device to executes a second changeover to displaying the motion picture after outputting the second data.

Preferably, the display device may further include a recording unit for recording data, and the processing unit, after outputting the second data, may issue a command of displaying the motion picture from a point of the first changeover recorded on the recording unit.

Preferably, the display device may include a first receiving unit for receiving the first data and a second receiving unit for receiving the second data.

According to an embodiment of a second aspect of the present invention, there is provided a control system for controlling a display device including a display unit for displaying a motion picture, and a pointing unit for pointing a position on the motion picture, the control system comprising a communication unit for transmitting the position on the motion picture receiving the pointing manipulation to a server including a unit for recognizing an object in the motion picture receiving the pointing manipulation, and receiving, from the serve, information on the object in the motion picture recognized by the server, and a processing unit for executing a predetermined process related to the object recognized.

Preferably, the display device may further include a receiving unit for receiving data. The receiving unit may receive first data containing the motion picture, and second data related to the object in the motion picture contained in the first data, and the processing unit may make the display device output the second data related to the object recognized.

Preferably, the display device may include a reproducing unit for reproducing the motion picture recorded on a recording medium. The recording medium may be recorded with a first motion picture and a second image related to an object corresponding to the first motion picture, and the processing unit may make the reproducing unit reproduce from the recording medium the second image related to the object recognized and may make the display device display the reproduced second image.

Preferably, the server may further include a unit for transmitting an information to an add-up device for adding up the pieces of information, and the processing unit may notify the server of the information on the object recognized via the communication unit, and may make the add-up device add up results of the recognition via the server.

Preferably, the display device may further include a reproducing unit for reproducing the motion picture recorded on recording medium, and the communication unit , when the motion picture to be reproduced receives the pointing manipulation, may transmit, to the server, information for specifying this motion picture and information for specifying a position where the pointing manipulation is effected on the motion picture.

According to an embodiment of a third aspect of the present invention, there is provided a server in linkage with a display device including a receiving unit for receiving data containing a motion picture, a display unit for displaying the motion picture, and a pointing unit for pointing a position on the motion picture, the server comprising a communication unit (18) for receiving information on the position where the pointing manipulation is effected from the display device, a recognizing unit for recognizing the object in the motion picture receiving the pointing manipulation on the basis of the information received from the display device, and a processing unit for executing a predetermined process related to the object recognized.

Preferably, the processing unit may transmit an information on the object recognized to the display device via the communication unit.

Preferably, the processing unit may execute a task related to the object recognized.

Preferably, the processing unit may command other task executing device to execute a task related to the object recognized via the communication unit.

Preferably, the communication unit may notify a add-up server for adding up pieces of information, of the information on the object recognized, and may make the add-up server add up results of the recognition.

Preferably, the communication unit may communicate with an E-mail server for delivering an E-mail, and the processing unit may command the E-mail server to deliver an E-mail related to the object recognized via the communication unit.

According to an embodiment of a fourth aspect of the present invention, there is provided a server for issuing a command to a data distribution system in linkage with a display device including a receiving unit for receiving data containing a motion picture from a data distribution system, a display unit for displaying the motion picture, and a pointing unit for pointing a position on the motion picture, the server comprising a communication unit for receiving information on the position where the pointing manipulation is effected on the motion picture from the display device, a recognizing unit for recognizing the object in the motion picture receiving the pointing manipulation on the basis of the information received from the display device, a referring unit for referring to an instruction related to the object, and a commanding unit for commanding the data distribution system to change over the data to be distributed in accordance with the instruction.

According to an embodiment of a fifth aspect of the present invention, an add-up device comprises a receiving unit for receiving pieces of information to be added up, a category specifying unit for retaining category information for categorizing the added-up information, an add-up unit for categorizing the added-up information in accordance with the category information and adding up these piece of added-up information, an information recording unit for recording pieces of added-up information ruled out of the category information by the add-up unit, and a generating unit for generating a new set of category information for categorizing the added-up information recorded on the information recording unit. The category specifying unit adds the generated category to the category information, and the add-up unit adds up once again the added-up information on the basis of the category information with the new category.

Preferably, the added-up information may be an answer to a questionnaire.

Preferably, the answer to the questionnaire may be a piece of information about a position on a picture, and the category information may contain area information created corresponding to picture segments.

According to an embodiment of a sixth aspect of the present invention, a processing device comprises a photographing device for obtaining an image of a subject, a signal generating unit attached to each of a plurality of positions on the subject, a detection unit for detecting signals transmitted from the signal generating units, a recording unit for recording a mapping between the image and the signal, and a processing unit for creating, from the signals, information for defining an occupy area on the image of the subject or a part of the subject.

According to an embodiment of a seventh aspect of the present invention, there is provided a server for supporting an agency of advertisement for a commercial article related to a motion picture segment not assumed as an obj ect in linkage with a display device including a receiving unit for receiving a motion picture containing a commercial article, a display unit for displaying the motion picture, and a pointing unit for pointing a position on the motion picture, the server comprising a receiving unit for receiving information about the position where the pointing manipulation is effected from the display device, a recognizing unit for recognizing an object in the motion picture receiving the pointing manipulation on the basis of the information received from the display device, a recording unit for, if unable to recognize the object with respect to the pointing manipulation, recording data on that position, and a reporting unit for adding up and reporting pieces of information on the recorded position.

According to an embodiment of an eighth aspect of the present invention, there is provided a server for supporting an information research about the motion picture in linkage with a display device including a receiving unit for receiving data containing a motion picture, a display unit for displaying the motion picture, and a pointing unit for pointing a position on the motion picture, the server comprising a receiving unit for receiving information about a position where the pointing manipulation is effected from the display device, a recognizing unit for recognizing an object in the motion picture receiving the pointing manipulation on the basis of the information received from the display device, a recording unit for, if unable to recognize the object with respect to the pointing manipulation, recording data on that position, and a reporting unit for adding up and reporting pieces of information on the recorded position.

According to an embodiment of a ninth aspect of the present invention, a display device comprises a receiving unit for receiving data containing a motion picture from a data distribution system, a display unit for displaying the motion picture, a pointing unit for pointing a position on the motion picture, and a communication unit for communicating with a server for recognizing an object in the motion picture. The communication unit, when a motion picture of first data displayed on the display unit receives the pointing manipulation, transmits, to the server, a piece of information about a position on the motion picture receiving the pointing manipulation and a piece of information for specifying the motion picture. The server commands the data distribution system to change over the data to be distributed in accordance with the position on the motion picture receiving the pointing manipulation. The receiving unit receives second data changed over, and the display unit displays the second data.

Further, there may be provided a program executed by a computer to actualize any one of those functions described above. There may also be provided a readable-by-computer recording medium recorded with this program.

As explained above, according to an embodiment of the present invention, the manipulation of the audience is detected, and the information related to the on-display motion picture is provided. Hence, whenreceiving, for example, abroadcastingprogram, the audience is able to get the information related to the object that the audience wants when desiring without any compulsion from a broadcaster.

Moreover, according to an embodiment of the present invention, such an intention of the audience can be recognized from the manipulation of the audience.

Reference will now be made, by way of example, to the accompanying drawings, in which:
FIG. 1 is a diagram showing a system architecture of an on-demand advertisement providing system in a first embodiment of the present invention;
FIG. 2 is a diagram showing an example of an on-demand advertisement;
FIG. 3 is a diagram showing an example of an on-demand advertisement;
FIG. 4 is a diagram showing a hardware architecture of an image receiver 1;
FIG. 5 is a diagram showing an example 1 of an object;
FIG. 6 is a diagram showing object distribution information with respect to the example 1 of the object;
FIG. 7 is a diagram showing a data structure of link information;
FIG. 8 is a flowchart showing a process of detecting a pointing manipulation;
FIG. 9 is a flowchart showing details of a process of judging a pointed object;
FIG. 10 is a diagram showing a modified example of the object;
FIG. 11 is a diagram showing object distribution information with respect to the modified example of the object;
FIG. 12 is an explanatory diagram showing a principle of a pointing manipulation detecting function in a second embodiment;
FIG. 13 is a flowchart showing an object generating process executed in the image receiver 1;
FIG. 14 is a diagram showing a system architecture of an on-demand advertisement providing system in a third embodiment;
FIG. 15 is a diagram showing a hardware architecture of a pointing process server 11;
FIG. 16 is a diagram showing a data structure of pointing information 40;
FIG. 17 is a flowchart showing a pointing manipulation detecting process;
FIG. 18 is a flowchart showing a process of the pointing process server 11;
FIG. 19 is a diagram showing a system architecture of the on-demand advertisement providing system in a fourth embodiment;
FIG. 20 is a diagram showing a system architecture of the on-demand advertisement providing system in a fifth embodiment;
FIG. 21 is a diagram showing a data structure of object distribution information 32a;
FIG. 22 is a flowchart showing a pointing judgement/advertisement providing process;
FIG. 23 is a diagram showing a system architecture of the on-demand advertisement providing system in a modified example of the fifth embodiment;
FIG. 24 is a diagram showing a system architecture of the on-demand advertisement providing system in a modified example of the fifth embodiment;
FIG. 25 is a diagram showing a system architecture of the on-demand advertisement providing system in a modified example of the fifth embodiment;
FIG. 26 is a diagram showing a system architecture of a time-shift based on-demand advertisement providing system in a sixth embodiment;
FIG. 27 is a diagram showing a concept of a time-shift based pointing judgement/advertisement providing process;
FIG. 28 is a flowchart showing a time-shift based pointing judgement/advertisement providing process;
FIG. 29 is a diagram showing a concept of the time-shift based pointing judgement/advertisement providing process in the sixth embodiment;
FIG. 30 is a flowchart showing the time-shift based pointing judgement/advertisement providing process in a modified example of the sixth embodiment;
FIG. 31 is a diagram showing a system architecture of the on-demand advertisement providing system in a seventh embodiment;
FIG. 32 is a diagram showing a data structure of pointing information 40a;
FIG. 33 is a diagram showing an architecture of a personal computer beginner's guide video display device in an eighth embodiment;
FIG. 34 is a diagram showing a data structure of object distribution information 32b;
FIG. 35 is a display example of a PC beginner's guide video;
FIG. 36 is a diagram showing a system architecture of a TV shopping system in a ninth embodiment;
FIG. 37 is a diagram showing processing steps of the TV shopping system;
FIG. 38 is a diagram showing a data structure of object distribution information 32c;
FIG. 39 is a diagram showing a data structure of pointing information 40c;
FIG. 40 is a diagram showing a data structure of audience contractor information;
FIG. 41 is a diagram showing a system architecture of a TV shopping system in a modified example of the ninth embodiment;
FIG. 42 is a diagram showing the processing steps of the TV shopping system;
FIG. 43 is a diagram showing a system architecture of a questionnaire system in a tenth embodiment;
FIG. 44 is a diagram showing a distribution of objects on a screen;
FIG. 45 is a flowchart showing a process of the pointing process server 11;
FIG. 46 is a diagram showing an outline of the process in the questionnaire system in a modified example of the tenth embodiment;
FIG. 47 is a flowchart showing a process of an add-up server 81;
FIG. 48 is a flowchart showing an once-more add-up process of answers with options unknown;
FIG. 49 is a diagram showing a system architecture of a photographing system in an eleventh embodiment;
FIG. 50 is a diagram showing a step of giving a mapping between an image photographed by a camera 85 and an object generated;
FIG. 51 is a diagram showing processing steps of an advertisement agent business system;
FIG. 52 is a diagram showing steps of a picture-based information search system;
FIG. 53 is a diagram showing a display mode when enhancement-displaying an object that can be pointed;
FIG. 54 is a diagram showing an example of enhancement-displaying the obj ect corresponding to a commercial article of a specific sponsor;
FIG. 55 is a diagram showing a data structure of object distribution information 32d;
FIG. 56 is a flowchart showing a process of enhancement-displaying the article of the sponsor;
FIG. 57 is a diagram showing an outline of a multi-story video in a fifteenth embodiment;
FIG. 58 is a flowchart showing a display process in the multi-story video;
FIG. 59 is a diagram showing an example of a program in which the picture changes corresponding to manipulations of a plurality of audiences;
FIG. 60 is a diagram showing processing steps in a system for quantifying effectiveness of an advertisement;
FIG. 61 is a flowchart showing processing steps in a support system for predicting a vogue; and
FIG. 62 is a diagram showing a system architecture of an information providing system in a nineteenth embodiment.

Embodiments of the present invention will hereinafter be described with reference to the accompanying drawings.

### <<First Embodiment>> On-Demand Advertisement Providing System

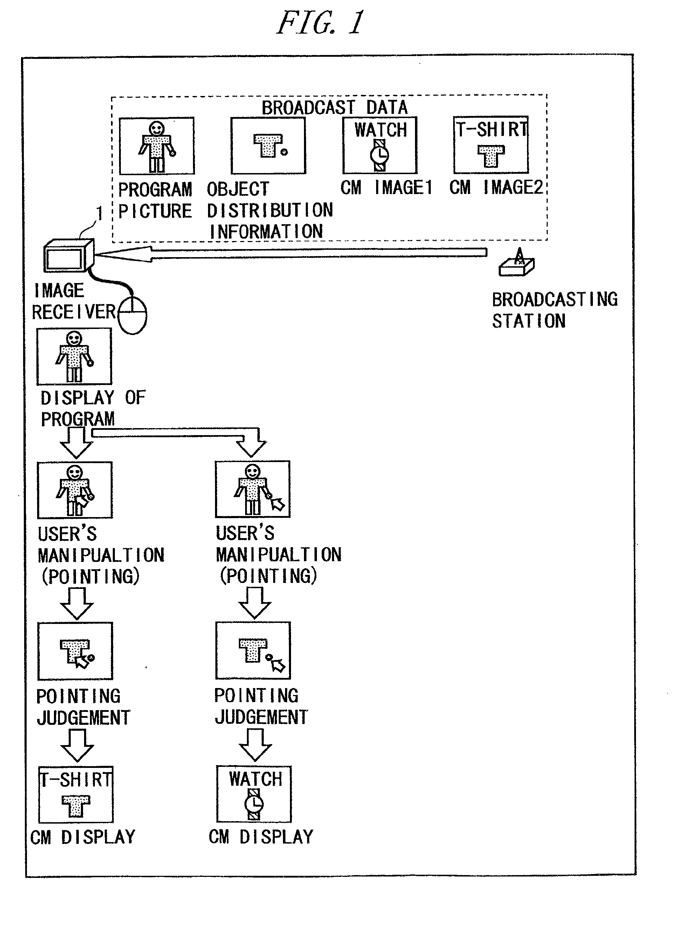

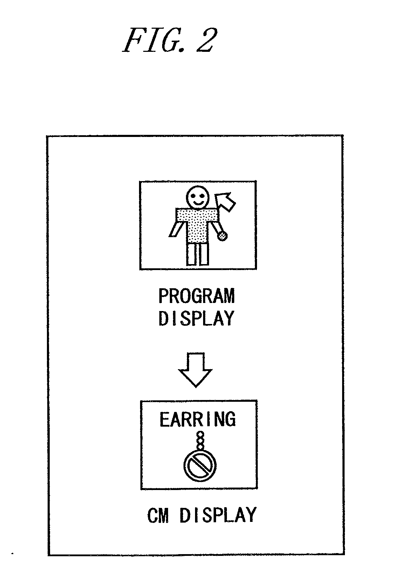

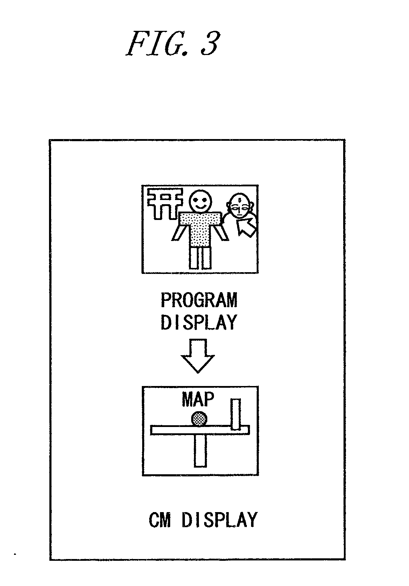

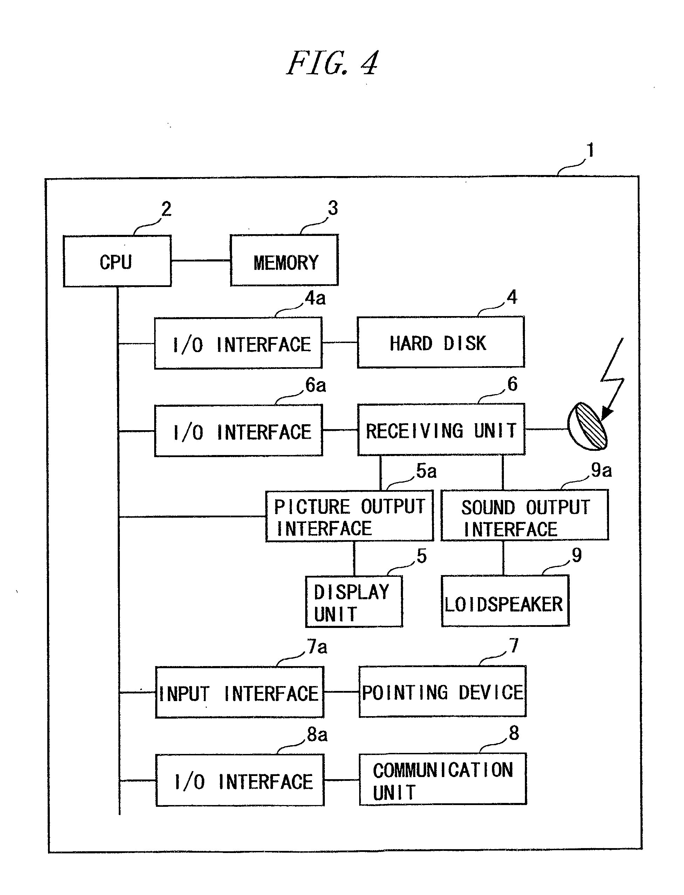

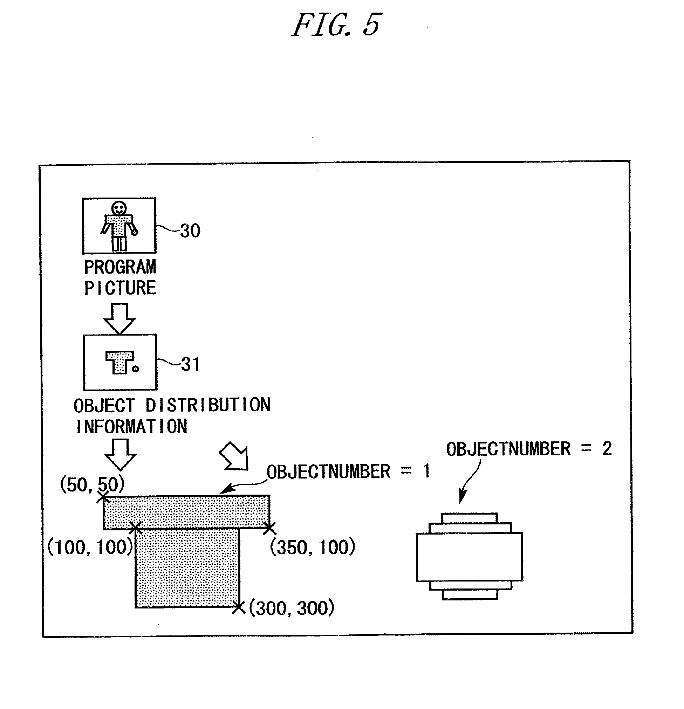

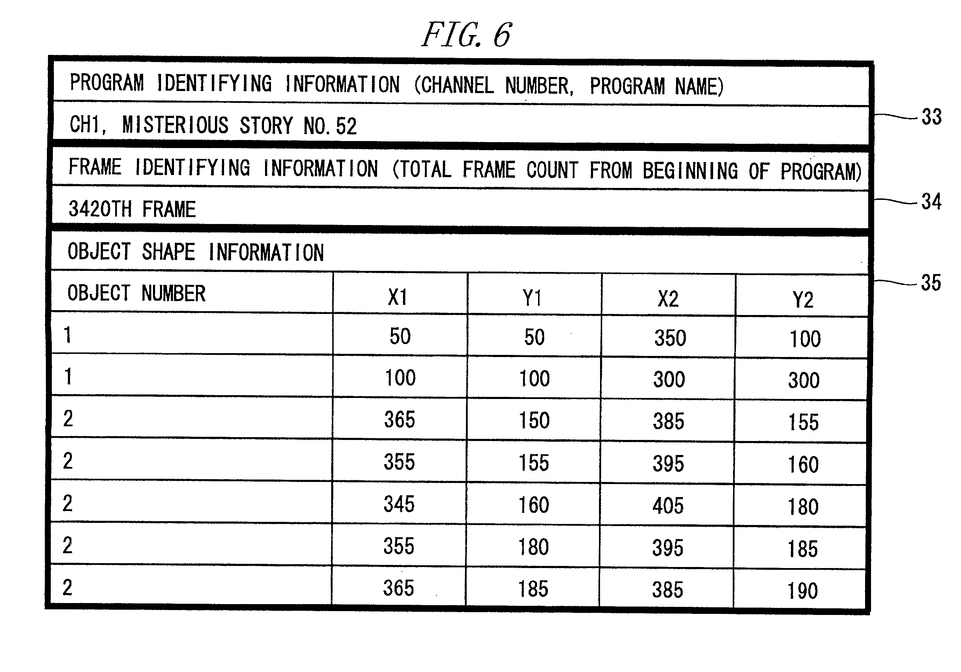

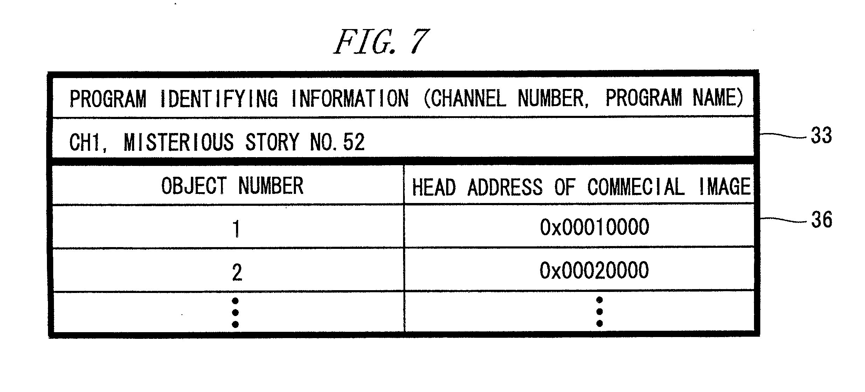

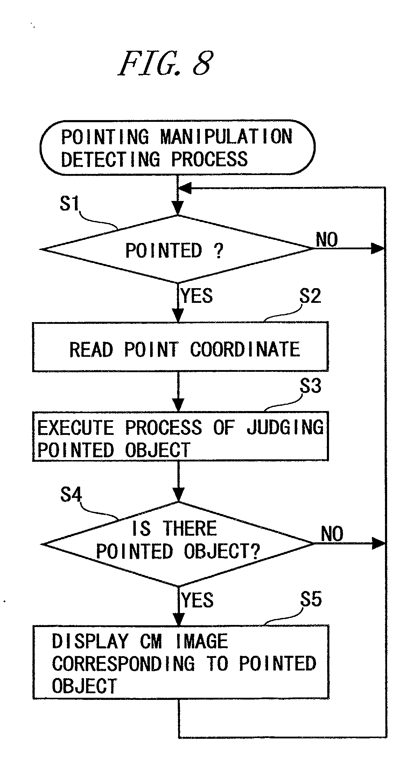

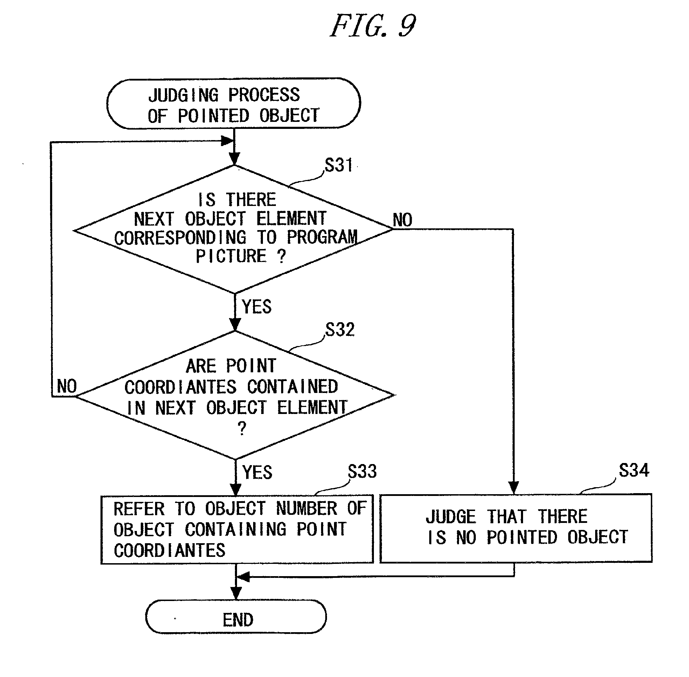

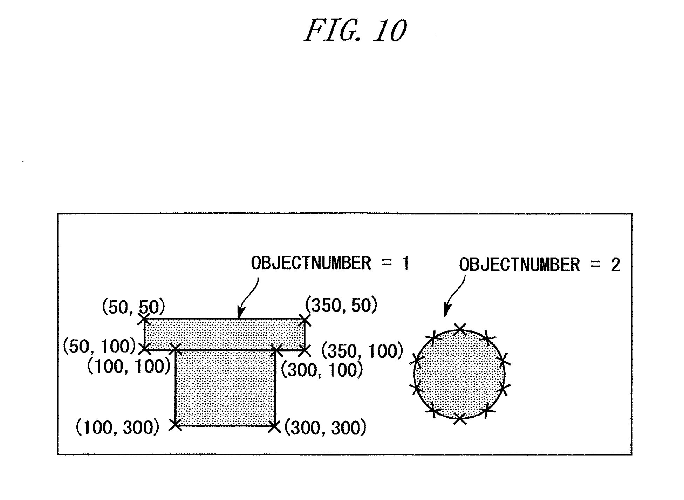

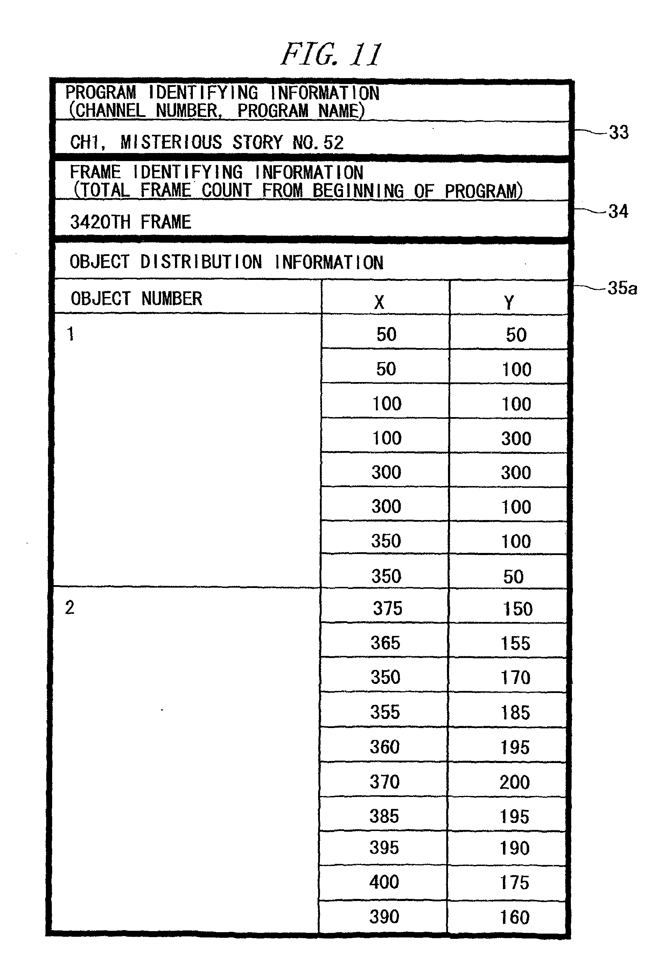

A first embodiment of the present invention will hereinafter be explained referring to FIGS. 1 through 11. FIG. 1 is a diagram showing a system architecture of an on-demand advertisement providing system in a first embodiment. FIGS. 2 and 3 are diagrams each showing an example of an on-demand advertisement. FIG. 4 is a diagram showing a hardware architecture of an image receiver 1 shown in FIG. 1. FIG. 5 is a diagram showing an example 1 of an object processed in the present on-demand advertisement providing system. FIG. 6 is a diagram showing an example of a data structure (which is hereinafter be termed object distribution information) with respect to an object example 1 illustrated in FIG. 5. FIG. 7 is a diagram showing a data structure of link information for linking the object to a commercial image. FIG. 8 is a flowchart showing a process of detecting a user manipulation (that is hereinafter be called a pointing manipulation) by using a pointing device 7 shown in FIG. 4. FIG. 9 is a flowchart showing in detail a judging process of a point object shown in FIG. 8. FIG. 10 is a diagram showing a modified example of the object. FIG. 11 is a diagram showing the object distribution information with respect to the object illustrated in FIG. 10.

### <System Architecture>

FIG. 1 shows the system architecture of the present on-demand advertisement providing system. This system is configured by a broadcasting station (corresponding to a data distribution system) for broadcasting broadcast data, and an image receiver 1 (corresponding to a display device) for receiving and displaying the broadcast data.

The broadcasting station distributes the broadcast data via satellite broadcasting waves, ground waves, a cable TV network or a data communications network.

The broadcast data contain pictures of programs provided to audiences, the object distribution information, the commercial images (displayed as CM images 1, 2 and so on in FIG. 1), and unillustrated sound data.

The program picture is categorized as a TV program picture including animated pictures (motion pictures) and still images etc. The object distribution information is information for defining a specified segment of the picture as an object. The object defined herein is an audience operation target picture segment.

The commercial image is an image used for advertising an article and a service related to the program picture described above. The commercial image is related via the object to the program picture. The commercial image contains a picture, i.e., the animated image.

The image receiver 1 has a pointing device such as a mouse and so forth. The audience is able to manipulate this pointing device to specify ("point" may also hereinafter be used) the picture displayed on the image receiver 1.

Then, when the audience points the program picture, the image receiver 1 recognizes the object defined in this pointing position. The object contains the information for relating the commercial image, and hence the image receiver 1 displays this commercial image.

For instance, when the audience points clothing put on dramatis personae (who is hereinafter simply called a figure) in the program picture by use of the mouse, the image receiver 1 judges that an object corresponding to this clothing (a T-shirt) is pointed. Then, the image receiver 1 displays a commercial of the T-shirt related to this object.

Further, for example, when the audience points a watch put on the figure in the program picture by use of the mouse, the image receiver 1 judges that an object corresponding to this watch is pointed. Then, the image receiver 1 displays a commercial of the watch related to this object.

FIGS. 2 and 3 show display examples of on-demand advertisements. FIG. 2 illustrates the figure appeared in the program who wears a piece of new design earring. When the audience points the earring with the mouse shown in FIG. 1, the image receiver 1 judges that an object retained corresponding to this earring image is pointed. Then, the image receiver 1 displays a commercial of this earring. Upon an end of the display of the commercial image, the image receiver 1 again displays the program picture.

FIG. 3 shows a display example of a tour program. In this program, the Great Buddha at Kamakura is displayed behind the figure. When the audience points the Great Buddha at Kamakura by using the mouse shown in FIG. 1, the image receiver 1 judges that an object corresponding to the Great Buddha is pointed. Then, the image receiver 1 displays a picture for introducing a peripheral map, a fee for worshiping and others.

This type of object is defined by the object distribution information transmitted in parallel with the program picture.

### <Hardware Architecture>

FIG. 4 is a diagram showing a hardware architecture of the image receiver 1. This image receiver 1 includes a CPU 2 for executing a program, a memory 3 for storing the program executed by the CPU 2 and data processed by the CPU 2, a hard disk 4 for recording the program and the data, a receiving unit 6 for receiving the broadcasting waves, and a pointing device 7 for manipulating menus and icons . The image receiver 1 further includes peripheral devices such as a communication unit 8 for accessing the network and others, a variety of interfaces for connecting these peripheral devices to the CPU 2, a display unit 5 and a picture output interface 5a connected to the receiving unit 6 for displaying the picture, and a loudspeaker 9 and a sound output interface 9a that output the sounds.

The CPU 2 executes the program stored in the memory 3 and controls the image receiver 1.

The memory 3 is stored with the program executed by the CPU 2 and the data processed by the CPU 2.

The hard disk 4 is recorded with the program executed by the CPU 2 and the data processed by the CPU 2. The hard disk 4 is connected via an I/O interface 4a to the CPU 2.

The receiving unit 6 demodulates and decodes the picture and sound from the broadcasting waves received via an antenna. The receiving unit 6 is, e.g., a DIRD (DIGITAL Integrated Receiver/Decoder) for demodulating the satellite digital broadcasting, and so on.

The program picture decoded by the receiving unit 6 is displayed on the display unit 5 through the picture output interface 5a. Further, the sound of the program demodulated by the receiving unit 6 is outputted via the sound output interface 9a from the loudspeaker 9.

The display unit 5 displays the picture demodulated and decoded by the receiving unit 6. Further, the display unit 5 is connected via the picture output interface 5a to the CPU 2. Then, the display unit 5 displays menus, icons, messages and so forth.

The display unit 5 is, for example, a CRT, a liquid crystal display, a PDP (Plasma Display Panel), an EL (Electro Luminescence) panel, an FED (Field Emission Display), etc.

The sound output interface 9a generates analog sound waveforms from the sound data demodulated and decoded by the receiving unit 6, and outputs the sound waveforms to the loudspeaker 9.

The pointing device 7 is used for manipulating the menus and icons displayed on the display unit 5. The pointing device 7 is, e.g., the mouse, a trackball, a joystick, an electrostatic touch panel, a stick-shaped pointing device, an optical pointing device, a touch panel etc.

Moreover, the pointing device 7 may be a device to which a remote controller having a button array for changing over TV channels is connected via an infrared-ray receiving unit. The pointing device 7 is connected to the CPU 2 through the input interface 7a.

The communication unit 8, based on a command from the CPU 2, accesses the network and communicates with other host on the network. Further, the communication unit 8 receives the broadcast distributed on the network. For instance, Internet broadcast is known as the broadcast distributed on the network.

This network is an ADSL (Asymmetric Digital Subscriber Line) involving the use of the cable TV network, telephone circuits and telephone lines, and wireless LAN. The communication unit 8 is connected via the I/O interface 8a to the CPU 2.

The communication unit 8 is, for example, a LAN (Local Area Network) card, a modem and a dial-up router. The LAN card is inserted into a slot in the image receiver 1. The modem may of such a type as to be built in the image receiver 1 or attached outside.

### <Data Structures of Object and commercial Image>

FIG. 5 shows an example 1 of the object. FIG. 5 illustrates an object 31 corresponding to a program picture 20 containing one figure. This object 31 consists of an object identified by an object number 1 and an object identified by an obj ect number 2. The object number is a unique number for identifying the concerned object in the present on-demand advertisement providing system.

The object identified by the object number 1 is an object corresponding to the clothing put on the figure. Further the object identified by the object number 2 is an object corresponding to the watch put on the figure . The image receiver 1 in the first embodiment expresses this kind of object with an aggregation of rectangular shapes. For instance, the object with the object number 1 contains a rectangular shape defined by a left upper point (50, 50), a right lower point (350, 100), and a rectangular shape defined by a left upper point (100, 100) and a right lower point (300, 300). Herein, according to the present on-demand advertisement providing system, the coordinates are defined in a way that sets the left upper point on the screen as an origin.

FIG. 6 shows an example of a data structure for describing this type of object distribution. In the first embodiment, the information for describing the object distribution given above is called object distribution information 32. FIG. 6 shows an example of the object distribution information 32 with respect to the object shown in FIG. 5. The image receiver 1 receives the object distribution information 32 in the format illustrated in FIG. 6, and stores the same information 32 in the memory 3.

The object distribution information 32 consists of program identifying information 33, frame identifying information 34 and object shape information 35. The program identifying information 33 is information for identifying a program containing the picture where the object is defined. For example, a program name is used as the program identifying information 33. Referring to FIG. 6, "CH1, Mysterious Story No.52" is set as the program identifying information 33.

The frame identifying information 34 is a unique number for identifying a frame (of a suite of frames forming a motion picture) constituting the program. A total frame count (serial numbers) counted from a start of the program is used as the frame identifying information 34.

The object shape information 35 consists of the object number, and information for defining rectangular shapes configuring the object given this object number. Each rectangular shape is defined by coordinates of the left upper point and right lower point of the rectangular shape. This individual rectangular shape is called an object element.

Referring to FIG. 6, the object with the object number 1 is configured by a rectangular shape defined by the left upper point (50, 50) and the right lower point (350, 100) and by a rectangular shape defined by the left upper point (100, 100) and the right lower point (300, 300). Further an object with an object number 2 is configured by a rectangular shape defined by a left upper point (365, 150) and a right lower point (385, 155) and by others (wherein the origin of the coordinates system is the left upper point on the screen, and the X-axis is given in the right direction, while the Y-axis is given in the downward direction).

FIG. 7 shows a data structure of link information for linking the object to the commercial image. The link information contains the program identifying information 33 and advertisement image management information 36. The advertisement image management information 36 consists of the object number and a head address of the commercial image linked to the object having this object number.

The head address of the commercial image is a head address where the commercial image is stored in the memory 3. The image receiver 1, when receiving the commercial image, stored this commercial image in the memory 3. This commercial image is embedded with the object number of the object to which the same image is linked and the program identifying information 33 of the program where this object is defined. The image receiver 1 stores a mapping of the object number and the head address of each commercial image in the link information (table).

### <Distribution of Commercial Image and Object Distribution Information 32>

### [TV Broadcasting]

In the case of the TV broadcasting, the commercial image and the object distribution information 2 are supplied as digital data in parallel with the program picture by utilizing a vertical retrace line blanking interval. Herein, the TV broadcasting is, e.g., so-called ground wave TV broadcasting, cable TV broadcasting etc.

In this case, the object distribution information 32 and the commercial image are stored in the memory 3 of the image receiver 1. The object distribution information 32 and the commercial image are transmitted in advance of the program picture during the vertical retrace line blanking interval.

Then, if given a request from the audience during the display of the program picture, the advertisement image in the memory 3 maybe displayed. The digital data transmission during the vertical retrace line blanking interval is described in [Standard TV Data Multiplex Broadcast in Transmission System Using Vertical Retrace Line Interval] ARIB STD-B5, a material of the Radio Wave Industry Association Foundation in Japan.

### [Satellite Digital Broadcasting]

The satellite digital broadcasting is that the image data are digitized, and the digital data are transmitted. In this satellite digital broadcasting, one picture may be transmitted by use of all of a broadcasting capacity for one channel.

Further, according to the satellite digital broadcasting, a plurality of pictures may be transmitted in a way that reduces the broadcasting capacity required for one single picture by lowering a resolution of the picture. Moreover, other categories of data excluding the picture may be transmitted by making the use of a free area of the broadcasting capacity.

In the program of the satellite digital broadcasting, the program picture, the object distribution information 32 and the commercial image are simultaneously supplied in parallel by utilizing these functions. For example, the Radio Wave Industry Association Foundation in Japan defines, as a transport stream, a method of distributing the broadcasting capacity within the channel in the BS digital broadcasting.

The provided object distribution information 32 and commercial image are stored in the memory 3 of the image receiver 1. Then, when a request is given from the audience during the display of the program picture, the commercial image in the memory 3 may be displayed.

### <Operation and Effect>

FIG. 8 shows a pointing manipulation detecting process executed by the CPU 2 of the image receiver 1. The pointing manipulation detecting process is a process of detecting an such an event that the audience manipulates the pointing device 7 to specify (point) the object, and displaying the commercial image corresponding to the object.

Normally, the CPU 2 monitors whether the pointing device 7 points somewhere on the screen of the display unit 5 (S1) If a position on the screen of the display unit 5 is pointed (YES in S1), the CPU 2 reads coordinates of this pointed position (S2).

Next, the CPU 2 executes a judging process with respect to a pointed object (S3). Subsequently, as a result of the process in S3, the CPU 2 judges whether there is a pointed object (S4). If there is no pointed object, the CPU 2 loops the control back to S1. While on the other hand, if it is judged as a result of the process in S4 that the pointed object exists, the CPU 2 searches for a head address of the commercial image corresponding to that obj ect by referring to the link information shown in FIG. 7. Then, the CPU 2 reads the commercial image from the memory 3 , and makes this image displayed on the display unit 5 (S5).

FIG. 9 shows details of the judging process (S3 in FIG. 8) of the pointed object. In this process, the CPU 2 judges whether the object is defined in the pointed position on the screen by referring to the object shape information 35 contained in the object distribution information 32 shown in FIG. 6.

In this process, to start with, the CPU 2 judges whether there exists a next object element (the rectangular shape shown in FIG. 5) corresponding to the current program picture (S31). If there is the next object element, the CPU 2 judges whether this object element contains the coordinates of the pointed position (which are hereinafter calledpoint coordinates) (S32).

If the object element contains the coordinates of the pointed position, the CPU 2 refers to the object number of the obtained containing the point coordinates (S33). Thereafter, the CPU 2 finishes the process.

On the other hand, the object element does not contain the coordinates of the pointed position, the CPU returns the control to S31.

Further, it is judged in S31 that there is no next object element corresponding toe program picture, the CPU 2 judges that there is no pointed object (S34). Thereafter, the CPU comes to an end of the process.

As discussed above, the on-demand advertisement providing system in the first embodiment provides the object distribution information 32 and the commercial information in parallel with the program picture. The image receiver 1 stores the memory 3 with the object distribution information 32 shown in FIG. 6, the link information shown in FIG. 7 and the commercial image.

The object distribution information 32 enables the image receiver 1 to collate the object with the pointed position of the picture displayed on the display unit 5. Further, the link information enables the image receiver 1 to refers to and display the commercial image linked to the object.

Thus, the object shape changes in real time corresponding to the picture by giving the object distribution information 32 to each frame of the picture. Therefore, the image receiver 1 is capable of recognizing a moving object (picture segment), as the object, contained in the motion picture.

### <Modified Example>

According to the first embodiment, the object distribution information 32 and the commercial image are transmitted beforehand during the vertical retrace line blanking interval in the TV broadcasting. The embodiment of the present invention is not, however, limited to the architecture and the steps described above.

For example, the program picture , the object distribution information 32 and the commercial image may be simultaneously supplied in parallel by using radio wave regions for a plurality of channels In this case, the image receiver 1 may be provided with the receiving units for the plurality of channels.

In accordance with the first embodiment, the object distribution information 32 is defined by the aggregation of the rectangular shapes as illustrated in FIG. 5 or 6. The embodiment of the present invention is not however, confined to this structure.

FIG. 10 shows an example where the object distribution information 32 is defined by a polygonal shape (formed by a train of apexes). Referring to FIG. 10, the object given the object number 1 is defined by a polygonal shape formed by a train of apexes (50, 50) , (50, 100), (100, 100), (100, 300) , (300, 300), (300, 100), (350, 100) and (350, 50).

FIG. 11 shows a modified example of the object distribution information 32 with respect to such an object. The objet distribution information 32 shown in FIG. 11 includes, as in the case shown in FIG. 6, the program identifying information 33, the frame identifying information 34 and object shape information 35a. In the modified example in FIG. 11, however, the object shape information 35a of each object is defined by coordinates of a train of apexes according to every obj ect number.

The discussion on the first embodiment discussed above has been focused on the on-demand advertisement providing system for displaying the commercial image corresponding to the object existing in the pointed position. The embodiment of the present invention is not, however, restricted to this mode. For example, the advertisement provided on demand may not be the commercial image but may be an advertisement expressed by voice. Further, the commercial image may be any one of the animated image and the still image.

In the first embodiment, the image receiver 1 is constructed integrally of the control units such as the CPU 2 and the memory 3, the recording device such as the hard disk 4 etc., the output device such as the display unit 5 and the loudspeaker 9 etc., the manipulation device such as the pointing device 7 etc., and the communication unit 8 as shown in FIG. 4. The embodiment of the present invention is not, however, limited to this construction.

For example, the present invention can be embodied by a configuration in which a receipt-only device connectable to the TV receiver, i.e., a set-top box or a TV tuner or the like is connected to the TV receiver. Further, the present invention can be embodied by such a system that a general-purposed device for information processing like a personal computer incorporates a TV receiving function. This kind of change in the architecture can be similarly attained in the following embodiments from a second embodiment onwards.

### <<Second Embodiment>> Point Judging Method Based on Object Generation

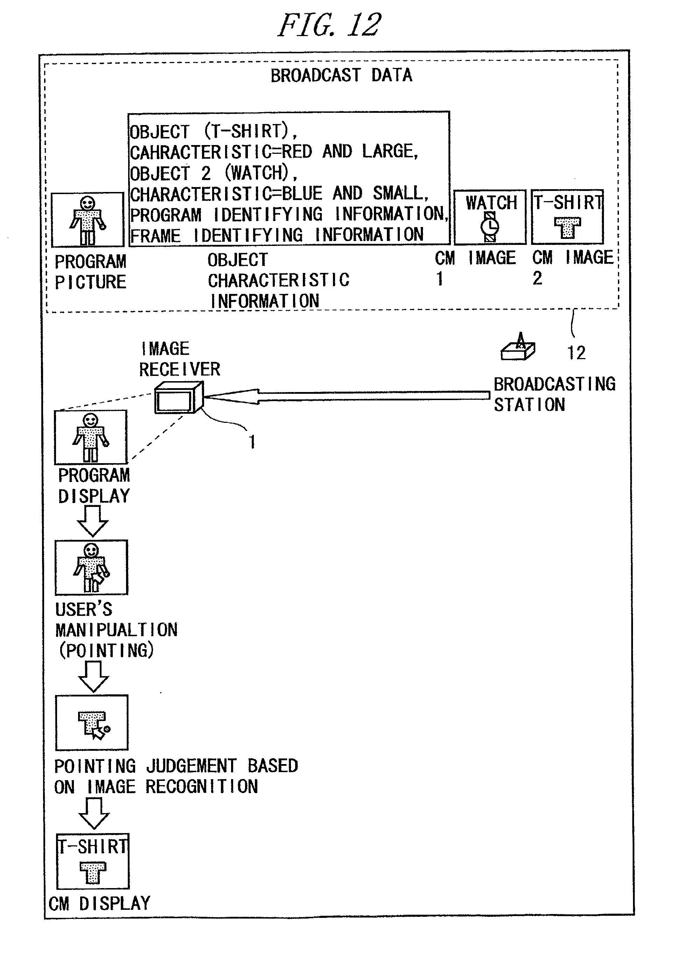

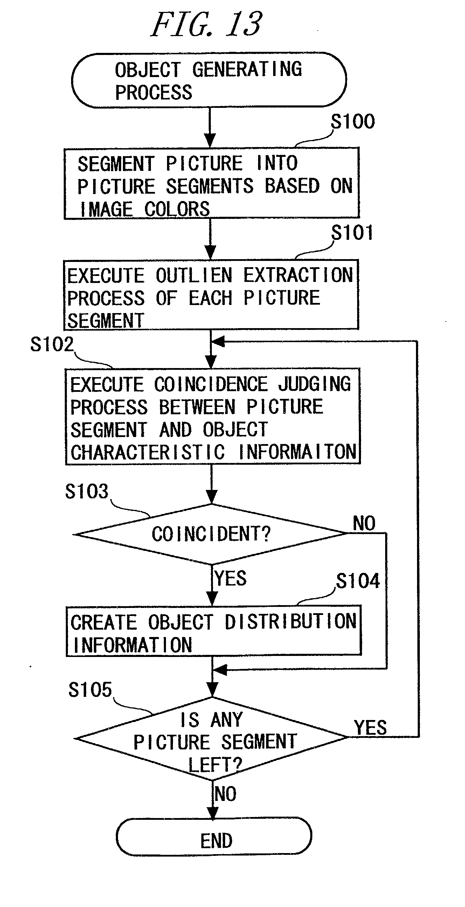

A second embodiment of the present invention will hereinafter be discussed referring to FIGS. 12 and 13. FIG. 12 is an explanatory diagram showing a principle of a point detecting function in the second embodiment. FIG. 13 is a flowchart showing an object generating process executed in the image receiver 1 shown in FIG. 12.

In the first embodiment, the object distribution information 32 corresponding to each of the picture frames is distributed in parallel with the program picture from the broadcasting station and stored in the memory 3 of the image receiver 1. According to the second embodiment, however, the broadcasting station distributes object characteristic information characterizing each object instead of distributing directly the object distribution information 32. Further, the image receiver 1 generates the object distribution information 32 from the program picture and the object characteristic information.

With this architecture, the image receiver 1 detects the pointing manipulation of the audience , and displays a commercial image corresponding to the object existing in the pointed position. Other configurations and operations in the second embodiment are the same as those in the first embodiment. This being the case, the drawings in FIGS. 1 through 11 are referred to according to the necessity.

### <Principle of Point Detection>

FIG. 12 shows the principle of the point detecting function in the on-demand advertisement providing system in the second embodiment. This system, as in the case of the system according to the first embodiment, includes the broadcasting station for broadcasting the broadcast data, and the image receiver 1 for receiving and displaying the broadcast data.

The broadcast data distributed from the broadcasting station contain the program picture, the object characteristic information, the commercial images (displayed as a CM image 1, a CM image 2 etc. in FIG. 1) and unillustrated sound data.

The object characteristic information among these items of elements is information for specifying characteristics of the object and extracting the object from the program picture. Referring to FIG. 12, for example, characteristics of a T-shirt of an object 1 are specified such as being "red and large". Further, characteristics of a watch of an object 2 are specified such as being "blue and small". Moreover, pieces of program identifying information 33 and frame identifying information 34 are padded to the object characteristic information.

The image receiver 1, when receiving such pieces of object characteristic information, segments the program picture into a plurality of picture segments. Then, a picture segment matching with the obj ect characteristic information is extracted as an object.

The image receiver 1 generates the obj ect shape information 35 (see FIG. 6) given in the first embodiment from the extracted picture segment of the object. Then, the image receiver 1 creates the object distribution information 32 from the distributed program identifying information 33 and frame identifying information 34, and from the object shape information 35.

Further, the image receiver 1 generates the link information (FIG. 7) as in the first embodiment. The image receiver 1, after creating the information described above, detects the point manipulation of the audience as in the first embodiment.

### <Operation and Effect>

FIG. 13 shows an object generating process executed by the CPU 2 (see FIG. 4) of the image receiver 1. In this process, the CPU 2 generates the object distribution information 32 from the distributed program picture and object characteristic information.

To begin with, the CPU 2 segments the program picture into the picture segments in accordance with colors (S100). Next, the CPU 2 executes an outline extracting process of each picture segment (S101). The outline extracting process involves, for example, executing a differential process with respect to bitmap data of the picture segment and extracting an area exhibiting a high change rate of density.

Next, the CPU 2 reads one of the picture segments with their outlines extracted, and judges whether this picture segment is coincident with the object characteristic information received (S102). If the characteristics of this picture segment are coincident with any one of the object characteristic information suites (YES in s103) , the CPU 2 processes this picture segment as the object concerned. Namely, the CPU 2 creates the object shape information 35 from the outline of the picture segment 32 (S104).

Subsequently, the CPU 2 judges whether there is still left the extracted picture segment (S105). If there is left the picture segment, the CPU 2 loops the control back to S102. Whereas if there is not left the picture segment, the CPU2 finishes the process.

As discussed above, in the second embodiment, the image receiver 1 generates the object distribution information from the program picture and the object characteristic information. Therefore, the present system has no necessity of distributing the object distribution information 32. As a result, the present system is capable of reducing a quantity of the data distributed from the broadcasting station.

### <Modified Example>

The image receiver 1 in the second embodiment discussed above, when generating the object, segments the program picture into the picture segments in accordance with the colors. The embodiment of the present invention is not, however, limited to this process.

For instance, a change rate of color with respect to a distance is obtained, and a position where the change rate of color reaches its peak may be set as an outline. Further, information (representing an existence area) for specifying a rough position of the object may be distributed as the object characteristic information from the broadcasting station, and the picture segment may be extracted within such an object existence area.

Moreover, the shape information may be distributed as the object characteristic information from the broadcasting station, the image receiver 1 may perform shape-matching of the program picture with such shape information, and may recognize a position (where such a shape exists) of the object, thereby extracting the picture segment.

In the second embodiment, the image receiver 1 detects the pointing manipulation of the audience and displays the commercial image corresponding to the object existing in the pointed position. The embodiment of the present invention is not, however, confined to this mode. The advertisement may be offered in voice as a substitute for the commercial image. Further, the commercial image may be any one of the animated image and the still image.

### <<Third Embodiment>> Pointing Process Server (1)

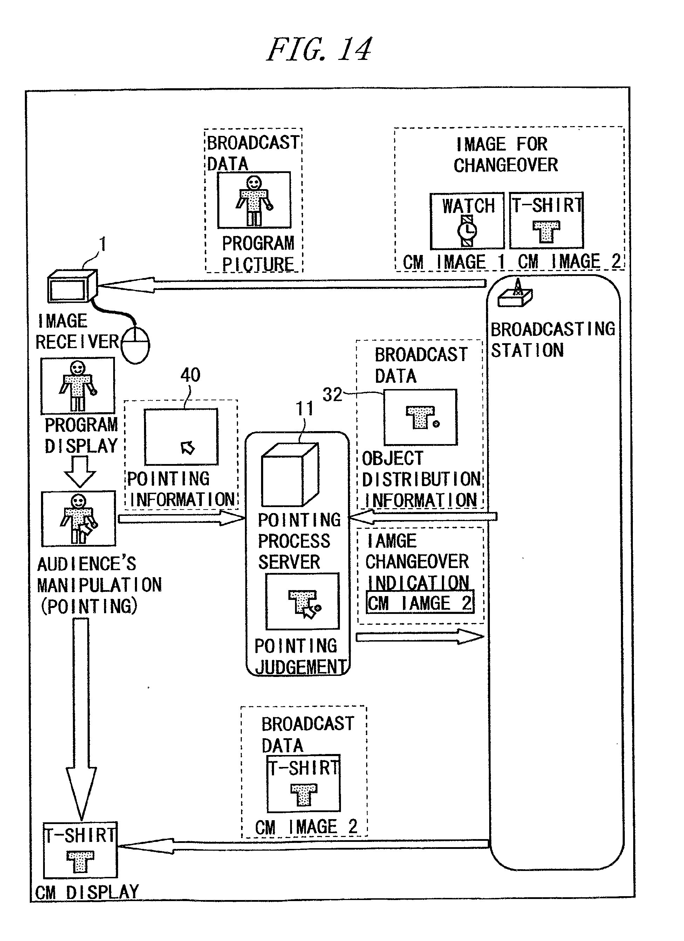

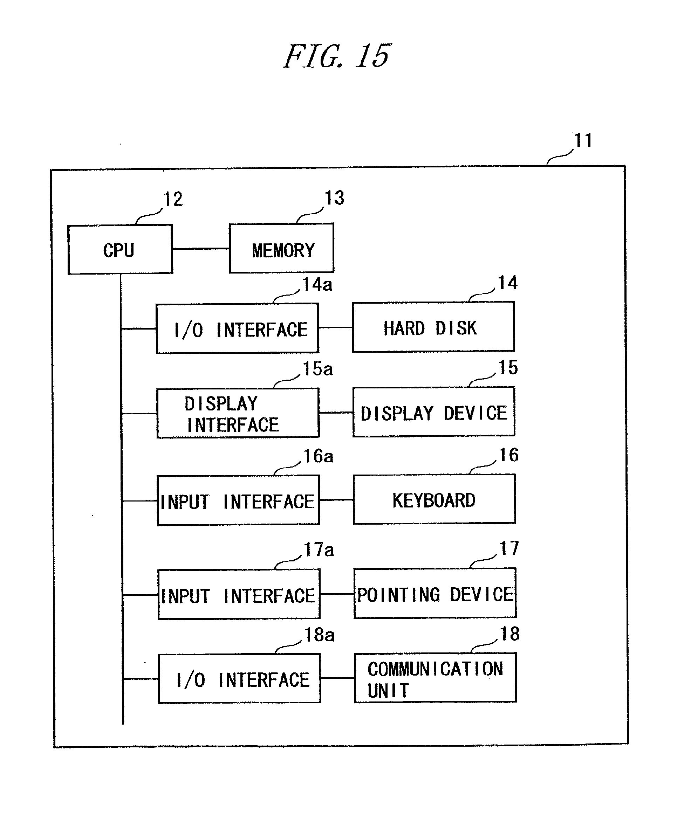

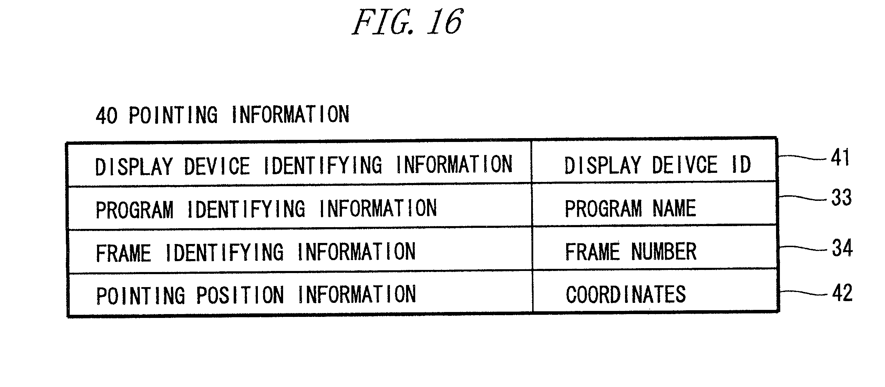

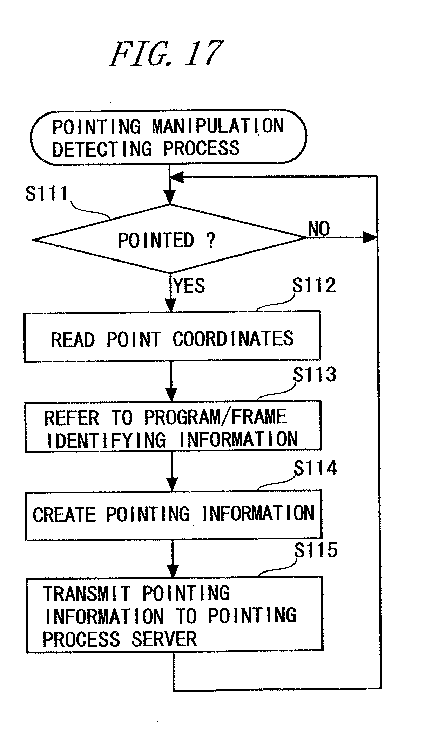

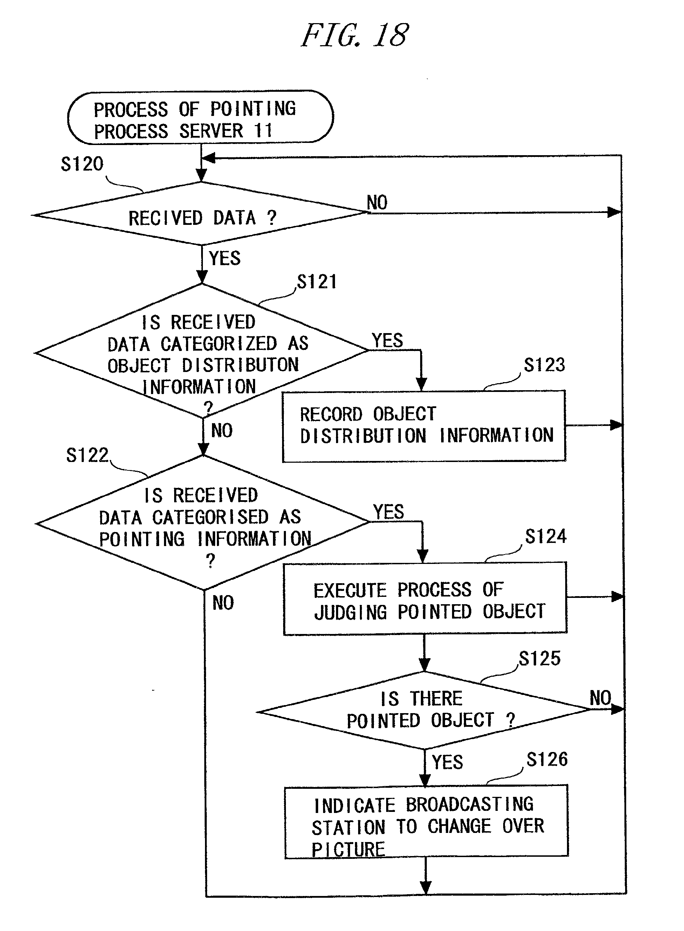

A third embodiment of the present invention will be described with reference to FIGS. 14 through 18. FIG. 14 is a diagram showing a system architecture of the on-demand advertisement providing system in the third embodiment. FIG. 15 is a diagram showing a hardware architecture of a pointing process server 11 shown in FIG. 14. FIG. 16 is a diagram showing a data structure of pointing information 40 shown in FIG. 14. FIG. 17 is a flowchart showing a pointing manipulation detecting process executed in the image receiver 1. FIG. 18 is a flowchart showing a process of the pointing process server 11.

In the first embodiment, the object distribution information 32 corresponding to each of the picture frames is distributed in parallel with the program picture from the broadcasting station, and stored in the memory 3 of the image receiver 1. Then, the image receiver 1 detects the pointing manipulation of the audience, and judges whether the object is pointed.

In the third embodiment, however, the pointing process server 11 for judging whether the object is pointed, is provided. The image receiver 1, instead of judging whether the object is pointed, transmits coordinates data indicating a pointing position on the picture to the pointing process server 11. The pointing process server 11, based on a result of this judgement, indicates the broadcasting station (corresponding to a data distribution system) to change over the picture for distribution to the commercial image from the program picture.

The commercial image is displayed corresponding to the pointing manipulation of the audience on the image receiver 1. Other configurations and operations are the same as those in the first embodiment. Then, the same components are marked with the same numerals, and the repetitive explanations are omitted. Further, the drawings in FIGS. 1 through 11 are referred to according to the necessity.

### <System Architecture>

FIG. 14 is a diagram showing a system architecture of the on-demand advertisement providing system in the third embodiment. This system includes the broadcasting station for broadcasting the broadcast data containing the pictures, the image receiver 1 for receiving and displaying the broadcast data, and the pointing process server 11 for receiving the pointing manipulation of the audience which was detected in the image receiver 1, and judging whether the object corresponding to the picture that has been broadcast is pointed.

The broadcasting station distributes, as in the first embodiment, the broadcast data via the satellite broadcasting waves, the ground waves, the cable TV network or the data communications network. The broadcast data normally contain the program picture. Further, the broadcasting station distributes the broadcast data containing the object distribution information 32 to the pointing process server 11.

The image receiver 1 receives the broadcast data containing the program picture from the broadcasting station. This program picture is, as in the first embodiment, displayed on the display unit 5 (FIG. 4). The audience points the program picture displayed by use of the pointing device 7. The image receiver 1 transmits, to the pointing process server 11 from the communication unit 8, information (that is hereinafter called pointing information 40) for specifying coordinates of the pointed position and the picture frame pointed.

The pointing process server 11 collates the object distribution information 32 distributed from the broadcasting station with the pointing information 40 transmitted from the image receiver 1. Then, the pointing process server 11, when judging that the object specified by the object distribution information 32 is pointed, indicates the broadcasting station to change over the picture to be broadcast.

An unillustrated host computer for administering the broadcasting in the broadcasting station gives an indication to broadcast the picture for changeover in accordance with an indication given from the pointing process server 11.

For example, when the audience points the T-shirt or the watch put on the figure appeared in the program picture, the pointing process server 11 recognizes that the object of the T-shirt or the watch which is provided corresponding to that program picture, is pointed.

A result of this recognition is transmitted to the broadcasting station, and the host computer in the broadcasting station changes over the broadcast data to the commercial image (displayed such as the CM image 1, the CM image 2 etc in FIG. 14) of the T-shirt or the watch from the program picture. The audience watches (or listens to) a commercial corresponding to where the program picture is pointed.

### <Hardware Architecture of Pointing Process Server 11>

FIG. 15 is a diagram showing a hardware architecture of the pointing process server 11. The pointing process server 11 has a CPU 12 and a memory 13. Further, peripheral devices such as a hard disk 14, a display device 15, a keyboard 16, a pointing device 17 and a communication unit 18, are connected via interfaces to the pointing process server 11.

The hard disk 14 is connected via an I/O interface 14a to the CPU 12. Further, the display device 15 is connected via a display interface 15a to the CPU 12.

Further, the keyboard 16 is connected via an input interface 16a to the CPU 12. Moreover, the pointing device 17 is connected via an input interface 17a to the CPU 12. Then, the communication unit 18 is connected via an I/O interface 18a to the CPU 12. This configuration is the same as that of the image receiver 1, and hence its repetitive explanation is omitted.

### <Data Structure>

FIG. 16 shows a data structure of the pointing information 40. The pointing information 40 contains display device identifying information 41, program identifying information 33, frame identifying information 34 and pointing position information 42. The image receiver 1 transmits the pointing information 40 to the pointing process server 11 to notify of a result of detection of the pointing manipulation.

Among these items of information, the display device identifying information 41 is defined as an ID unique to the display device for displaying the broadcast data, e.g., unique to the image receiver. This ID consists of a serial number of the audience entering into a contract for receiving the broadcasting program, and of a serial number of the display device such as the image receiver 1 possessed by this audience. Further, the pointing position information 42 shows coordinates indicating a position pointed by the audience on the screen.

The program identifying information 3 and the fame identifying information 34 shown in FIG. 16 are the same as those in the first embodiment (FIG. 6), and hence their repetitive explanations are omitted. Moreover, the object distribution information 32 shown in FIG. 14 is the same as that in the first embodiment, and therefore its repetitive description is omitted.

### <Operation and Effect>

FIG. 17 is a flowchart showing the pointing manipulation detecting process executed by the CPU 2 of the image receiver 1. As in the first embodiment, the CPU 2 normally monitors whether the pointing device 7 points somewhere on the screen of the display unit 5 (S111). When the position of the screen of the display unit 5 is pointed (YES in S111), the PU 2 reads the coordinates of the pointed position (S112).

Next, the CPU 2 refers to the program identifying information 33 and the frame identifying information 34 of the program picture that is being displayed on the display unit 5 at the present (S113). The program identifying information 33 is distributed as the broadcast data together with the program picture from the broadcasting station. Further, the frame identifying information 34 is generated in such a way that the image receiver 1 integrates a display frame count each time the frame is changed over since a start of the program.

Next, the CPU 2 generates the pointing information (FIG. 16) by use of the program identifying information 33, the frame identifying information 34 and the point coordinates (S114). Subsequently, the CPU 2 transmits the pointing information to the pointingprocess server 11 (S115). Thereafter, the CPU loops the control back to S111.

FIG. 18 shows the process by the pointing process server 11. The pointing process server 11 is normally in a standby state for the data to be received. Namely, the pointing process server 11 judges whether there is the data received (S120).

If there is the data received, next, the pointing process server 11 judges a category of the data received. The pointing process server 11 at first judges whether the data received is categorized as the object distribution information 32 (S121).

If judged to be the object distribution information 32, the pointing process server 11 records the object distribution information 32 on the hard disk 14 (s123). Thereafter, the pointing process server 11 returns the control to S120.

Whereas if judged not to be the object distribution information 32, the pointing process server 11 judges whether the data received is categorized as the pointing information (S122). If judged to be the pointing information, the pointing process server 11 executed a process of judging the pointed object (S124). This process is the same as the process shown in FIG. 9 in the first embodiment, so that its repetitive explanation is omitted.

Next, the pointing process server 11 judges, based on a result of the judging process (S124) of the pointed object, whether there exists the pointed object (S125).

If there is no pointed object, the pointing process server 11 sets the control back directly to S120. While on the other hand, if there is the pointed object, the pointing process server 11 indicates the broadcasting station to make a changeover to the commercial image corresponding to this pointed object (S126). Thereafter, the pointing process server 11 returns the control to S120.

As discussed above, according to the on-demand advertisement providing system in the third embodiment, the object distribution information 32 is distributed to the pointing process server, and the pointing process server 11 judges whether the object is pointed. It is therefore feasible to restrain the capacity of the broadcast data from increasing due to the object distribution information 32.

Further, the image receiver 1 has no necessity of implementing the pointed object judging process (function), thereby simplifying the functions of the image receiver 1 and reducing the load on this image receiver.

### <Modified Example>

According to the on-demand advertisement providing system in the third embodiment, the object distribution information 32 is transmitted to the pointing process server 11 from the broadcasting station, and the pointing process server 11 judges whether the object is pointed.

The embodiment of the present invention is not, however, restricted to such steps. For instance, the pointing process server 11 may execute the object generating process as by the image receiver 1 shown in the second embodiment. This makes it possible to decrease the quantity of the data distributed to the pointing process server 11 from the broadcasting station.

In the third embodiment discussed above, the pointing process server 11, based on the result of the judgement, indicates the broadcasting station (corresponding to the data distribution system) to change over the picture for distribution to the commercial image from the program picture. The embodiment of the present invention is not, however, limited to this mode. For example, the broadcasting station does not change over the image and may broadcast the advertisement in voice. Further, the commercial image may be any one of the animated image and the still image.

### <<Fourth Embodiment>> Pointing Process Server (2)

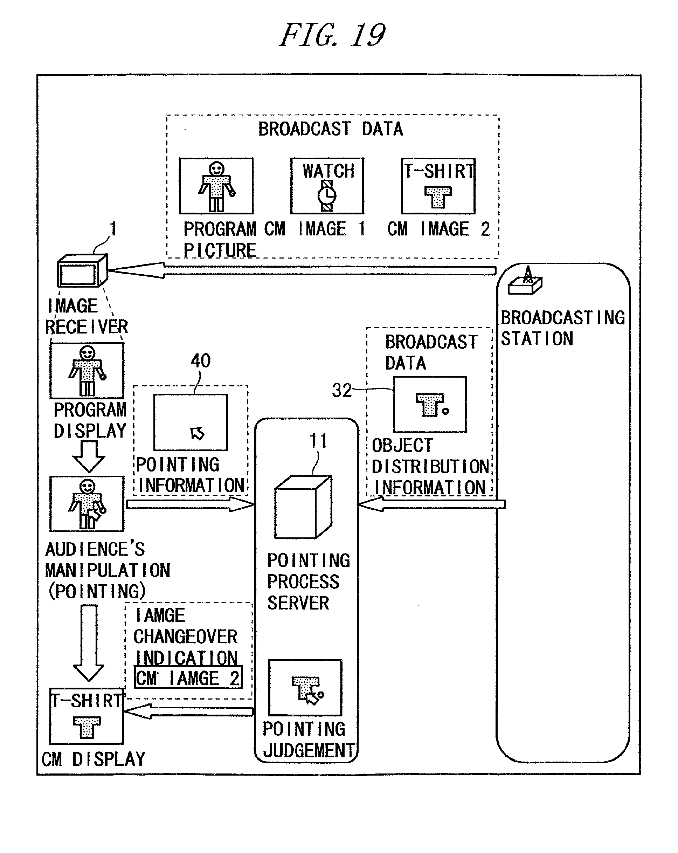

A fourth embodiment of the present invention will be explained referring to FIG. 19. FIG. 19 is a diagram showing a system architecture of the on-demand advertisement providing system in the fourth embodiment.

The discussion on the third embodiment has been focused on the on-demand advertisement providing system in which the pointing process server 11, based on the result of judging the pointed object, indicates the broadcasting station to change over the picture to be broadcast.

According to the fourth embodiment, the broadcasting station previously distributes the changeover commercial image to the image receiver 1, and the pointing process server 11 indicates the image receiver 1 to change over the picture. The image receiver 1, based on the indication given from the pointing process server 11, changes over the picture to be displayed on the display unit 5. Other configurations and operations are the same as those in the third embodiment. Then, the same components are marked with the same numerals, and their repetitive descriptions are omitted. Further, the drawings in FIGS. 1 through 18 are referred to according to the necessity.

FIG. 19 is a diagram showing a system architecture of the on-demand advertisement providing system in the fourth embodiment. This system includes, as in the third embodiment, the broadcasting station for broadcasting the broadcast data containing the pictures, the image receiver 1 for receiving and displaying the broadcast data, and the pointing process server 11 for receiving the pointing manipulation of the audience which was detected in the image receiver 1, and judging whether the object corresponding to the picture that has been broadcast is pointed.

The broadcasting station distributes, as in the third embodiment, the broadcast data via the satellite broadcasting waves, the ground waves, the cable TV network or the data communications network. The broadcast data, however, unlike the third embodiment, contain the commercial image in addition to the program picture. Further, the broadcasting station, as in the third embodiment, distributes the broadcast data containing the object distribution information 32 to the pointing process server 11.

The image receiver 1 receives the broadcast data containing the program picture and the commercial image (display such as the CM images 1, 2 and so on in FIG. 19) from the broadcasting station. This program picture is, as in the third embodiment, displayed on the display unit 5 (FIG. 4). The audience points the program picture displayed by use of the pointing device 7. The image receiver 1 transmits, to the pointing process server 11 from the communication unit 8, coordinates of the pointed position and the pointing information 40 for specifying a picture frame pointed.

The pointing process server 11 collates the object distribution information 32 distributed from the broadcasting station with the pointing information 40 transmitted from the image receiver 1. Then, the pointing process server 11, when judging that the object specified by the object distribution information 32 is pointed, indicates not the broadcasting station but the image receiver 1 to change over the picture to be displayed.

In accordance with this indication, the image receiver 1 changes over the picture to be displayed on the display unit 5 to the commercial image from the program picture. The audience watches (or listens to) a commercial corresponding to the pointed object in the program picture.

As discussed above, according to the on-demand advertisement providing system in the fourth embodiment, the pointing process server 11 judges whether the object is pointed. Then, the pointing process server 11, based on the result of the judgement, indicates the image receiver 1 to change over the picture.

As a consequence, according to the on-demand advertisement providing system in the fourth embodiment, no influence is exerted on the contents of the broadcast from the broadcasting station in the picture changeover process executed by the image receiver 1.

### <Modified Example>

In the fourth embodiment, the commercial image is displayed by the audience's pointing manipulation. The embodiment of the present invention is not, however, confined to this mode. For example, the image receiver 1 may output the advertisement in voice without changing over the image . Further, the commercial image may be any one of the animated image and the still image.

### <<Fifth Embodiment>> Pointing Process and Picture Providing Process by Recording Device

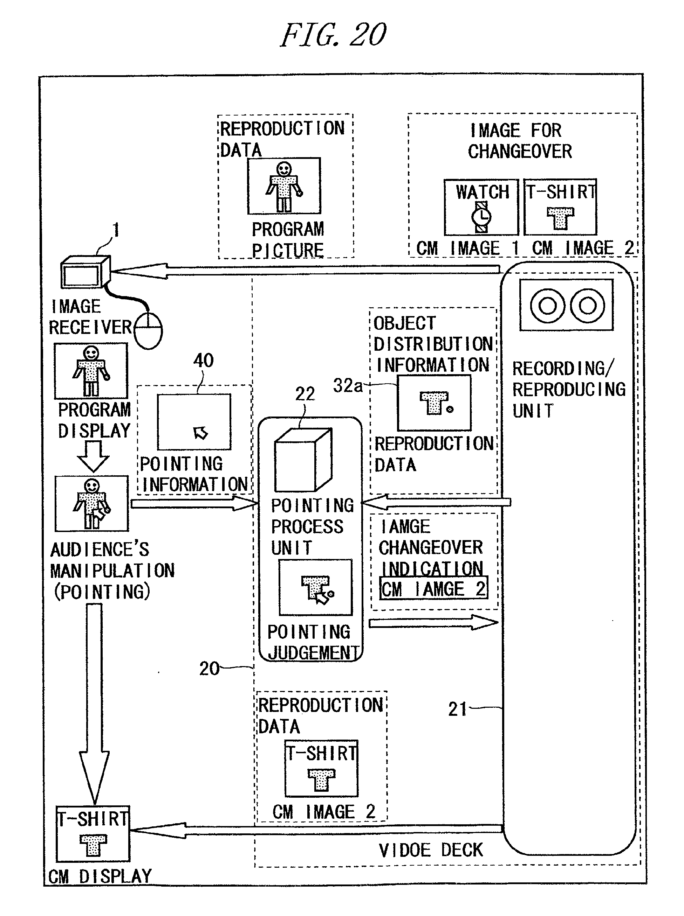

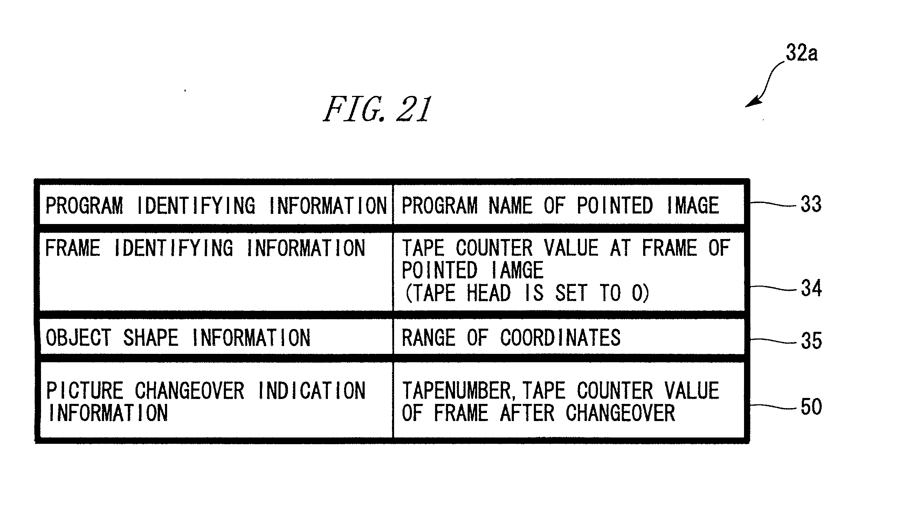

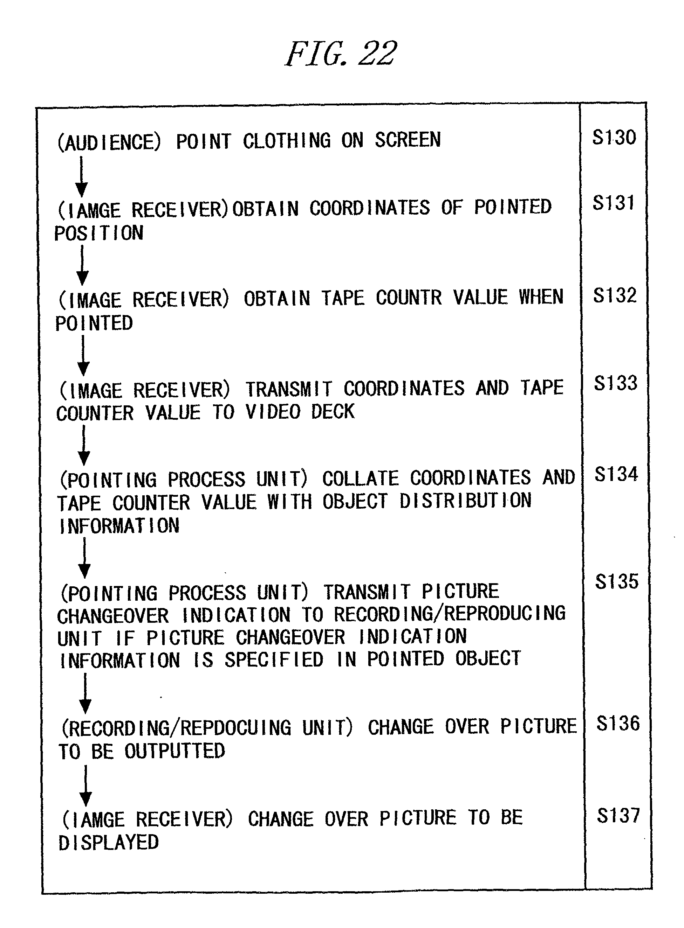

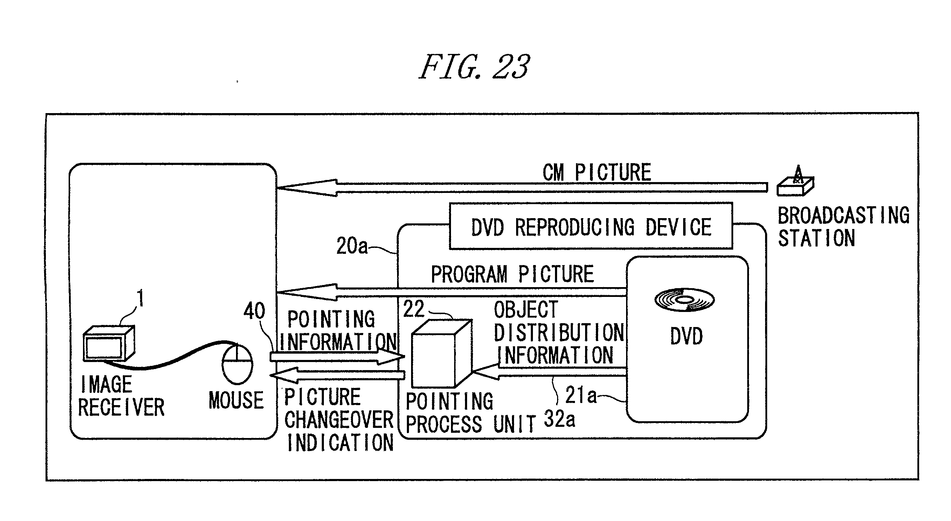

A fifth embodiment of the present invention will be described referring to FIGS . 20 through 25. FIG. 20 is a diagram showing an architecture of the on-demand advertisement providing system in the fifth embodiment. FIG. 21 is a diagram showing a data structure of object distribution information 32a shown in FIG. 20. FIG. 22 is a flowchart showing a pointing judgement/advertisement providing process in the fifth embodiment. FIGS. 23 to 25 are diagrams each showing an architecture of the on-demand advertisement providing system by way of a modified example of the fifth embodiment.

According to the system illustrated in each of the first through fourth embodiments, the manipulation of pointing the object contained in the program picture distributed from the broadcasting station, is detected, and the commercial image corresponding to this pointed object is displayed.

The discussion on the fifth embodiment will be focused on the system in which the manipulation of pointing the object contained in a picture reproduced from a vide deck is detected, and the commercial image corresponding to this object is displayed. Other configurations and operations are the same as those in the first through fourth embodiments. Then, the same components are marked with the same numerals, and their repetitive descriptions are omitted. Further, the drawings in FIGS. 1 through 19 are referred to according to the necessity.

### <System Architecture>

FIG. 20 is the diagram showing the architecture of the on-demand advertisement providing system in the fifth embodiment. This on-demand advertisement providing system includes the image receiver 1 and a video deck 20 connected to the image receiver 1.

The video deck 20 has a recording/reproducing unit 21 and a pointing process unit 22. The recording/reproducing unit 21 records the broadcast data containing the program picture on a medium (e.g., a video tape) , or reproduces a content recorded on the medium. The broadcast data normally contain the program picture. Further, the recording/reproducing unit 21 transfers the broadcast data containing the object distribution information 32a to the pointing process unit 22.

The image receiver 1 receives the reproduced data containing the program picture from the recording/reproducing unit 21 of the video deck 20. This program picture is, as in the first embodiment, displayed on the display unit 5 (FIG. 4). The audience points somewhere on the program picture displayed by using the pointing device 7. The image receiver 1 transmits the pointing information 40 for specifying coordinates of the pointed position and a picture frame thereof to the pointing process unit 22 of the video deck 20.

The pointing process unit 22 is constructed of a CPU. This pointing process unit 22 collates the object distribution information 32a reproduced by the video deck 20 with the pointing information 40 transmitted from the image receiver 1. Then, the pointing process unit 22, when judging that the object specified by the object distribution information 32a is pointed, indicates the recording/reproducing unit 21 to change over the picture to be reproduced.

The recording/reproducing unit 21, based on the indication given from the pointing process unit 22, reproduces the commercial image (displayed such as the CM image 1, the CM image 2 and so on) . The audience watches (or listens to) a commercial corresponding to the pointed object in the program picture.

### <Data Structure>

FIG. 21 shows a data structure of the object distribution information 32a in the fifth embodiment. As shown in FIG. 21, the object distribution information 32a contains the program identifying information 33, the frame identifying information 34, the object shape information 35 and picture changeover indication information 50.

Among these items of information, the frame identifying information 34 has a field in which a before-changeover frame number is recorded. The before-changeover frame number is a piece of information, displayed on the image receiver 1, for identifying an audience' s pointing target program picture frame. In the fifth embodiment, a tape counter value with its tape head being set as 0 is used as this item of frame identifying information 34.

Further, the picture changeover indication information 50 is a piece of information for specifying the commercial image displayed as the audience performs the pointing manipulation. The picture changeover indication information 50 contains a tape number of the video tape and a tape counter value after the changeover.

The tape number is a unique number for identifying the video tape. The tape counter value is an after-changeover tape counter value of the video tape given that tape number. Note that the program identifying information 33 and the object shape information 35 are the same as those in the first embodiment.

### <Operation and Effect>

FIG. 22 shows the pointing judgement/advertisement providing process in the fifth embodiment. To start with, the audience points a picture, e.g., clothing put on the figure displayed on the display unit 5 of the image receiver 1. (S130). The image receiver 1 obtains a pointed position on the picture (S131).

Next, the image receiver 1 obtains a count value of the tape counter when pointed (S132). Subsequently, the image receiver 1 transmits coordinates of the pointed position and the tale counter value at that time to the video deck 20 (S133).

Next, the pointing process unit 22 of the video deck 20 collates the coordinates of the pointed position and the tape counter value with the frame identifying information 33 and the object shape information 35 of the object distribution information 32a (S134).

Subsequently, the pointing process unit 22 judges whether the object is pointed. Then, if picture changeover indication information 50 is specified in the pointed object, the picture changeover indication is transmitted to the recording/reproducing unit 21 (S135).

The recording/reproducing unit 21 of the video deck 20 changes over the picture to be outputted (S136). Thereupon, the picture displayed on the image receiver 1 is changed over (S137).

As discussed above, according to the on-demand advertisement providing system in the fifth embodiment, the on-demand advertisement can be actualized by the local picture supplying device, e.g., by the video deck 20 without involving the use of the large-scale broadcasting equipment.

### <Modified Example>

In the fifth embodiment described above, the on-demand advertisement is locally actualized by the image receiver 1 and the video deck 20. The embodiment of the present invention is not, however, restricted to the architecture and steps described above.

FIG. 23 shows an example of the on-demand advertisement providing system for providing the one-demand advertisement by utilizing the video picture and broadcasting in combination by way of a modified example of the fifth embodiment. This system is configured by the broadcasting station for distributing the commercial image, a DVD reproducing device 20a for reproducing a program picture from a DVD (Digital Versatile Disk) , and the image receiver 1 for displaying the picture reproduced by the DVD reproducing device 20a and the commercial image (displayed in the form of the CM image in FIG. 23) transmitted from the broadcasting station.

The broadcasting station distributes the commercial image (displayed as the CM image in FIG. 23) at a dedicated channel for every sponsor.

The DVD is stored with the program picture. Further, a free area on the DVD is stored with the object distribution information 32a of each frame of the program picture . The object distribution information 32a contains, as the object distribution information shown in FIG. 21 has, the program identifying information 33, the frame identifying information 34, the object shape information 35 and the picture changeover indication information 50. Among these items of information, the picture changeover indication information 50 retains a channel number at which the commercial image corresponding to the object is broadcast.

The image receiver 1, when detecting the audience's pointing manipulation on the displayed program picture of the DVD, as in the embodiments discussed above, creates and transmits the pointing information 40 to the DVD reproducing device 20a.

The pointing process unit 22 of the DVD reproducing device 20a collates the pointing information 40 transmitted from the image receiver 1 with the object distribution information 32a. then, the pointing process unit 22 searches for a channel number at which the commercial image related to the pointed object is being broadcast. Then, the pointing process unit 22 indicates the image receiver 1 to change over the picture to that channel.

The image receiver 1 receives the channel indicated and displays a picture received. The audience watches a commercial image (or listens to a voice) related to the pointed picture.

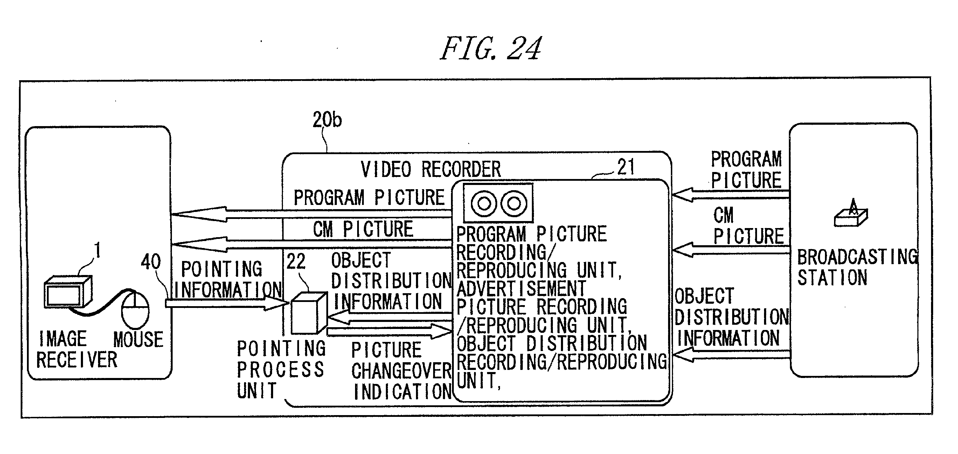

FIG. 24 is a diagram showing an architecture of the on-demand advertisement providing system including a video recorder 20b for recording the program picture, the commercial image and the object distribution information together, and recording/reproducing a program attached with an on-demand advertisement.

This system is configured by the video recorder 20b for receiving the program picture and the commercial picture from the broadcasting station and recording these pictures, and the image receiver 1 for displaying the reproduced picture. This video recorder 20b also has the recording/reproducing unit 21 and the pointing process unit 22 as in the third embodiment.

The recording/reproducing unit 21 records the program picture and the commercial image on the DVD. Further, the recording/reproducing unit 21 stores a free area on the DVD with the object distribution information 32a corresponding to each frame of the program picture.

The image receiver 1 normally receives and displays the program picture reproduced by the video recorder 20b. Then, the image receiver 1, as in the fifth embodiment, detects such an event that the audience points the program picture, and generates and transmits the pointing information 40 to the video recorder 20b.

The pointing process unit 22 of the video recorder 20b, as in the fifth embodiment, collates the pointing information transmitted from the image receiver 1 with the object distribution information 32a stored in the free area on the DVD, and judges whether the object is pointed. Then, the pointing process unit 22 indicates the recording/reproducing unit 21 to reproduce the picture related to the pointed objected.

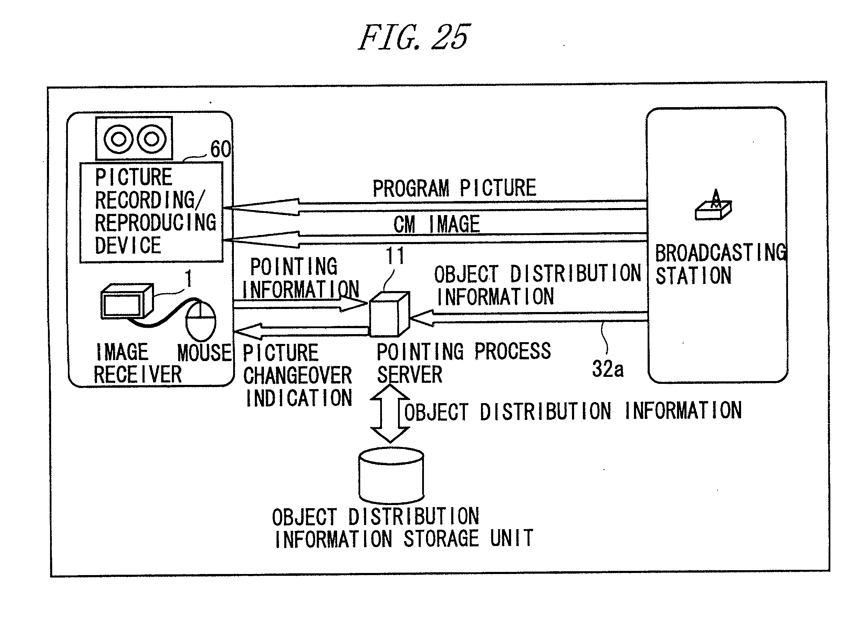

FIG. 25 shows an example of configuring the on-demand advertisement providing system by connecting a recording/reproducing device 60 to the image receiver 1. In this system, the program picture and the commercial image are broadcast from the broadcasting station. At this time, the commercial image is broadcast at a channel for an exclusive use of the commercial image . The program picture and the commercial image that have been broadcast are recorded on the recording/reproducing device 60.

Further, the broadcasting station distributes, to the pointing process server 11, the object distribution information 32a for judging the object included in the program picture of each program. The pointing process server 11 stores the distributed object distribution information 32a in an object distribution information storage unit. This object distribution information storage unit retains a frame number of each of frames of the commercial image related to each object.

The image receiver 1 normally displays the program picture reproduced by the recording/reproducing device 60. When the audience points the program picture displayed on the image receiver 1, the image receiver 1 detects the audience's pointing manipulation and generates the pointing information 40. The image receiver 1 transmits the pointing information 40 to the pointing process server 11.

The pointing process server 11 collates the pointing information 40 transmitted from the image receiver 1 with the object distribution information 32a stored in the object distribution information storage unit. Then, the pointing process server 11, when judging that the object is pointed, searches for a frame number of the commercial image relative to the pointed object from within the object distribution information storage unit.

Then, the pointing process server 11 indicates the image receiver 1 to display an advertisement with that frame number. The image receiver 1 indicates the recording/reproducing device 60 to reproduce the commercial image with the specified frame number.

In the fifth embodiment, when the object is pointed, the commercial image is displayed. The embodiment of the present invention is not, however, restricted to this mode. The advertisement in voice may be outputted as a substitute for the commercial image. Further, the commercial image may be any one of the animated image and the still image.

### <<Sixth Embodiment>> Pointing Judgement in Time-Shift Function

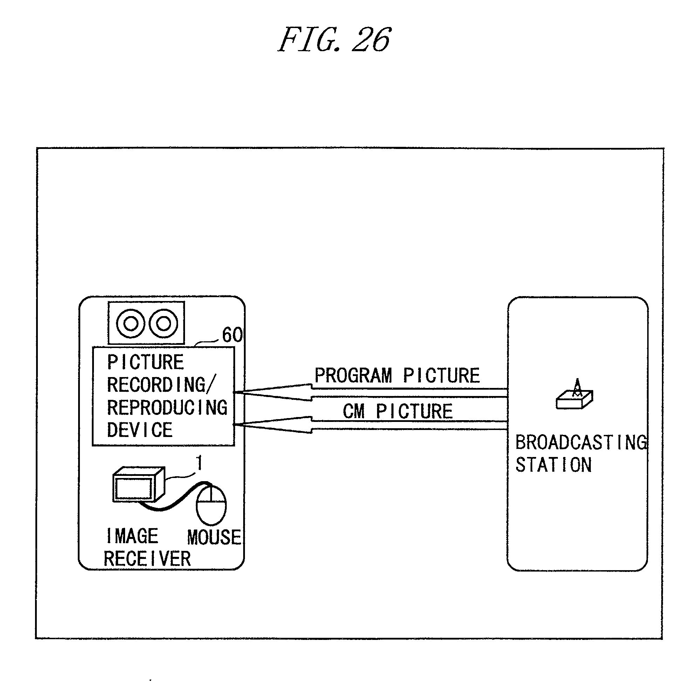

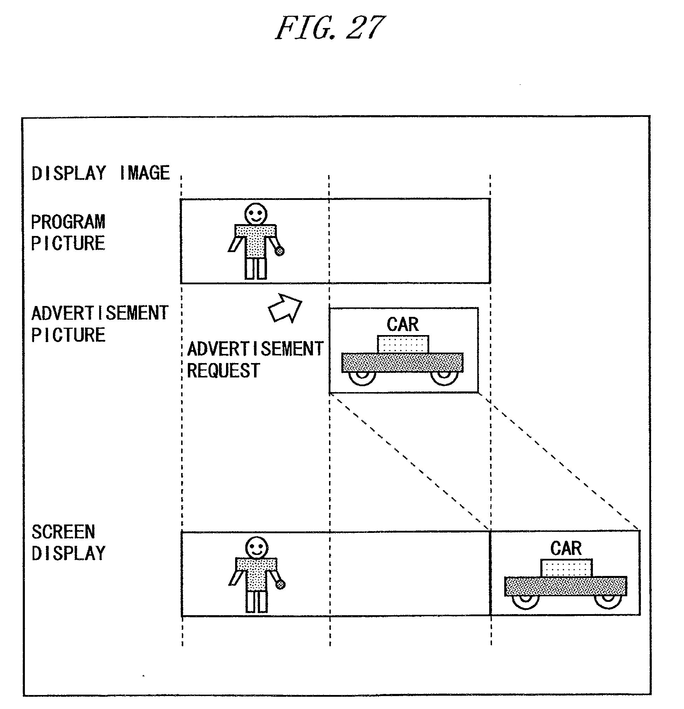

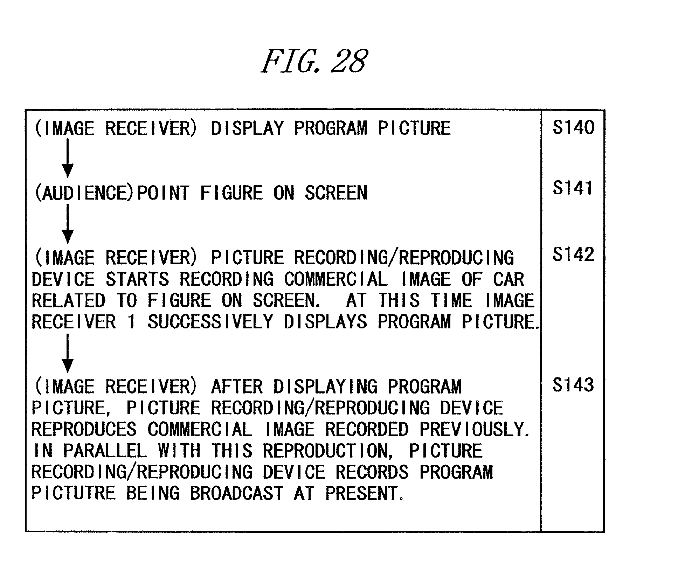

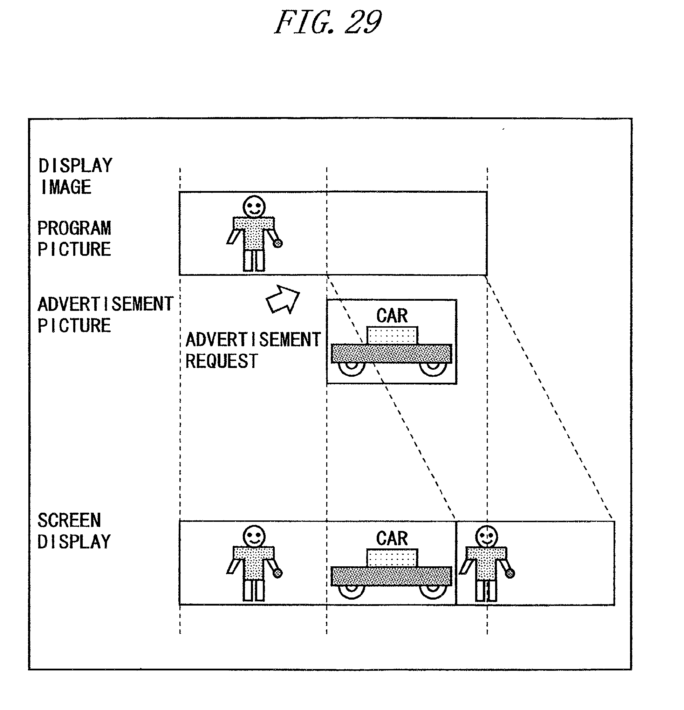

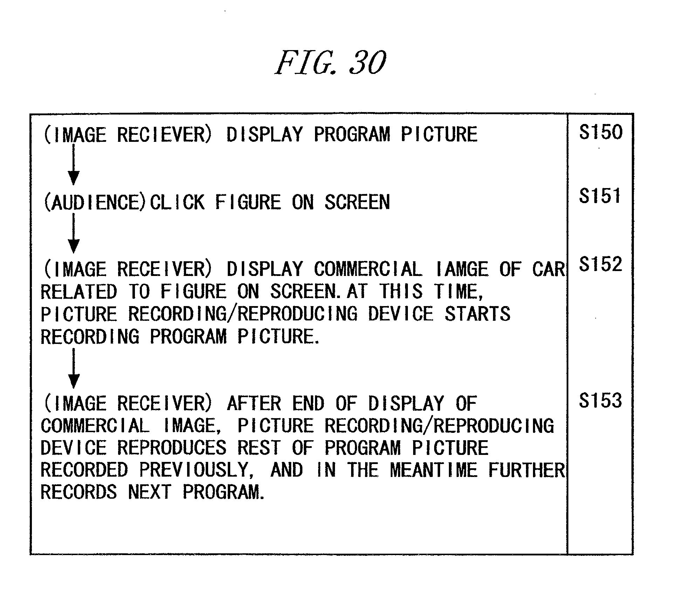

A sixth embodiment of the present invention will be explained with reference to FIGS. 26 through 30. FIG. 26 is a diagram showing an architecture of a time-shift based on-demand advertisement providing system in the sixth embodiment. FIG. 27 is a conceptual diagram showing a pointing judgement/advertisement providing process based on the time-shift. FIG. 28 is a flowchart showing the pointing judgement/advertisement providing process based on the time-shift. FIG. 29 is a conceptual diagram showing the pointing judgement/advertisement providing process in a modified example of the sixth embodiment. FIG. 30 is a flowchart showing the pointing judgement/advertisement providing process in the modified example of the sixth embodiment.

According to the systems in the first through fourth embodiments, the manipulation of pointing the object contained in the program picture distributed from the broadcasting station is detected, and the commercial image corresponding to this object is displayed, or the advertisement in voice is outputted.

Further, according to the system in the fifth embodiment, the manipulation of pointing the object contained in the picture reproduced by the video deck 20 is detected, and the commercial image corresponding to this object is displayed.

The discussion on the sixth embodiment will be focused on the on-demand advertisement providing system implementing a time-shift function of shifting a timing of displaying the picture from a broadcast timing of the picture by use of a picture recording/reproducing device with the aid of the image receiver 1.

Other configurations and operations are the same as those in the first to fifth embodiments. Thus, the same components are marked with the same numerals, and the repetitive explanations are omitted. Further, the drawings in FIGS. 1 through 25 are referred to according to the necessity.

### <System Architecture>

FIG. 26 is the diagram showing the architecture of the time-shift based on-demand advertisement providing system. This time-shift based on-demand advertisement providing system includes the image receiver 1 and the picture recording/reproducing device 60 connected to the image receiver 1.

The picture recording/reproducing device 60 temporarily records the program picture and the commercial image distributed from the broadcasting station. This picture recording/reproducing device 60 is constructed of, e.g., a TV tuner and a hard disk.

The image receiver 1 displays the program picture that is on broadcast, the commercial image, the program picture recorded on the picture recording/reproducing device 60, or the commercial image recorded on the picture recording/reproducing device 60.

When the image receiver 1 displays the program picture recorded on the picture recording/reproducing device 60 or displays the commercial image, the picture that is being broadcast is recorded on the picture recording/reproducing device 60. The time-shift function is thereby attained.

### <Outline of Time-Shift Based Pointing Judgement/Advertisement Providing Process

FIG. 27 shows a concept of the time-shift based pointing judgement/advertisement providing process. FIG. 27 shows an example where a commercial image of an automobile is distributed corresponding to the program picture.

In the sixth embodiment, however, the image receiver 1, even when detecting the object pointed by the audience, does not immediately display the commercial image. In this case, the image receiver 1 indicates the picture recording/reproducing device 60 to record the commercial image. The commercial image related to the audience's pointing manipulation is thereby recorded. The image receiver 1 displays the recorded commercial image upon finishing the display of the program.

### <Operation and Effect>

FIG. 28 shows the time-shift based pointing judgement/advertisement providing process executed by the time-shift based on-demand advertisement providing system.

Normally, the image receiver 1 displays the program picture (S140). When the audience points, e.g., a figure appeared on the screen for the duration of displaying the program picture (S141), the image receiver 1 detects this pointing manipulation.

Then, the image receiver 1 judges the object corresponding to this pointed position, and seeks a broadcast channel of the commercial image corresponding to this object. Then, the image receiver 1 indicates the picture recording/reproducing device 60 to record the commercial image.

This triggers the record of the commercial image on the picture recording/reproducing device 60. At this time, the image receiver 1 successively displays the program picture (S142).

Then, the image receiver 1, upon an end of displaying the program picture, indicates the picture recording/reproducing device 60 to reproduce the commercial image recorded. At this time, the picture recording/reproducing device 60 further records a next program picture (S143). The time-shift function is thereby actualized.

### <Detection Steps of Ending Program>

In the sixth embodiment, an end of the program is detected by the following steps. For instance, electronic program table data provided by the broadcasting station simultaneously when broadcasting the program in the BS digital broadcasting, can be utilized. An end/continuation of the program may be judged by monitoring a timing of rewriting an [on-broadcast program] in a program information table (EIT[p/f]) in the electronic program table data. Alternatively, the operations with respect to the broadcasting station are standardized so that special pieces of data are provided when starting and ending the program, and the end of the program may be detected by monitoring this piece of data.

For example, according to the Specifications by the Radio Wave Industry Association Foundation in Japan, the following rules are given.

Basic Rules on State of Event Progress in ARIB TR-B15

Vol.4 BS Digital Broadcasting PSI/SI Operation Protocol 19.3.
○ Judgement about On-Continuation/End
   A judgement about an on-continuation of event (judgement just when the event is ended) is made based on whether an event is placed at **present** of **EIT[p/f]**. To be specific, an event placed at **present** is an on-broadcast event, and the event is assumed to be ended at a stage that the event placed at **present** disappears from **EIT[p/f].**
○ Judgement about Start
   An event start is judged based on **start#time** of **following** of **EIT[p/f].** Namely, the assumption is that the event is to start at a stage that it becomes a time indicated by **start#time** of **following.** Note that **EIT** is not necessarily updated simultaneously with **start#time** in terms of an **EIT** cycle. In the case of **EIT[p/f actual]**, updating is invariably done during three cycles since **start#time** of **following.** If not updated even after the three cycles, this indicates a trouble. There is established a state where a start of a program is judged by **following** in a way that judges the program to be continuous with **present** only within this 3-cycle period.

Herein, the respective parametric terms have the following meanings:
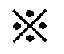 **present** = program that is being broadcast at present;
**following** = next program;
**p/f** = present/following;
**schedule** = programs at all hours
**actual** = on-tuning channel;
**other** = not on-tuning channel; and
**EIT** = event information table = program information table.

As described above, according to the on-demand advertisement providing system in the sixth embodiment, even when the on-demand advertisement is displayed, the program picture can be watched without any interruption.

### <Modified Example>

The discussion on the sixth embodiment discussed above has been focused on the on-demand advertisement providing system for recording the commercial image corresponding to the pointed object and displaying the commercial image after the end of the program. The embodiment of the present invention is not, however, limited to such steps. For example, when the object is pointed, the commercial image related to this object may be displayed, and mean while the programpicture to be broadcast may be recorded.

FIG. 29 shows an outline of the time-shift based pointing judgement/advertisement providing process. In an example also in FIG. 29, as in the sixth embodiment, the commercial image of a car is distributed corresponding to the program picture.

In FIG. 29, however, the image receiver 1, when detecting the object pointed by the audience, interrupts the display of the program picture and promptly displays the commercial image . In this case, the image receiver 1 indicates the picture recording/reproducing device 60 to record the interrupted program picture.

The program picture to be broadcast during the display of the commercial image is thereby recorded. The image receiver 1, when finishing the display of the commercial image, displays the program picture from the interrupted picture frame onwards .

FIG. 30 shows the time-shift based pointing judgement/advertisement providing process executed by this time-shift based pointing judgement/advertisement providing system.

The image receiver 1 normally display the program picture (S150). When the audience points, e.g., a figure appeared on the screen during the display of the program picture (S151), the image receiver 1 detects this pointing manipulation.

Then, the image receiver 1 judges the object corresponding to the pointed position, and seeks a broadcasting channel of the commercial image corresponding to this object, Then, the image receiver 1 changes over the receiving channel by interrupting receiving the program picture, and displays the commercial image. At this time, the image receiver 1 indicates the picture recording/reproducing device 60 to record the interrupted program picture. Upon this indication, the picture recording/reproducing device 60 starts recording the interrupted program picture (S152).

Then, the image receiver 1, when the display of the commercial image is ended, indicates the picture recording/reproducing device 60 to reproduce the recorded program picture (S153). At this time, the picture recording/reproducing device 60 further records a next program picture. The time-shift function is thereby attained.

As discussed above, according to the on-demand advertisement providing system in the sixth embodiment, even when the on-demand advertisement is displayed, in the meantime the interrupted program picture can be watched.

In the sixth embodiment, the image receiver 1 displays the commercial image corresponding to the object existing in the pointed position. The embodiment of the present invention is not, however, confined to this mode. The image receiver 1 may reproduce the voice as the on-demand advertisement when detecting the manipulation of pointing the object. Further, the commercial image may be any one of the animated image and the still image.

### <<Seventh Embodiment>> E-mail Linkage

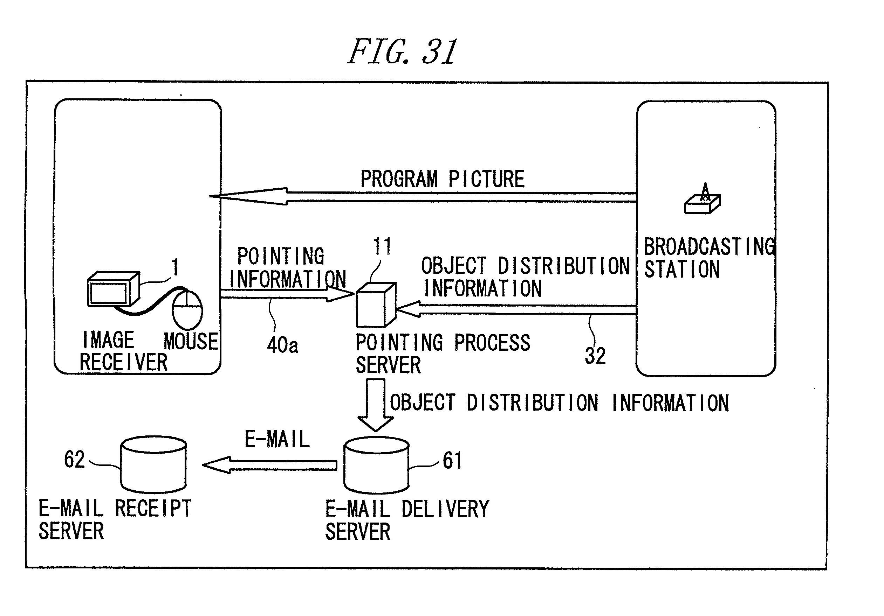

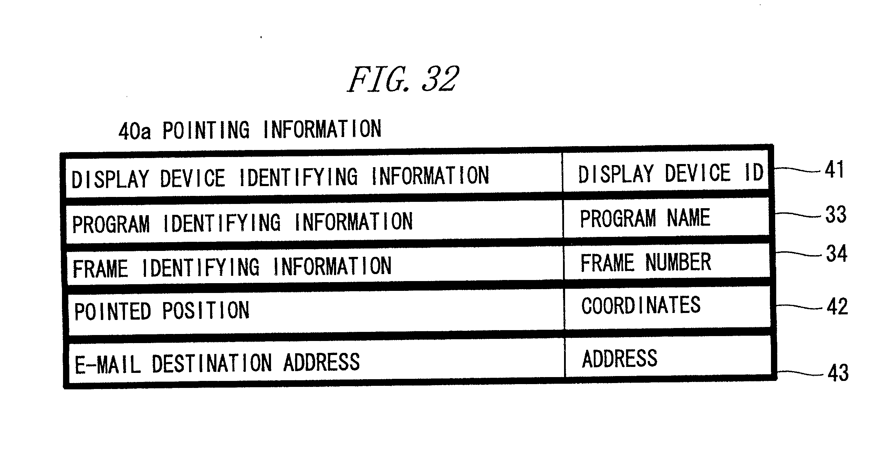

A seventh embodiment of the present invention will be discussed referring to FIGS. 31 and 32. FIG. 31 is a diagram showing a system architecture of the on-demand advertisement providing system in the seventh embodiment. FIG. 32 is a diagram showing a data structure of pointing information 40a in the seventh embodiment. In the first to sixth embodiments, when detecting the manipulation of pointing the object, the commercial image distributed from the broadcasting station or reproduced by the picture recording/reproducing device 60 is displayed on the image receiver 1, or the advertisement in voice is outputted.

The discussion on the seventh embodiment will be focused on a system in which an E-mail delivery server is indicated to deliver an E-mail containing detail information on a commercial etc when detecting the manipulation of pointing the object, and the commercial is transmitted to the image receiver 1. Other configurations and operations are the same as those in the first to sixth embodiments . Thus , the same components are marked with the same numerals, and the repetitive explanations are omitted. Further, the drawings in FIGS. 1 through 30 are referred to according to the necessity.

FIG. 31 shows a system architecture of the on-demand advertisement providing system in the seventh embodiment. This on-demand advertisement providing system is configured by the broadcasting station for broadcasting the broadcast data containing the pictures, the image receiver 1 for receiving and displaying the broadcast data, the pointing process server 11 for judging whether the object corresponding to the picture that has been broadcast is pointed, an E-mail delivery server 61 for delivering the E-mail containing the commercial in response to an indication given from the pointing process server 11, and an E-mail receipt server 62 for receiving the E-mail delivered. This system has substantially the same architecture as that of the system in the third embodiment except for adding the E-mail delivery servers 61 and the E-mail receipt servers 62.

The image receiver 1, as in the case of the image receiver 1 in the third embodiment, receives the program picture from the broadcasting station and displays the picture on the display unit 5 (FIG. 4). The image receiver 1, when detecting the audience's pointing manipulation, generates and transmits the pointing information 40a to the pointing process server 11.

FIG. 32 shows a data structure of the pointing information 40a. The pointing information 40a has substantially the same data structure as in the third embodiment (FIG. 16) except that an E-mail destination address (field) 43 is added. An address with which the image receiver 1 receives an E-mail is entered in this E-mail destination address field 43.

The pointing process server 11, as in the third embodiment, receives the object distribution information 32 from the broadcasting station. The pointing process server 11, upon receiving the pointing information 40a from the image receiver 1, collates the pointing information 40a with the object distribution information 32.

Then, the pointing process server 11, when judging that the object is pointed, indicates the E-mail delivery server 61 to deliver the E-mail containing the detail information related to this pointed object.

The E-mail deliver server 61 delivers the E-mail containing the detail information on the commercial and so on to an E-mail address of the image receiver 1. The image receiver 1 receives this E-mail via the E-mail receipt server 62 (e.g., an E-mail server of an Internet service provider) of the image receiver 1.

As discussed above, according to the seventh embodiment, the E-mail is delivered to the image receiver 1, corresponding to the event that the audience points the program picture displayed on the image receiver 1. The audience is able to receive the detail information on the watched program picture as the E-mail.

### <Modified Example>

In the seventh embodiment, the E-mail is delivered to the image receiver 1. The embodiment of the present invention is not, however, limited to the above configuration and steps. For instance, a device other than the image receiver 1, e.g., an E-mail terminal and so on used by the audience may be specified as an E-mail destination address. The audience is thereby able to receive the detail information on the program picture watched by the image receiver 1 by the device other than the image receiver 1 and to display the picture.

### <<Eighth Embodiment>> Application Linkage

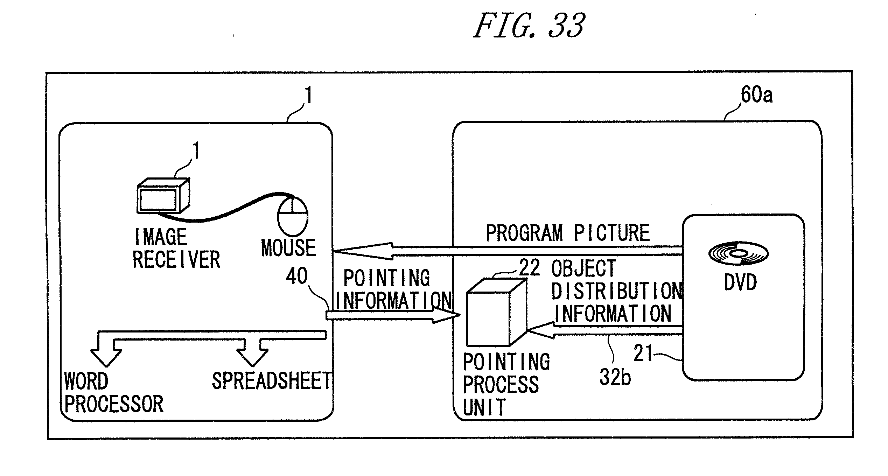

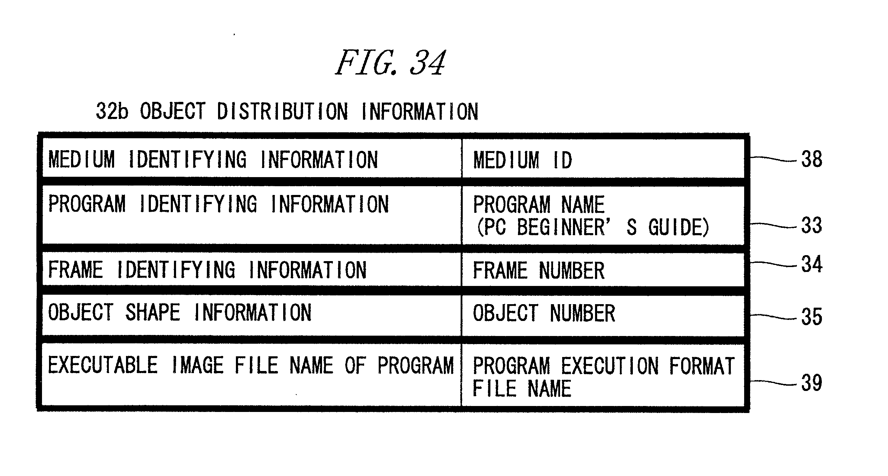

An eighth embodiment of the present will be described referring to FIGS. 33 and 34. FIG. 33 is a diagram showing an architecture of a PC (personal computer) beginner's guide video display system in the eighth embodiment. FIG. 34 is a diagram showing a data structure of the object distribution information 32b in the eighth embodiment. The fifth embodiment has exemplified the on-demand advertisement providing system in which the manipulation of pointing the object contained in the picture reproduced by the video deck 20 etc is detected, and the commercial image corresponding to the object is displayed, or the advertisement in voice is outputted.

The discussion on the eighth embodiment will be focused on the PC beginner's guide video display system for executing an application program related to a pointed obj ect when detecting the manipulation of pointing this object. The architecture of the PC beginner's guide video display system is the same as that of the on-demand advertisement providing system in the fifth embodiment. Thus, the same components are marked with the same numerals, and the repetitive explanations are omitted. Further, the drawings in FIGS. 1 through 32 are referred to according to the necessity.

FIG. 33 shows the architecture of the PC beginner's guide video display system. This system includes the image receiver 1 and a video reproducing device 60a connected to the image receiver 1. The video reproducing device 60a has, as on the case of the video deck 20 in the fifth embodiment, the picture recording/reproducing unit 21 and the pointing process unit 22. These functions are the same as those in the fifth embodiment.

The picture recording/reproducing unit 21 of the video reproducing device 60a accesses a medium and reproduces, e.g., a program picture of a PC beginner' s guide. Herein, the mediums are, for example, a DVD, a CD-ROM and so forth.

The image receiver 1 displays the reproduced picture. When the audience points a specified picture segment of the on-display picture, the pointing information 40 thereof is transmitted to the pointing process unit 22. The pointing information 40 contains the program identifying information, the frame identifying information and the pointed position information. These items of information are the same as those explained in the third embodiment (FIG. 16).

The pointing process unit 22 is constructed of a CPU. This pointing process unit 22, when receiving the pointing information 40, accesses the medium via the picture recording/reproducing unit 21, thus reading the object distribution information 32b.

FIG. 34 shows the data structure of the object distribution information 32b in the eighth embodiment. In the eighth embodiment, the object distribution information 32b contains respective items of medium identifying information 38, program identifying information 33, frame identifying information 34, object shape information 35, and a executable image file name 39 of program to be executed.

Among these items of information, the medium identifying information 38 is a medium ID for identifying the medium. Further, the program identifying information 33 is a video program name, e.g., "PC Beginner's Guide". Moreover, the executable image file name 39 is a name of a application program executed when the object is pointed. Note that the frame identifying information 34 and the object shape information 35 are the same as those in the first embodiment (FIG. 6), and their repetitive explanations are omitted.

The pointing process unit 22 collates the object distribution information 32b with the pointing information 40 transmitted from the image receiver 1. Then, the pointing process unit 22, when judging that the object specified by the object distribution information 32a is pointed, indicates the image receiver 1 to execute the corresponding application program.

The image receiver 1, based on the indication from the pointing process unit 22, executes the application program. The audience points a display picture of the PC beginner's guide video, thereby confirming that the actual application program is executed.

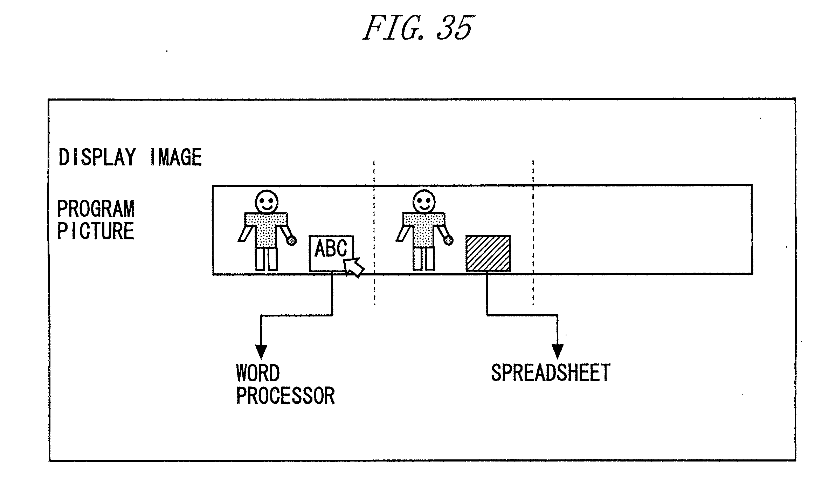

FIG. 35 shows a display example of the PC beginner's guide video in the eighth embodiment. In this video display system, for instance, during the display of the beginner's guide video for a word processor, when detecting a manipulation of pointing an object corresponding to a picture illustrating the word processor, an application program of this word processor is executed. Further, during the display of the beginner's guide video for a spreadsheet, when detecting a manipulation of pointing an object corresponding to a picture illustrating the spreadsheet, an application program of this spreadsheet is executed.

As described above, according to the eighth embodiment, in accordance with the audience's manipulation of pointing the video picture displayed on the image receiver 1, the related application program is executed. The audience is able to confirm a executing state of the actual application program in the process of advancement of learning with the aid of, e.g., the PC beginner's guide video.

### <<Ninth Embodiment>> Task Linkage-TV Shopping System

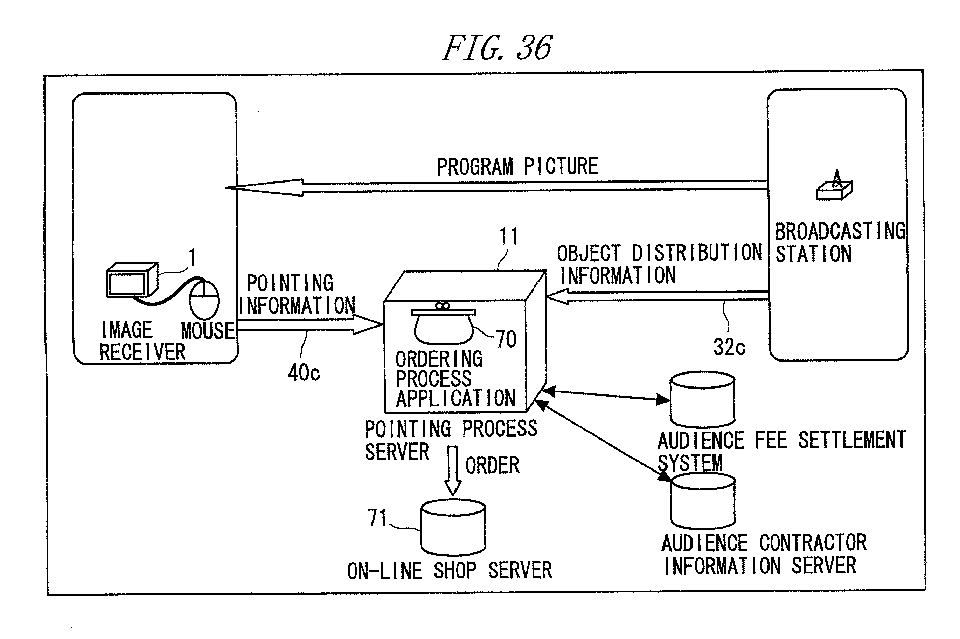

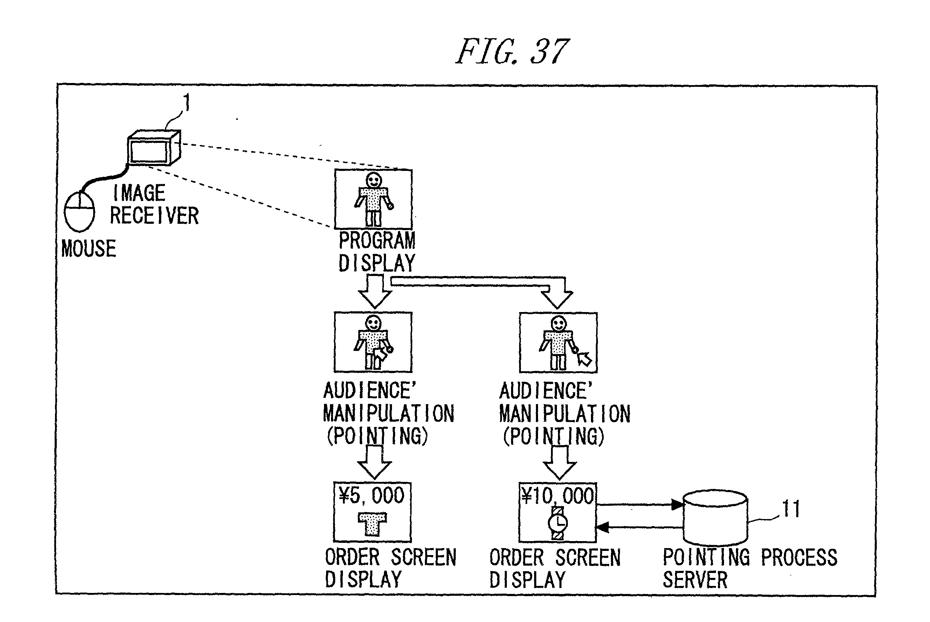

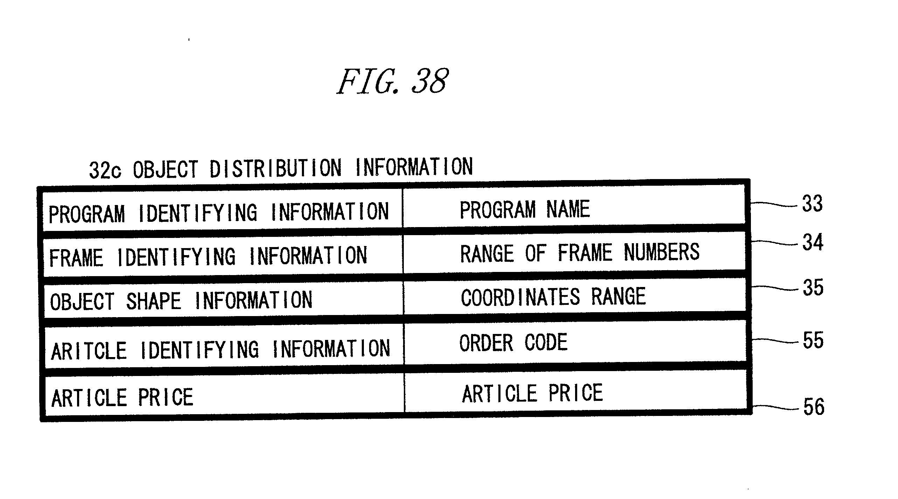

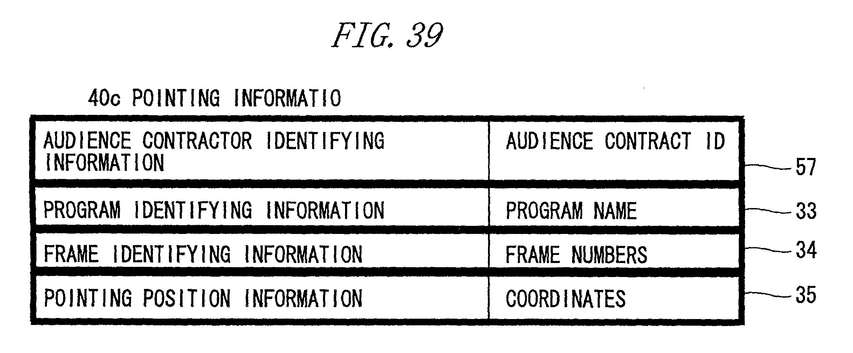

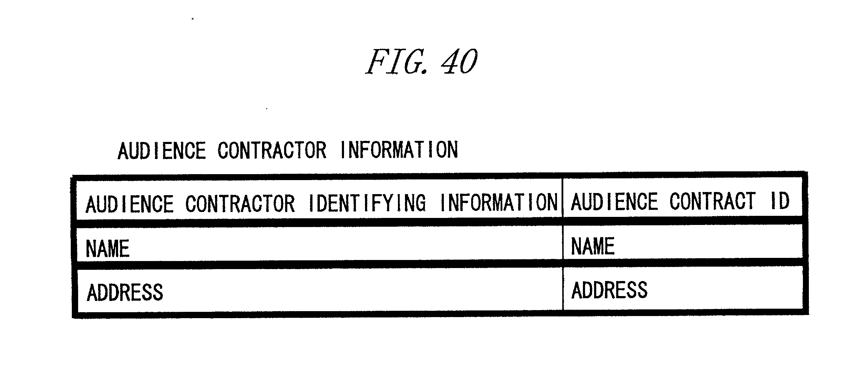

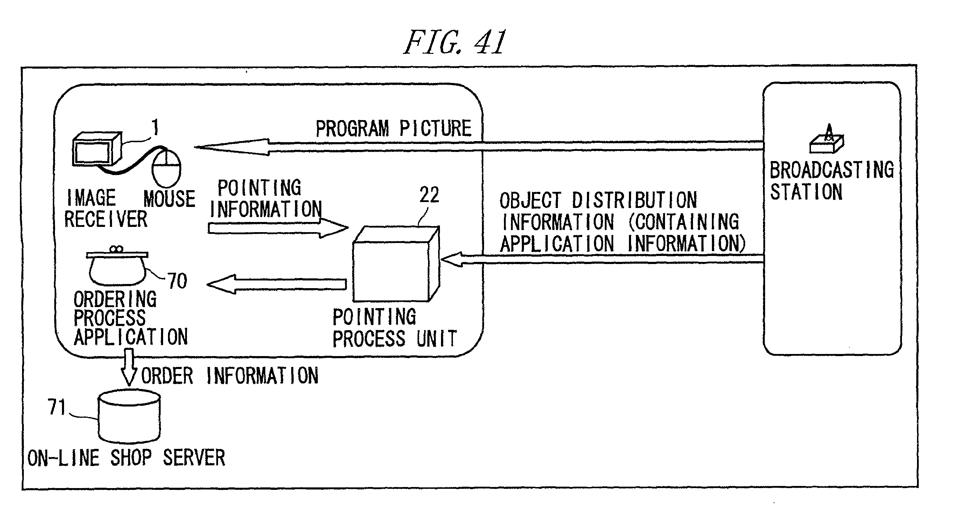

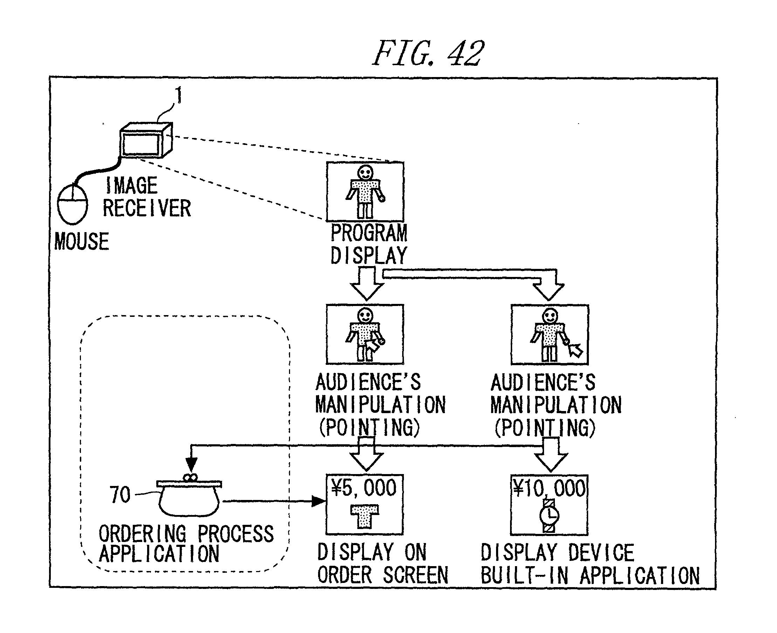

A ninth embodiment of the present invention will be explained referring to drawings in FIGS. 36 through 42. FIG. 36 is a diagram showing a system architecture of a TV shopping system in the ninth embodiment. FIG. 37 is a diagram that shows processing steps in this TV shopping system. FIG. 38 is a diagram showing a data structure of object distribution information 32c in the ninth embodiment. FIG. 39 is a diagram showing a data structure of pointing information 40c in the ninth embodiment. FIG. 40 is a diagram showing a data structure of audience contractor information retained by an audience contractor information server shown in FIG. 36. FIG. 41 is a diagram showing a system architecture of the TV shopping system in a modified example of the ninth embodiment. FIG. 42 is a diagram that shows processing steps in the TV shopping system in this modified example.

The ninth embodiment will deal with the system in which a commercial article is ordered corresponding to a manipulation of pointing the picture displayed. In the ninth embodiment, the same components as those in the first through eighth embodiments are marked with the same numerals , and the repetitive explanations are omitted. Further, the drawings in FIGS. 1 through 35 are referred to according to the necessity.

FIG. 36 is a diagram showing a system architecture of the TV shopping system in the ninth embodiment. This system is configured by the image receiver 1 for receiving the program picture distributed from the broadcasting station, the pointing process server 11 for judging the pointing information given from the image receiver 1, an online shop server 71 for receiving an order based on a result of the judgement made by the pointing process server 11, an audience fee settlement system for making a settlement of an audience fee and an order fee, and an audience contractor information server for managing the information on the audience contractor.

A program provider creates the object distribution information 32c corresponding to each frame of program picture distributed from the broadcasting station. The broadcasting station distributes the object distribution information 32c by use of an unused area of a frequency band for broadcasting the program.

The image receiver 1 includes the pointing device 7 (which is the mouse in FIG. 36), and detects the audience's pointing manipulation. Then, the image receiver 1 detects the audience's pointing manipulation and transmits the pointing information 40c to the pointing process server 11.

In the pointing process server 11, an ordering process application program 70 is executed as an ordering process task. The pointing process server 11 collates the pointing information 40c on the pointed object detected by the image receiver 1 with the object distribution information 32c distributed from the broadcasting station. The object distribution information 32c contains pieces of order information such as an article name, an order code etc for ordering the article.

Then, the pointing process server 11, when judging that the object is pointed, indicates the ordering process task to send the order information to the online shop server 71 via the communication unit 8 (FIG. 8).

Further, at this time, the pointing process server 11 accesses and requests the audience fee settlement system and the audience contractor information server to draw a price of the article out of a settlement bank account of the audience who ordered the article.

FIG. 37 shows processing steps in this TV shopping system. To start with, the image receiver 1 displays the program picture. At this time, if the audience (user) points, for instance, clothing or a watch put on the figure appeared, the image receiver 1 transmits to the pointing process server 11 the pointing information 40c containing the pointed picture frame, coordinates of the pointed position and so on.

The pointing process server 11 collates the pointing information 40c with the object distribution information 32c, and executes the orderingprocess task. Therefore, the pointing process server 11 provides a function of a commercial article order server. The ordering process task may also be executed on a server other than the pointing process server 11.

FIG. 38 shows a data structure of the object distribution information 32c in the present TV shopping system. As shown in FIG. 38, according to this system, the object distribution information 32c contains the program identifying information 33, the frame identifying information 34, the object shape information 35, article identifying information 55 and an article price 56. Among these items of information, the program identifying information 33, the frame identifying information 34, the object shape information 35 are the same as those in the first embodiment, and hence their repetitive explanations are omitted.

The article identifying information 55 is, for example, an article order code. Further, the article price 56 is a price of this article.

FIG. 39 shows a structure of the pointing information 40c in the present TV shopping system. The pointing information 40c contains audience contractor identifying information 57, the program identifying information 33, the frame identifying information 34 and pointed position information 35. Among these items of information, the audience contractor identifying information is an ID for identifying the audience contractor. The audience contractor is specified by this ID.

FIG. 40 shows a data structure of the audience contractor information administered by the audience contractor information server shown in FIG. 36. The audience contractor information contains audience contractor identifying information, a name and an address. The audience contractor identifying information is the same as the information shown in FIG. 39. Further, the name and the address are a name and an address of the audience contractor.

As discussed above, in the present TV shopping system, the article is ordered and the price is settled by the ordering process task executed in the pointing process server 11.

Further, according to the TV shopping system in the ninth embodiment, when the audience points the article on the screen of the image receiver 1, an order screen of this article is displayed. For instance, when clicking the clothing put on the figure appeared in a drama, an order screen of this clothing is displayed. When clicking the watch put on the figure, an order screen of this watch is displayed. Then, the audience is able to purchase the article on line.

According to the ninth embodiment, the TV shopping system is configured by the image receiver 1 for receiving the broadcast, the pointing process server 11 for processing the pointing information, and the online shop server 71. The embodiment of the present invention is not, however, confined to the configuration and steps described above. For example, the function of the pointing process server 11 may be built in the image receiver 1.

FIG. 41 shows an architecture of the TV shopping system by way of a modified example of the ninth embodiment. This system is configured by the image receiver 1 for receiving the program distributed from the broadcasting station, the object distribution information or the application program, and the online shop server 71 for receiving an order from the image receiver 1.

In the present system also, the image receiver 1 has the pointing device 7 (which is the mouse in FIG. 37), and detects the audience's pointing manipulation. Then, the image receiver 1 implements the pointing processing unit (module) 22 and an ordering process application program 70 as well in the CPU 2 shown in FIG. 4. The pointing processing unit collates the pointing information on the pointed object detected by the image receiver 1 with the object distribution information distributed from the broadcasting station. This item of object distribution information contains the order information (such as the article name, the order code, etc.).

Then, the pointing process unit 22, when judging that the object is pointed, issues a command to the ordering process application program 70 to give an order of an article corresponding to the object pointed. The ordering process application program 70, based on this command, sends the ordering information to the online shop server 71 via the communication unit 8 (FIG. 4).

FIG. 42 shows processing steps in the TV shopping system illustrated in FIG. 41. The system in this modified example also provides the same online shopping function as in the system according to the ninth embodiment. In the system in this modified example, however, the ordering process application program 70 is executed by the image receiver 1.

To begin with, the image receiver 1 displays the program picture. At this time, when the audience (user) points, e.g., the watch put on the figure appeared, the image receiver 1 detects the pointed picture frame and coordinates of the pointed position.

The image receiver 1 collates the pointed frame and the coordinates of the pointed position with the object distribution information (transmitted beforehand from the broadcasting station in FIG. 41), and executes the ordering process task.

### <<Tenth Embodiment>> Questionnaire System

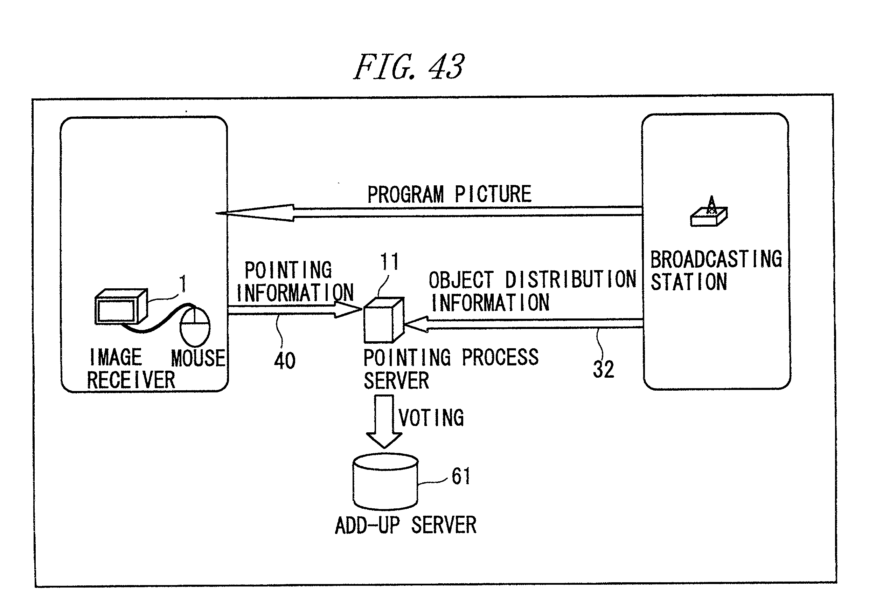

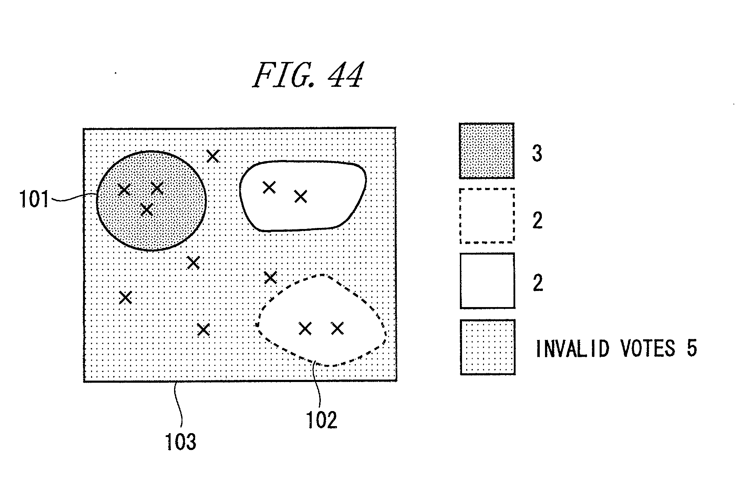

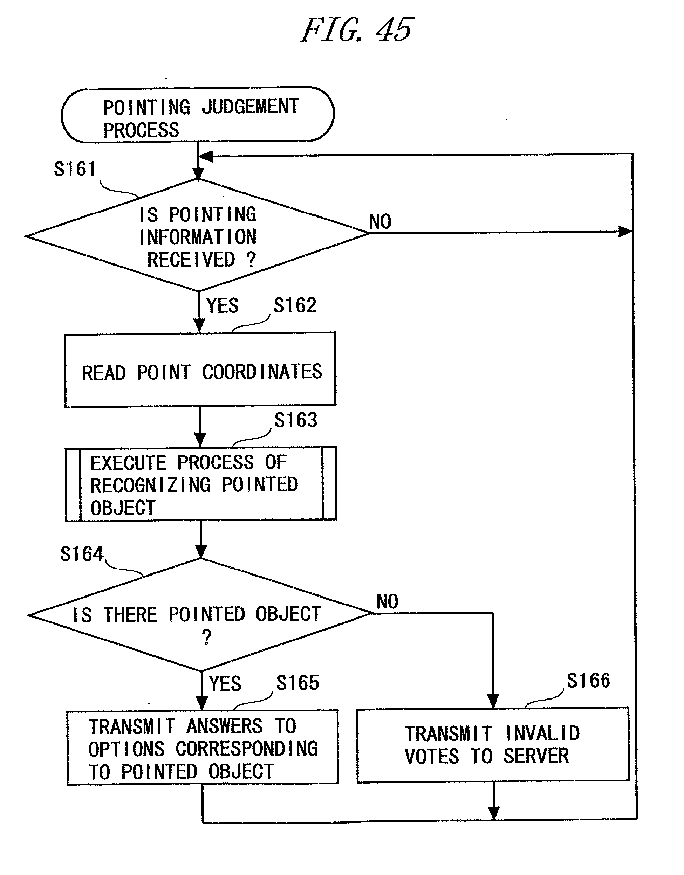

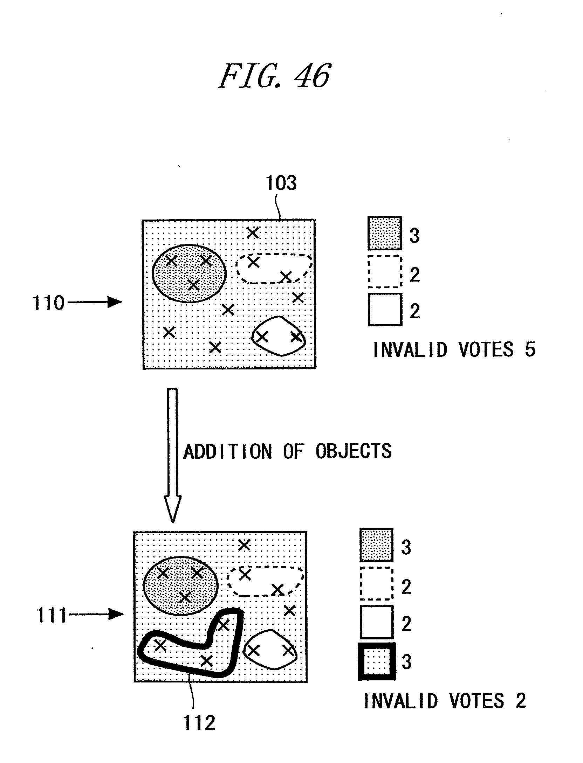

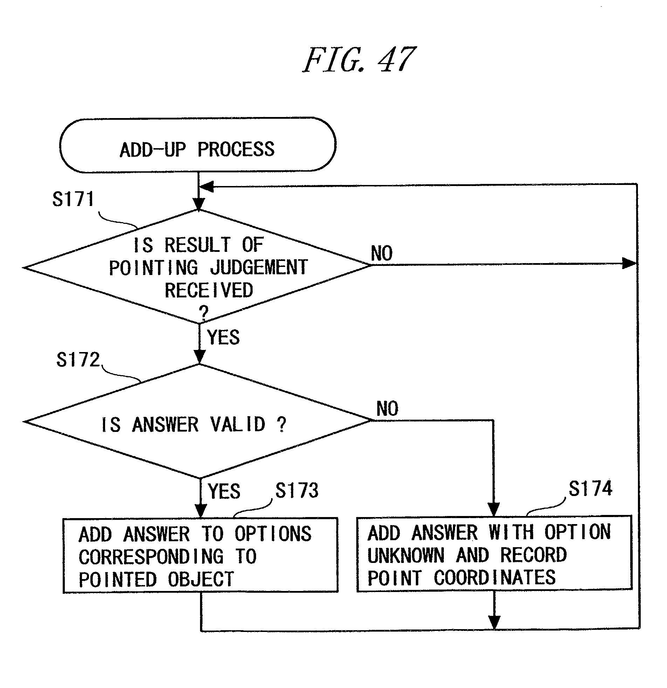

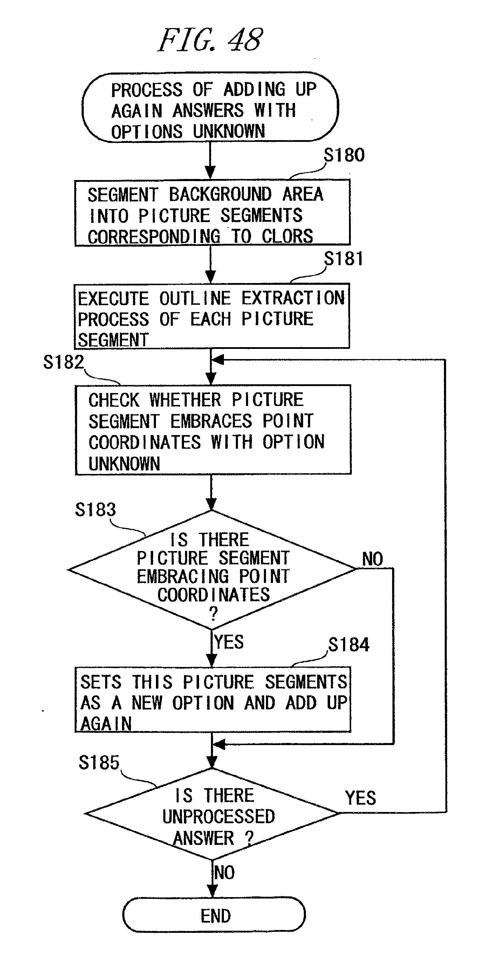

A tenth embodiment of the present invention will be described with reference to FIGS. 43 through 48. FIG. 43 is a diagram showing a system architecture of a questionnaire system in the tenth embodiment. FIG. 44 is a diagram showing how an object distribution is on the screen of the image receiver 1 shown in FIG. 43. FIG. 45 is a flowchart showing processes by the pointing process server 11 shown in FIG. 43. FIG. 46 is a diagram showing an outline of the processes in the questionnaire system in a modified example of the tenth embodiment. FIG. 47 is a flowchart showing processes by an add-up server in the modified example of the tenth embodiment. FIG. 48 is a flowchart showing process of adding up again answers with unknown options.

In the third embodiment, there is provided the pointing process server 11 for judging whether the object is pointed. Then, the pointing process server 11, based on the result of this judgement, indicates the broadcasting station to change over the picture to be distributed to the commercial image from the program picture.

According to the tenth embodiment, the image receiver 1 displays answers to questionnaires, and detects which answer to the questionnaire the audience points. Then, the image receiver 1 notifies the add-up server 81 of the thus detected pointed answers via the pointing process server 11, and the add-up server 81 adds up the answers.

Other configurations and operations are the same as those in the third embodiment. Thus, the same components as those in the first through eighth embodiments are marked with the same numerals, and the repetitive explanations are omitted. Further, the drawings in FIGS. 1 through 42 are referred to according to the necessity.

### <System Architecture>

FIG. 43 is the diagram showing the system architecture of the on-demand advertisement providing system in the tenth embodiment. This system is configured by the image receiver 1 for receiving the program picture from the broadcasting station, the pointing process server 11 for processing the pointing information 40 on the user's pointing manipulation, and the add-up server 81 for adding up the detected results of the pointing manipulations from the pointing process server 11.

According to the tenth embodiment, the broadcasting station distributes the questionnaires and the answers to these questionnaires. Further, the broadcasting station distributes to the pointing process server 11 the object distribution information 32 for sorting out the answers to the questionnaires.

In the tenth embodiment, the object distribution information 32 corresponds to options in the questionnaires. For instance, when the audience points an option corresponding to an area (object) on the screen, the pointing information thereof is transmitted to the pointing process server 11. A data structure of the pointing information 40 is the same as in the case shown in FIG. 16.

On the other hand, the pointing process server 11 receives the object distribution information 32 distributed from the broadcasting station. The object distribution information 32 is used for sorting out the pointing manipulations corresponding to the respective frames in the form of the answers to the questionnaires.

The pointing process server 11 collates the pointing information 40 with the object distribution information 32, and judges which object is pointed, i.e., which option is pointed. Then, the pointing process server 11 notifies the add-up server 81 of the results of these judgements. The add-up server 81 adds up the notified results of the judgements.

### <Object Distribution>

FIG. 44 shows an example of how the object distribution is in the tenth embodiment. Referring to FIG. 44, the options of the answers to the questionnaire are displayed on the screen of the image receiver 1. Referring again to FIG. 44, for example, an area 101 disposed at an upper left corner on the screen is an object for the option 1, wherein answers from three users are added up. Further, an area 102 disposed on a lower right side on the screen is an object for the option 2, wherein answers from two users are added up. Moreover, for instance, a background area 103 on the screen is an area for invalid votes with no options applied.

### <Operation and Effect>

FIG. 45 shows the processes by the pointing process server 11. Referring to FIG. 45, the processes in S161 through S164 are the same as S1 through S4 in FIG. 8 in the first embodiment.

The pointing process server 11, when detecting the pointed object, transmits its option answered to the add-up server 81 (S165). The add-up server 81 counts up the number of answers for this option.

On the other hand, the pointing process server 11, if any pointed object does not exist (NO in S164), transmits the invalid votes to the add-up server 11 (S165).

As discussed above, according to the questionnaire system in the tenth embodiment, a questionnaire research can be carried out by detecting and adding up the audiences' pointing manipulations on the image receiver 1.

### <Modified Example>

In the tenth embodiment discussed above, the manipulations of pointing the background area where no object exits on the screen, are added up as the invalid votes. These invalid votes may be added up again as valid votes for a new option.

FIG. 46 shows an example of an object corresponding to an option added afresh. Referring to FIG. 46, an upper screen 110 indicates a state of adding up the questionnaires before adding the option, and a screen 111 indicates a state where the option is added, and the invalid votes are added up once again.

There exist five points that point the background area 103 on the screen 110, which shows five invalid votes. On the other hand, a high-density area 112 for invalid votes is newly defined as an option on the screen 111. Votes as answers given to this area 112 are added up to 3, and there are two invalid votes on the screen 111.

FIG. 47 shows the add-up process by the add-up server 81. The add-up server 81 is normally in a standby state for receiving the pointing information. Namely, the add-up server 81 judges whether the pointing information is received (S171).

When the pointing information is received, the add-up server 81 judges whether the pointing is valid or not (S172). If the pointing is valid, the add-up server 81 adds the number of answers to the option for the pointed object (S173). Thereafter, the add-up server 81 loops the control back to S141.

Whereas if the pointing is invalid, the add-up server 81 treats this invalid pointing as an answer with the option unknown, and records its point coordinates (S174).

FIG. 48 shows a process of adding up again the answers with the option unknown. At first, the add-up server 81, based on coloring (densities)of the background area on the screen, segments the background area into picture segments on the answer screen to the questionnaire (S180).

Next, the add-up server 81 executes an outline extraction process of extracting an outline of each picture segment (S181). Next, the add-up server 81 takes out one of the answers with the option unknown, and judges which picture segment embraces this answer (point) (182).

Then, the add-up server 81 judges whether there is a picture segment embracing the point coordinates of the answer (point) with the option unknown (S183). If there is the picture segment embracing such point coordinates , the add-up server 81 sets this picture segment as a new option and adds up again the answers with the option unknown (S184).

Next, the add-up server 81 judges whether are answers not yet added up again (S185). If there are such unprocessed answers, the add-up server 81 returns the control to S182. Whereas if there is no unprocessed answer, the add-up server 81 finishes the processing.

Thus, according to the present questionnaire system, even when the audience points the area on the screen which is not counted as an answer to the questionnaire, the pointed position is recorded. Then, for example, if a significant picture proves to exist in the pointed position, an object corresponding to this picture is added, and this answer is recounted, thereby giving a relief to the invalid answer.

### <Other Modified Examples>

In the tenth embodiment, the pointing process server 11 judges whether there is the pointed object, and the add-up server 81 adds up the results of the judgements, thereby configuring the questionnaire system. The embodiment of the present invention is not, however, limited to such a configuration and steps.

For example, the pointing process server 11 notifies the add-up server 81 of a pointed object number, and the add-up server 81 may judge the selected option on the basis of the notified object number. Further, the pointing process server 11 and the add-up server 81 may be constructed of the same host computer. In this case, the process for the pointing information 40 and the process of adding up the pointed results are executed on the same host computer.

Moreover, the image receiver 1 may transmit the notifications of the pointed object number, the invalid votes and so on directly to the add-up server 81. In this case, the processing of the pointing process server 11 is executed in the image receiver 1, whereby the questionnaire system including no pointing process server 11 can be configured.

### <<Eleventh Embodiment>> On-Demand Advertisement Photographing System

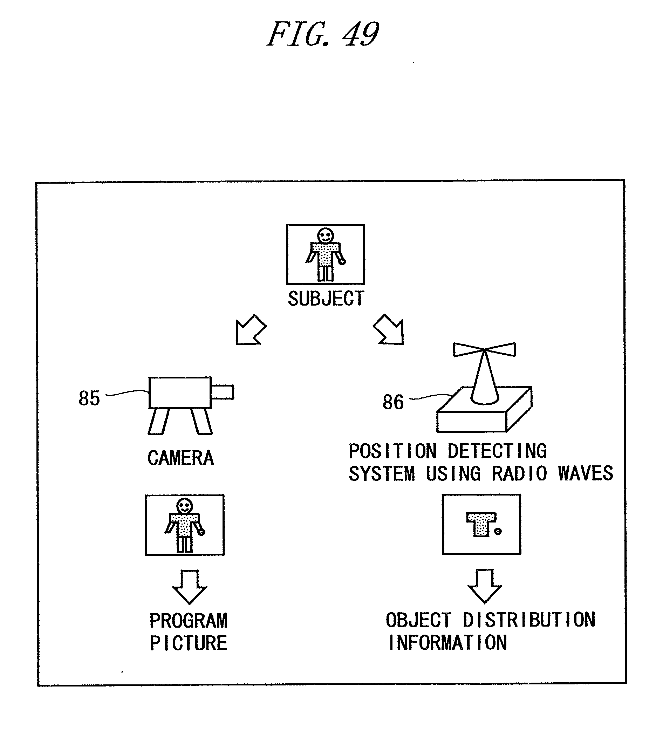

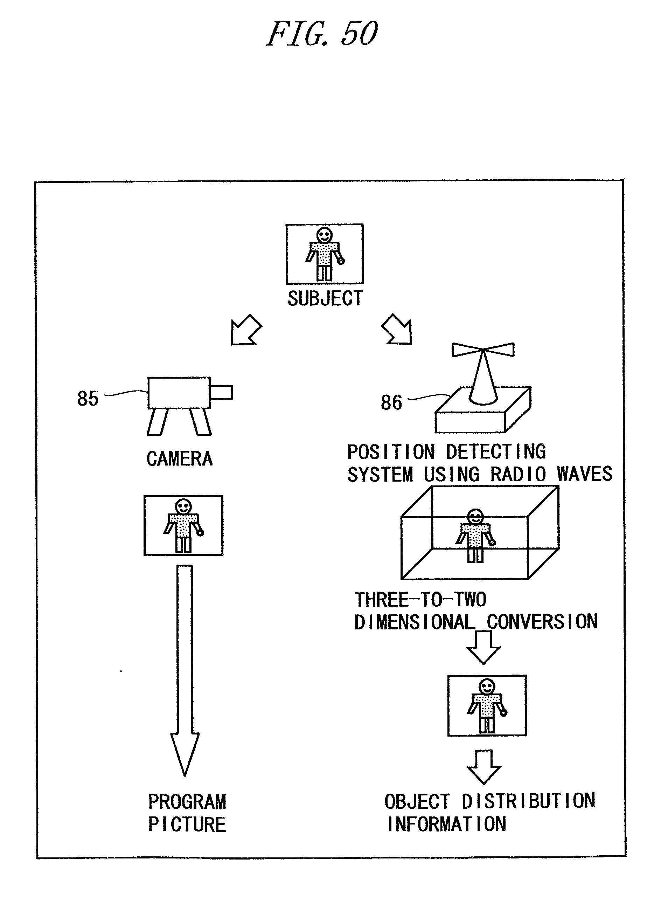

An eleventh embodiment of the present invention will be described with reference to FIGS. 49 and 50. FIG. 49 is a diagram showing a system architecture of a photographing system in the eleventh embodiment. FIG. 50 is a diagram showing steps of setting a mapping between a picture photographed by a camera 85 and a generated object in the system shown in FIG. 49.

The discussion on the eleventh embodiment will be focused on a system for automatically generating the obj ect distribution information from a motion of the figure appeared on the program etc. The object distribution information is generated based on signals given from a motion capture sensor.

FIG. 49 shows the system architecture of the present photographing system. This system includes a plurality of markers, attached to the body of the figure appeared, for generating electromagnetic waves, the camera 85 for photographing the figure appeared, and a position detecting system 86 for detecting the electromagnetic waves from these markers.

One single marker is constructed of a micro-transmitter and an antenna for converting high-frequency waves generated by this transmitter into electromagnetic waves and radiating these electromagnetic waves. The antenna is shaped in length that is 1/2 or 1/4 a wavelength of the electromagnetic wave. For example, if a frequency of 10 GHz is used as the high-frequency wave, the wavelength is approximately 3 cm, and the antenna can be constructed in length of 1.5 cm or 0.75 cm.

According to the eleventh embodiment, the plurality of markers is distinguished by involving the user of transmission frequencies of the transmitter. For instance, the marker attached to the right arm is identified by 10 GHz, the left arm marker is by 11 GHz, the right shoulder marker is by 12 GHz, and so on.

The position specifying system 86 detects the electromagnetic waves from those markers in real time, and generates pieces of motion capture data of the figure appeared. This position specifying system 86 has four pieces of electromagnetic wave sensors (each including a receiving antenna and a demodulation circuit).

Each one among the four electromagnetic wave sensors is disposed on a plane different from planes defined by other three electromagnetic sensors. Hence, with each electromagnetic sensor centered, four pieces of different spherical surfaces each having a radius equal to a distance to one single marker, can be assumed. Points of intersections between these four spherical surfaces are marker positions.

A distance to the electromagnetic wave sensor from the marker is measured based on an intensity of the electromagnetic wave received. This intensity may be obtained as an absolute value of a ratio of an energy of the electromagnetic wave received on the assumption that radiation electric power of the marker is a known value. It is known that the intensity of the electromagnetic wave received is in an inverse proportion to a square of the distance, and therefore the distance from the marker to each sensor can be obtained.

On the other hand, the camera 85 photographs a picture of the figure appeared, whose motion capture data are in the process of being generated, and generates a program picture.

FIG. 50 shows the steps of setting the mapping between the picture photographed by the camera 85 and the object generated from the motion capture data. With respect to each frame of picture photographed by the camera 85, pieces of position information of the respective markers which are taken in from the sensors at the same time, are recorded on an unillustrated recording device.

This piece of position information indicates a position in a three-dimensional space as illustrated in FIG. 50. Object distribution data are created by converting position coordinates (x, y, z) in this three-dimensional space into coordinates (u, v) on the (two-dimensional) screen of the image receiver 1. This coordinate conversion is generally used in computer graphics and so forth.

As described above, the photographing system in the eleventh embodiment obtains the motion capture data with respect to each picture frame in synchronization with photographing the motion picture. The motion capture data are converted into a format (as shown in, e.g., FIG. 6) of the object distribution information, whereby the present system is capable of simply creating the object distribution data.

### <Modified Example>

In the eleventh embodiment, the plurality of markers are identified by the transmission frequencies of the transmitter. The embodiment of the present invention is not, however, restricted to this method. For example, a time slot possible of outputting is allocated to each marker, and time-division multiplexing communications between the respective markers and the position specifying system 86 are established, whereby the markers may be identified.

According to the eleventh embodiment, the distance to the electromagnetic wave sensor from the marker is measured as the absolute distance based on the intensity of the electromagnetic wave received. The embodiment of the present invention is not, however, limited to this method. For instance, if the radiation electric power intensities of the respective markers are the same, a relative distance from each marker to the position measuring system 81 cab be known from the electric power received. This relative distance also enables the motion capture to be performed. Accordingly, the absolute distance may not necessarily be obtained.

### <<Twelfth Embodiment>> Advertisement Agent System

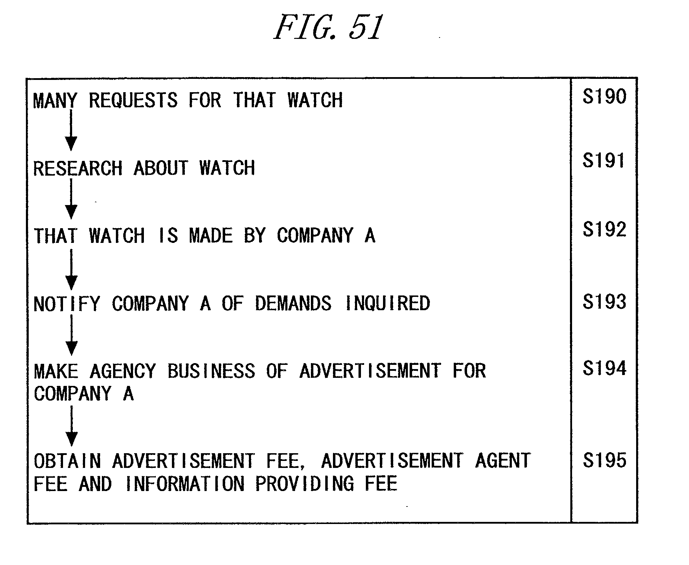

A twelfth embodiment of the present invention will be explained referring to FIG. 51. The first through eleventh embodiment have dealt with the systems for detecting the audience's pointing manipulation and executing a variety of processes with respect to the program picture and the questionnaire displayed on the image receiver 1.

The discussion on the twelfth embodiment will be focused on a system for supporting an agency business of advertisement by collecting the audiences' pointing manipulations on the image receiver 1. The system architecture in the twelfth embodiment is the same as those in the first through eleventh embodiments. Thus , the drawings in FIGS . 1 through 50 are referred to according to the necessity, and the repetitive explanations of the system architecture and components are omitted.

The system in the twelfth embodiment, when the audience performs the pointing manipulation, extracts an object displayed on the screen and displays the extracted object. With this operation, the system specifies a picture that attracts more interests of the audiences and supports the agency business of advertisement for this object.

For example, the system collects the audiences' pointing manipulations on each picture frame of the program picture. The system, based on this collection, generates the pointing information shown in FIG. 16 on each pointing manipulation, and adds up pieces of pointing information. A program, a frame and point coordinates that exhibit a large number of pointing manipulations are thereby identfied.

Then, a picture is extracted from the vicinity of the position exhibiting the large number of pointing manipulations in accordance with the steps (the process of adding up again the answers with the option unknown) shown in FIG. 48 in the tenth embodiment.

This picture represents an object that attracts more interests of the audiences. Accordingly, the object expressed by this picture has a large effect of the advertisement. This therefore comes to the agency business for advertising the object expressed by this picture.

FIG. 51 shows processing steps by the advertisement agent system. To start with, as a result of collecting the pointing manipulations, for instance, it is assumed that a watch used in a certain program has a large number of pointing manipulations (corresponding to requests in FIG. 51) (S190).

A research of this watch is made (S191). Then, this watch proves to be made by a company A (S192). Therefore, the company A is notified of an increase in the number of pointing manipulations (S193). Then, the system proposes to create an advertisement for this watch in a way that uses the same program picture, and acts as a proxy for creating the advertisement (S194).

As discussed above, according to the system in the twelfth embodiment, the highly effective advertisement can be created by adding up the pointing manipulations with respect to the program picture. Further, it is possible to gain fees such as an advertisement fee, and advertisement agent fee, an information providing fee and so on. On the other hand, an advertisement requester is able to obtain the highly effective advertisement by paying such fees.

### <<Thirteenth Embodiment>> Picture-Based Data Search System

The discussion on the twelfth embodiment has been focused on the system for supporting the agency business for the advertisement targeting the object (in the program picture) exhibiting the large number of pointing manipulations. Further, the first and other embodiments have exemplified the case of displaying the advertisement related to the object corresponding to the program picture, which is pointed by the audience, or outputting the advertisement in voice.

The thirteenth embodiment will deal with a business for researching, if the object (existing in the program picture) displayed in the position pointed by the audience is not provided with any advertisement, this object and providing the information on this object. A further explanation is given to a system for supporting such a business.

According to the present system, as in the case of the systems exemplified in the first through third embodiments, the audience's pointing manipulation is detected. Then, if any object is not defined in the pointed position, with respect to a picture corresponding to the pointed position, as in the case of the twelfth embodiment, a picture in the vicinity of the pointed position is extracted.

The business in the thirteenth embodiment is that an object represented by this picture is searched, and the information on this object is provided to the audience . This system is called a picture based information search system.

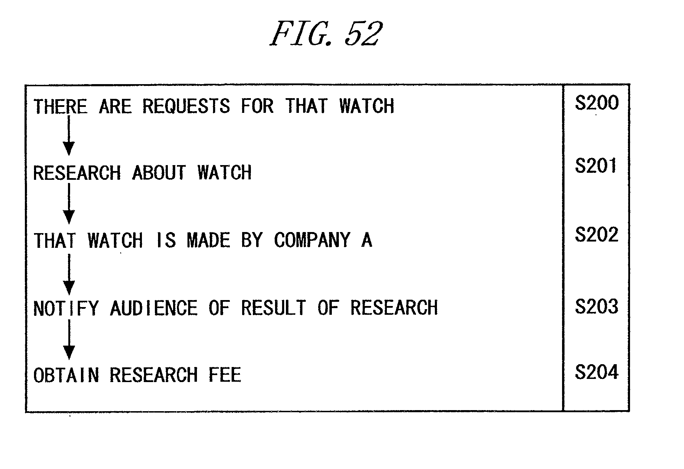

FIG. 52 shows processing steps by this system. At first, it is assumed that a watch displayed in a certain program receives the pointing manipulation (corresponding to a request in FIG. 52) (S200).

Then, a research of this watch is made (S201). Consequently, the watch proves to be made by a company A (s202). Then, the audience is notified of a result of the research of this watch (S203).

As explained above, the system in the thirteenth embodiment monitors the pointing manipulation on the program picture, recognizing and researching the pointed object, and is thereby capable of providing the detail information on the object in which the audience has an interest. Moreover, even if there is not provided the advertisement for the program picture as shown in the first and third embodiments, it is feasible to research the obj ect existing in the program picture and providing the information on this object to the audience.

### <<Fourteenth Embodiment>> Picture Enhancement Display

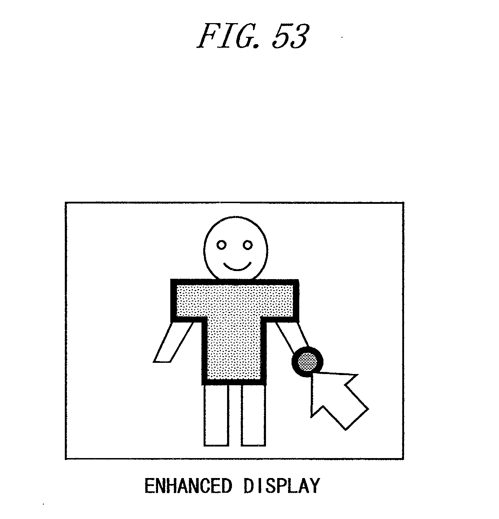

A fourteenth embodiment of the present invention will be described with reference to FIGS. 53 through 56. The first through thirteenth embodiments have exemplified the systems for detecting the pointing manipulation on the program picture displayed on the image receiver 1 as the manipulation of pointing the object corresponding to this picture, and executing the predetermined processes specified for the object such as displaying the advertisement, outputting the advertisement in voice, adding up the answers to the questionnaire and so on.

The discussion on the fourteenth embodiment will be focused on a system for displaying an area where the object is defined in a way that enhances this area . An architecture of the present system and other operations are the same as those in the first through thirteenth embodiments. Thus, the drawings in FIGS, 1 through 52 are referred to, and the repetitive explanations of the architecture and the operations are omitted.

FIG. 53 is a display mode when displaying a possible-of-pointing object in enhancement in the fourteenth embodiment. Referring to FIG. 53, a polygonal shape is generated based on the object shape information in the object distribution information (FIG. 11) shown in the modified example of the first embodiment, and is displayed in superposition on the program picture.

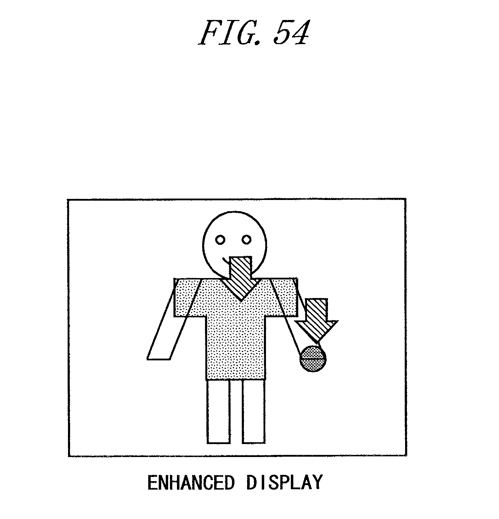

FIG. 54 shows an example of enhancement-displaying an object corresponding to a commercial article of a specified sponsor. A mode of displaying the polygonal shape in FIG. 54 is the same as in the case shown in FIG. 53. Referring again to FIG. 54, the objects displayed in enhancement are, e.g., a T-shirt made by a clothing maker and a watch made by a watch maker that are sponsors of the program.

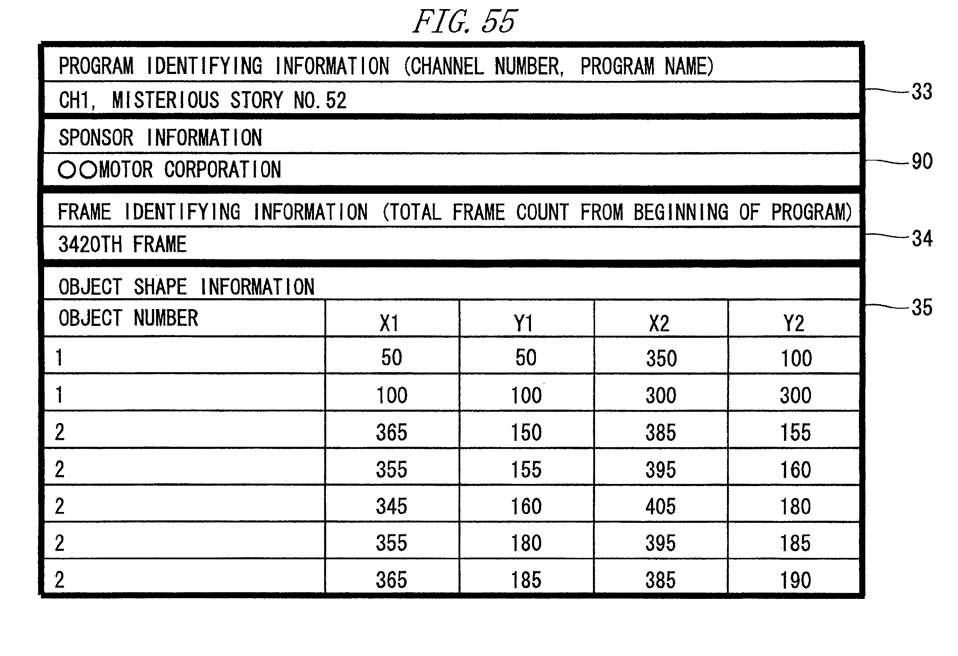

FIG. 55 is a diagram showing a data structure of object distribution information 32d for enhancement-displaying the object corresponding to the commercial article of a specified sponsor as shown in FIG. 54. The object distribution information 32d contains the program identifying information 33, sponsor information 90, the frame identifying information and the object shape information 35. These items of information excluding the sponsor information 90 are the same as those in the third embodiment, and hence their repetitive descriptions are omitted.

The sponsor information 90 is a unique piece of information for identifying the sponsor. For instance, the sponsor information is a name of a sponsor company in registration. A unique identification number may be used as the sponsor information 90.

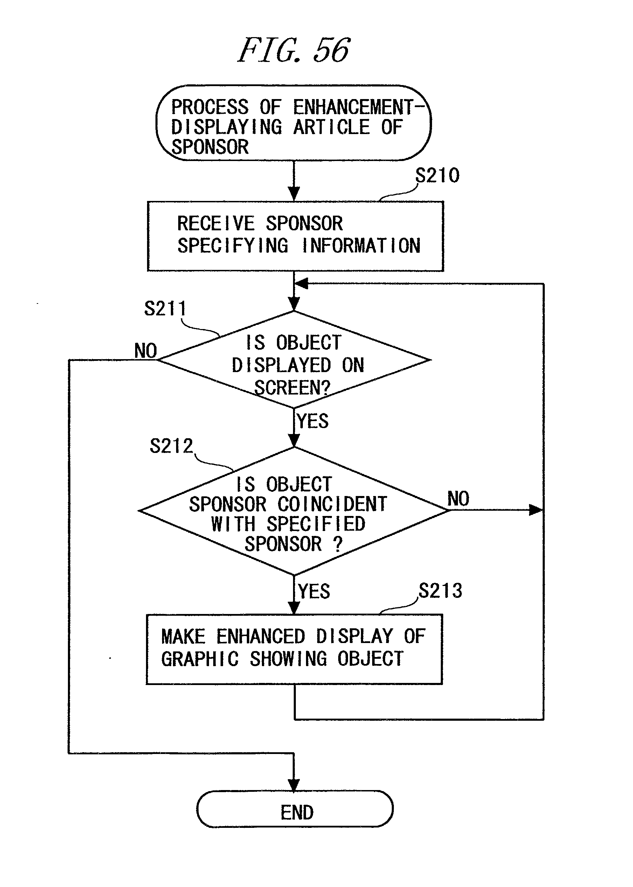

FIG. 56 shows a process by the image receiver 1 in the case of enhancement-displaying the article of the sponsor. In this process, to start with, the image receiver 1 receives the sponsor specifying information (S210). In this process, the image receiver 1 is given a specified sponsor corresponding to the object that should be displayed in enhancement.

Next, the image receiver 1 judges whether there is an object that should be displayed on the screen (S211). If there is the object that should be displayed on the screen, the image receiver 1 judges whether the sponsor of this object is identified with a sponsor specified by the information in S210 (S212).

If the sponsor of this object is identified with the sponsor corresponding to the enhancement-displayed object, the image receiver 1 displays the concerned object in enhancement (S213). Thereafter, the image receiver 1 returns the control to S211.

Whereas if the sponsor of this object is not identified with the sponsor corresponding to the enhancement-displayed object, the image receiver 1 does not enhancement-display the object concerned (the object remains displayed in the case of the normal program picture). Thereafter, the image receiver 1 loops the control back to S211.

Further, if there is no object that should be displayed on the screen in S211, the image receiver 1 finishes this process .

As discussed above, according to the fourteenth embodiment, the shape of the object is enhanced, and hence the audience can easily recognize the area where the object exists. Moreover, the object corresponding to the specified sponsor can be displayed in enhancement.

### <Modified Example>

In the fourteenth embodiment, the object shape information 35 in the object distribution information 32d (FIG. 55) is used for enhancement-displaying the object. The embodiment of the present invention is not, however, confined to this mode. For example, as exemplified in the second embodiment (shown in FIGS. 12 and 13), a shape of the object may be automatically recognized from the characteristic information of the object corresponding to the sponsor, and this object may be displayed in enhancement.

### <<Fifth Embodiment>> Change in Picture by Audience's Manipulation and Multi-Story Video

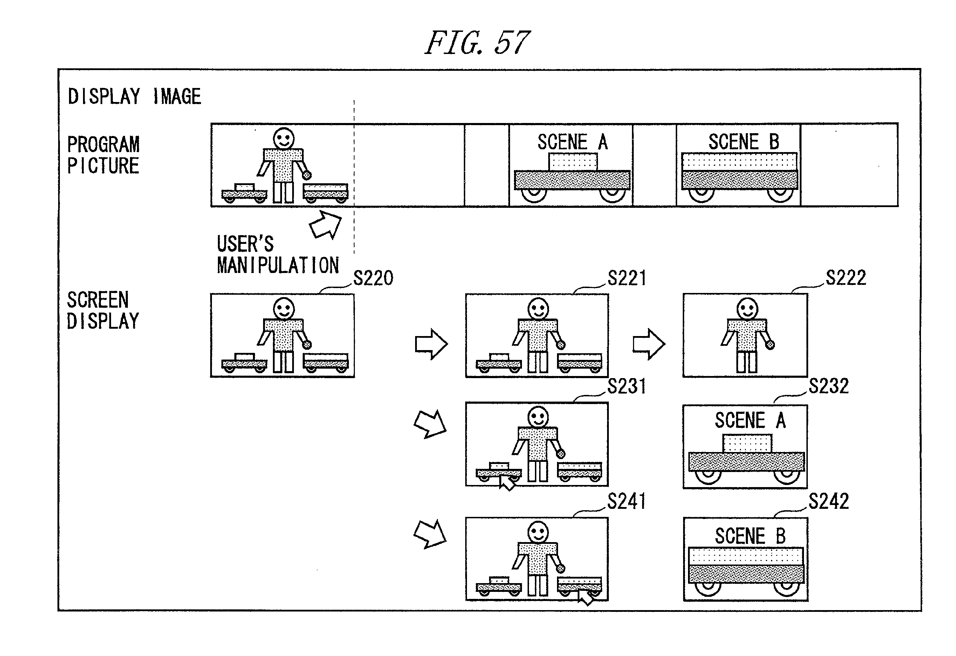

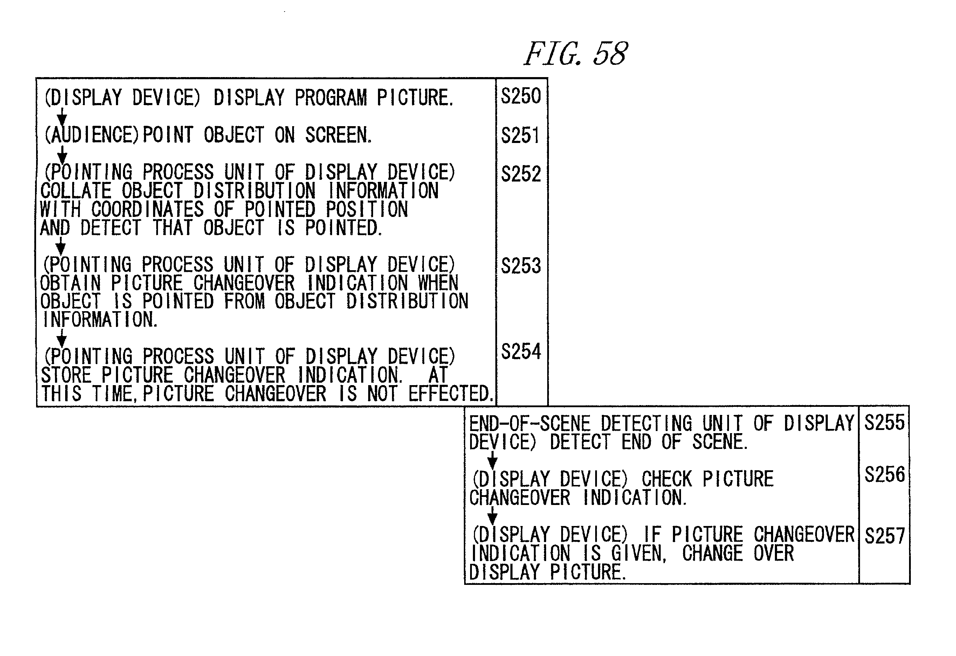

A fifteenth embodiment of the present invention will be explained with reference to FIGS. 57 and 58. The first through thirteenth embodiments have exemplified the systems for detecting the pointing manipulation on the program picture displayed on the image receiver 1 as the manipulation of pointing the object corresponding to this picture, and executing the predetermined processes specified for the object such as displaying the advertisement, outputting the advertisement in voice, adding up the answers to the questionnaire and so on.

The discussion on the fifteenth embodiment will be focused on a system for displaying a multi-story video (or multi-story program) of which a story changes. An architecture and other operations of the present system are the same as those in the first through fourteenth embodiments. Thus, the drawings in FIGS, 1 through 56 are referred to, and the repetitive explanations of the architecture and the operations are omitted.

FIG. 57 is a diagram showing an outline of the multi-story video in the fifteenth embodiment. Examples of the program pictures recorded on a video medium (such as a tape, a DVD etc) are displayed in an upper area in FIG. 57, and the program pictures displayed corresponding to the audience's manipulations are displayed in a lower area in FIG. 57.

For example, if the audience does not point on the screen of the image receiver 1, the display of the program picture transits as in S220, S221 and S222. On the other hand, on the screen in S220, if a left lower picture is pointed as shown in S231, a scene A is displayed as in S232.

Further, on the screen in S220, if a right lower picture is pointed as shown in S241, a scene B is displayed as in S242.

FIG. 58 shows a process of displaying the multi-story video in the fifteenth embodiment. According to the fifteenth embodiment, the multi-story video is displayed by use of the image receiver 1 and the video deck 20 or the picture recording/reproducing device 60. In the fifteenth embodiment, these devices are simply called display devices.

To begin with, the display device displays the program picture (S250). For this picture, the audience points an object on the screen (S251). Next, a pointing process unit (e.g., the pointing process unit 22 shown in FIG. 20) of the display device collates the object distribution information with coordinates of the pointed position. Then, the pointing process unit detects that the object is pointed (S252).

Next, the pointing process unit obtains a picture changeover indication from the object distribution information when the object is pointed (S253). Then, the pointing process unit records the picture changeover indication (S254). At this time, however, the pointing process unit does not change over the picture. This is because the scene is prevented from unnaturally changing over.

Subsequently, the display device detects an end of the scene in the program (S254). When detecting the end of the scene, the display device checks the contents (see FIG. 4) in the memory 3 for recording the picture changeover indication. At this time, if the picture changeover indication is stored, the display device changes over the picture to be displayed.

The end of the scene can be detected by any one of the following procedures.
(1) The memory 3 (see FIG. 4) is stored with index information for indicating an end of every scene during a video vertical retrace line blanking interval. The index information involves the use of a serial number of the frame existing in the end position of each scene. The display device monitors the serial number of the fame that is being reproduced. Then, when the frame serial number gets coincident with a frame serial number value stored as the index information, the display device recognizes the end of the scene and changes over the picture.
(2) A special signal is embedded into an end-of-scene timing frame vertical retrace line blanking interval. When the reproduced frame comes to this frame and detecting this special signal, the display device changes over the scene.
(3) In the picture changeover indication, it is specified which frame it comes to for changing over the picture. On the other hand, the picture display device monitors the frame serial number being displayed. Then, when the frame serial number being displayed comes to the specified frame number, the display device changes over the picture. According to this method, a changing point of a different scene can be set for every pointed object.
(4) A multiplicity of methods of judging the changing point of the scene from a animated image recognition (based on a magnitude of change of picture), have been proposed and used for seeking out the beginning in the video and so on. The end of the scene may also be detected by utilizing these technologies.

As discussed above, according to the system in the fifteenth embodiment, it is feasible to provide the multi-story video in which a development of the story differs at the changing point of the scene by making use of the pointing manipulation on the program picture.

In this case, there is no necessity of the manipulation on the object in separation from the program picture such as a button selection as in the case of the conventional multi-story video. Therefore, the audience is able to change the story with a manipulation natural to the program picture.

### <Modified Example>

The fifteenth embodiment has exemplified the system for displaying the multi-story video in which the development of the story differs at the changing point of the scene by making use of the pointing manipulation on the program picture. The embodiment of the present invention is not, however, limited to the above method.

For instance, the pointing manipulation of the audience may be transmitted back to the broadcasting station via the communication unit 8 (see FIG. 4), thus changing the story of the program that is being broadcast.

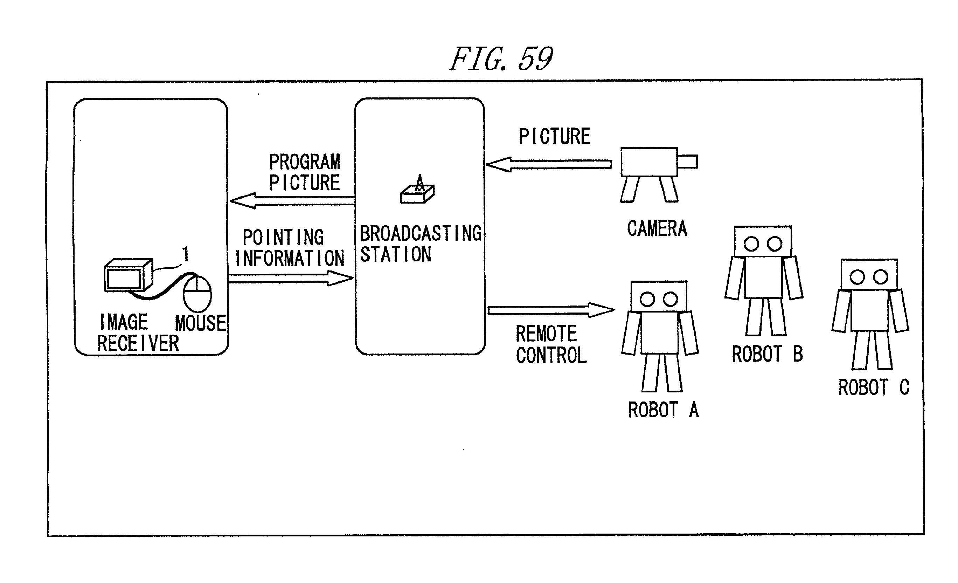

Moreover, the story may be changed based on the pointing manipulations of the plurality of audiences. For example, as shown in FIG. 59, each of the audiences performs remote-control of one single robot, and the robots may be controlled to fight each other in the program.

### <<Sixteenth Embodiment>> Service for Quantifying Effectiveness of Advertisement

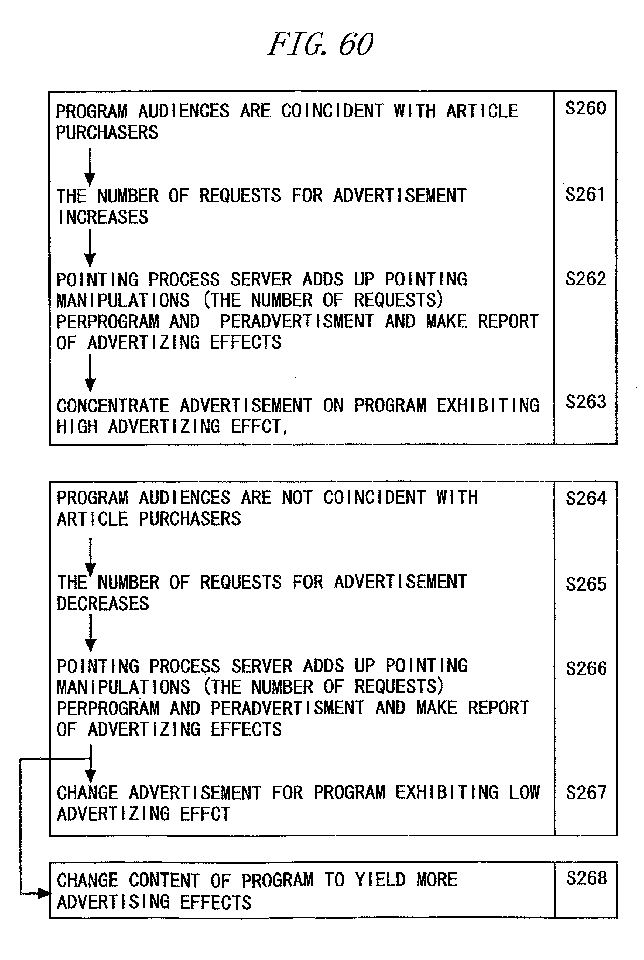

A sixteenth embodiment of the present invention will be explained referring to FIG. 60. The first through fifteenth embodiments have exemplified the systems for detecting the pointing manipulation on the program picture displayed on the image receiver 1 as the manipulation of pointing the object corresponding to this picture, and executing the predetermined processes specified for the object such as displaying the advertisement, outputting the advertisement in voice, adding up the answers to the questionnaire and so on.

The discussion on the sixteenth embodiment will be focused on a system for quantifying effectiveness of the advertisement by collecting pieces of pointing information on the pointing manipulations. The system architecture in the sixteenth embodiment is the same as in the first through fifteenth embodiments.

FIG. 60 shows processing steps in this system. It is at first assumed that purchasers of the commercial articles are coincident with those among the program audiences (S260). In this case, the number of pointing manipulations , i.e., the number of requests for the advertisement increases (S261).

The pointing process server 11 (FIG. 14) makes a report of such a program, an object and an effect of the advertisement (S262). Based on this report, the program provider and the sponsor increase a volume of the advertisement in the program exhibiting a high effect of the advertisement and concentrates the advertisements on this program (S263).

While on the other hand, it is assumed that the purchasers of the commercial articles are not coincident with those among the program audiences (S264). In this case, the number of pointing manipulations, i.e., the number of requests for the advertisement decreases (S265).

The pointing process server 11 (FIG. 19) makes a report of such a program and an object (S266). Based on this report, the program provider and the sponsor discards the advertisement exhibiting a low effect and changes this advertisement on the program to other advertisement (S267). Note that a content of the program may also be changed to get it easier to yield the advertising effect instead of changing the advertisement (S268).

As discussed above, the system in the sixteenth embodiment is capable of quantifying the effect of the advertisement on the program.

### <<Seventeenth Embodiment>> Support System for Predicting Vogue

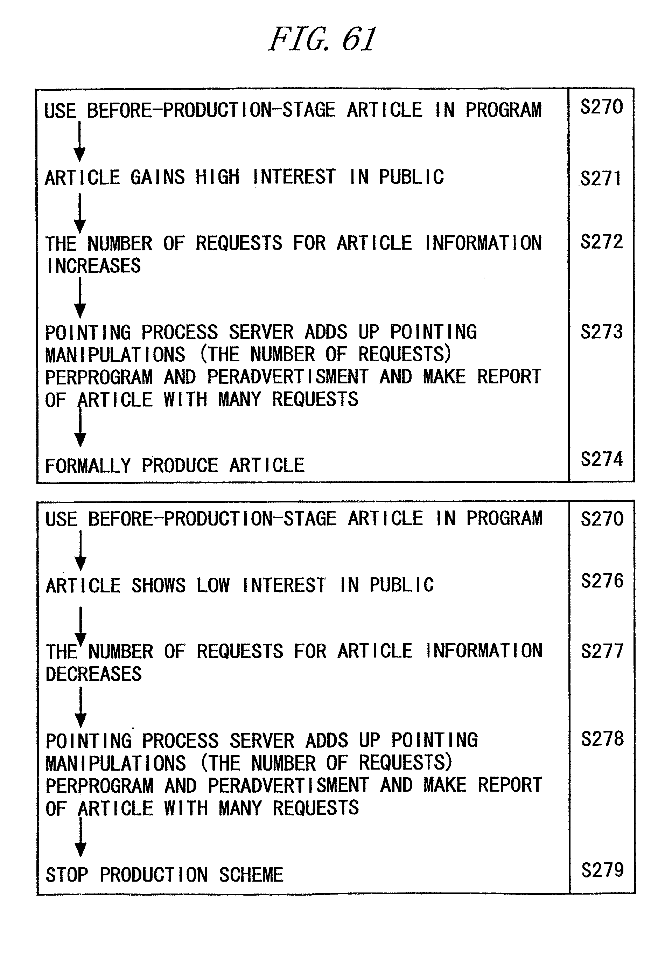

A seventeenth embodiment of the present invention will be explained referring to FIG. 61. The first through sixteenth embodiments have exemplified the systems for detecting the pointing manipulation on the program picture displayed on the image receiver 1 as the manipulation of pointing the object corresponding to this picture, and executing the predetermined processes specified for the object such as displaying the advertisement, outputting the advertisement in voice, adding up the answers to the questionnaire and so on.

The discussion on the seventeenth embodiment will be focused on a support system for predicting a vogue by collecting pieces of pointing information on the pointing manipulations. The system architecture in the seventeenth embodiment is the same as in the first through sixteenth embodiments.

FIG. 61 shows processing steps in this system. In this system, an article before its production is used in the program (S270). It is now presumed that this article gains a high interest among the audiences (S271).

In this case, the number of requests (the number of pointing manipulations) for advertisements and information on this article, increases (S272). Thepointingprocess server 11 (FIG. 14) makes a report of such a program and the article corresponding to the object with a large number of pointing manipulations (S273). This report enables the sponsor to determine that this article be formally produced (S274).

While on the other hand, it is presumed that this article exhibits a low population among the audiences (S276). In this case, the number of requests (the number of pointing manipulations) for advertisements and information on this article, decreases (S277). Thepointingprocess server 11 (FIG. 19) makes a report of such a program and the article corresponding to the object with a small number of pointing manipulations (S278). This report enables the sponsor to determine that the production of this article be stopped (S279).

As discussed above, the present support system is capable of predicting how much the article will be sold in place of test sales and how much the article will spread.

### <<Eighteenth Embodiment>>

An eighteenth embodiment of the present invention will be described. The third embodiment has been exemplified the system for transmitting the information on the pointing manipulations on the program picture displayed on the image receiver 1 to the pointing process server 11, and, in response to the indication given from the pointing process server 11, changing over the picture to be displayed on the image receiver 1 and outputting the voice.

The discussion on the eighteenth embodiment will be focused on a system in which an information display device 201 detects, as by the image receiver 1 in the third embodiment, the pointing manipulation, and a server 202 provides various categories of information corresponding to a result of the detection. The system architecture and other operations in the eighteenth embodiments are the same as those in the third embodiment, and hence the drawings in FIGS. 1 through 61 are referred to as the necessity may arise.

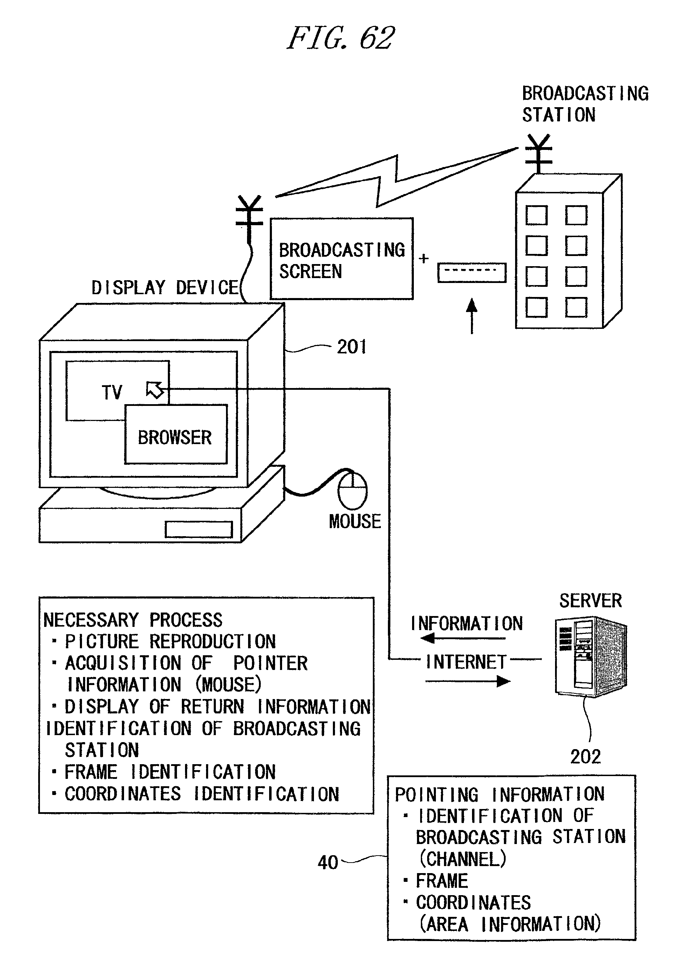

FIG. 62 is a diagram showing a system architecture of an information providing system in the eighteenth embodiment. The information providing system in the eighteenth embodiment is configured by, as in the third embodiment, the broadcasting station for broadcasting the program, a display device 201 for receiving the broadcast from the broadcasting station, and a server 202, connected to the display device 201 via the Internet, for providing the information to the display device 201.

The display device 201, as by the image receiver 1 in the third embodiment, receives the TV broadcast and displays the program picture on the screen. Further, the display device 201 receives URLs (Uniform Resource Locators), frame identifying information on the frames constituting the program picture and broadcasting station identifying information via on data broadcasting. The display device 201 may be a general TV image receiver, a set-top box or a TV tuner. Further, the display device 201 may also be a personal computer incorporating a TV image receiving function.

Moreover, the display device 201, as in the third embodiment, includes the pointing device like the mouse etc. The display device 201 detects the pointing manipulation by the pointing device on the screen.

Furthermore, the display device 201 is connected to the Internet and communicates with the server 202 on the Internet. The connection to the Internet is established by use of the modem, the cable TV and networks such as the LAN, wireless LAN, etc.

For instance, the display device 201, when detecting the pointing manipulation on the screen during the display of the program picture, transmits to the server 202 the pointing information 40 containing the information for identifying the picture, e.g., the broadcasting station identifying information on the broadcasting station for providing the program, the frame identifying information of the pointed picture and coordinates (which will hereinafter be called point coordinates) of the pointed position. The pointing information 40 may, however, contain a receiving channel as a substitute for the broadcasting station identifying information.

The server 202 has an unillustrated database stored with an EPG (electronic Program Guide) and identifies the program that is being received by the display device 201 from a receiving time and the broadcasting station identifying information in the pointing information 40.

Further, the server 202 identifies a pointed picture segment on the display device 201 from the frame identifying information and the point coordinates in the pointing information 40. This is attained by collating, for example, as in the first other embodiments, the object distribution information (see FIG. 6) corresponding to each frame with the point coordinates in the pointing information 40.

Then, the server 202 provides the various categories of information to the display device 201 in accordance with the program picture pointed, the frame and the point coordinates.

For example, the server 202 accepts a TV shopping service and provides data (profile etc) about a hero or heroine in the drama, the plot of the drama, the commercial image and the commercial voice. An advertisement fee is collected from the sponsor by distributing the commercial image. In this case also, if there is no pointing manipulation on the screen, a program with no commercial interposed is provided. This scheme makes it feasible to actualize a free-of-charge broadcast with no commercial displayed unless the audience shows any intention through the pointing manipulation.

The server 202 retains the object distribution information (FIG. 6) collated with the pointing information 40 with respect to every plurality of broadcasting stations for a predetermined period. With this contrivance, it is possible to provide the above information also with respect to the program recorded within this period.

### <Readable-by-Computer Recording Medium>>

The program executed by the computer to execute the processes in the image receiver 1, the pointing process server 11, the video deck 20, the video recorder 20a, the picture recording/reproducing device 60 the add-up server display device or server in the embodiments discussed above, may be recorded on a readable-by-computer recording medium. Then, the computer reads and executes the program on this recording medium, thereby providing one of the functions shown in the embodiments discussed above.

Herein, the readable-by-computer recording medium which may be called as storage medium readable by a machine embraces recording mediums capable of storing information such as data, programs, etc. electrically, magnetically, optically and mechanically or by chemical action, which can be all read by the computer. What is demountable out of the computer among those recording mediums may be, e.g., a floppy disk, a magneto-optic disk, a CD-ROM, a CD-R/W, a DVD, a DAT, an 8mm tape, a memory card, etc..

Further, a hard disk, a ROM (Read Only Memory) and so on are classified as fixed type recording mediums within the computer.

### <Data Communication Signal Embodied in Carrier Wave>

Furthermore, the above program may be stored in the hard disk and the memory of the computer, and downloaded to other computers via communication media. In this case, the program is transmitted as data communication signals embodied in carrier waves via the communication media. Then, the computer downloaded with this program can be made to provide one of the above functions.

Herein, the communication media may be any one of cable communicationmediums such as metallic cables including a coaxial cable and a twisted pair cable, optical communication cables, or wireless communication media such as satellite communications, ground wave wireless communications, etc.

Further, the carrier waves are electromagnetic waves for modulating the data communication signals, or the light. The carrier waves may, however, be DC signals. In this case, the data communication signal takes a base band waveform with no carrier wave. Accordingly, the data communication signal embodied in the carrier wave may be any one of amodulatedbroadband signal and an unmodulated base band signal (corresponding to a case of setting a DC signal having a voltage of 0 as a carrier wave).

## Claims

1. A control system for controlling a display device including a display unit displaying a motion picture, and a pointing unit pointing a position on the motion picture, said control system comprising:
a recognizing unit recognizing an object in the motion picture on which the pointing manipulation is effected; and
a processing unit executing a predetermined process related to the object recognized.

2. A control system according to claim 1, wherein said display device further includes a receiving unit receiving data,
said receiving unit receives first data containing the motion picture, and second data related to the object in the motion picture contained in the first data, and
said processing unit makes said display device output the second data related to the object recognized.

3. A control system according to claim 2, wherein the second data contains an image related to the motion picture of the first data.

4. A control system according to claim 2, wherein the second data is multiplexed with the first data and thus distributed.

5. A control system according to claim 4, wherein the second data is embedded in a margin of the first data.

6. A control system according to claim 2, wherein the motion picture of the first data contains an image related to a commercial article or a service becoming an advertisement target, and
the second data is an advertisement of the article or the service.

7. A control system according to claim 1, wherein said processing unit executes an application program related to the object recognized.

8. A control system according to claim 1, wherein said processing unit executes a task related to the object recognized.

9. A control system according to claim 1, wherein said display device further includes a communication unit transmitting a command to other task executing device, and
said processing unit, via said communication unit, commands said other task executing device to execute a task related to the object recognized.

10. A control system according to claim 9, wherein said task executing device is an E-mail server delivering an E-mail, and the command is a request for transmitting E-mail data related to the object, and
said processing unit receives the transmitted E-mail data via said communication unit.

11. A control system according to claim 1, wherein said display device further includes a communication unit transmitting information to an add-up server adding up pieces of information, and
said processing unit, via said communication unit, notifies said add-up server of the information related to the recognized object, and makes said add-up server add up results of the recognition.

12. A control system according to claim 2, wherein the motion picture is formed of a plurality of frames,
said receiving unit further receives definition information for defining an area of the object of each frame, and
said recognizing unit collates a position on the motion picture receiving the pointing manipulation with the definition information with respect to the frame of the motion picture receiving the pointing manipulation.

13. A control system according to claim 12, further comprising a unit displaying the area in the motion picture with enhancement.

14. A control system according to claim 2, wherein said receiving unit further receives information for describing a characteristic of the object, and
said processing unit generates an object corresponding to the motion picture on the basis of the motion picture and the information for describing the characteristic of the object.

15. A control system according to claim 1, wherein when the pointing manipulation occurs during the display of the motion picture contained in the first data, said processing unit, after an end of displaying the motion picture, commands said display device to output the second data related to the object recognized by the pointing manipulation.

16. A control system according to claim 15, wherein said display device further includes a recording unit recording data, and
said processing unit, when the object is recognized from the pointing manipulation during the display of the motion picture, commands said recording unit to record the second data related to the object, and after the end of displaying the motion picture, commands said display device to output the second data recorded.

17. A control system according to claim 1, wherein said processing unit, when the object is recognized from the pointing manipulation during the display of the motion picture contained in the first data, commands said display device to effect a first changeover to an output of the second data related to the object.

18. A control system according to claim 17, wherein said processing unit commands said display device to executes a second changeover to displaying the motion picture after outputting the second data.

19. A control system according to claim 18, wherein said display device further includes a recording unit recording data, and
said processing unit, after outputting the second data, issues a command of displaying the motion picture from a point of the first changeover recorded on said recording unit.

20. A control system according to claim 15, wherein said display device includes a first receiving unit receiving the first data and a second receiving unit receiving the second data.

21. A control system for controlling a display device including a display unit displaying a motion picture, and a pointing unit pointing a position on the motion picture, said control system comprising:
a communication unit transmitting the position on the motion picture receiving the pointing manipulation to a server including a unit recognizing an object in the motion picture receiving the pointing manipulation, and receiving, from said server, information on the object in the motion picture recognized by said server; and
a processing unit executing a predetermined process related to the object recognized.

22. A control system according to claim 21, wherein said display device further includes a receiving unit receiving data,
wherein said receiving unit receives first data containing the motion picture, and second data related to the object in the motion picture contained in the first data, and
said processing unit makes said display device output the second data related to the object recognized.

23. A control system according to claim 22, wherein the second data contains an image related to the motion picture of the first data.

24. A control system according to claim 22, wherein the second data is multiplexed with the first data and thus distributed.

25. A control system according to claim 24, wherein the second data is embedded in a margin of the first data.

26. A control system according to claim 21, wherein said processing unit executes an application program related to the object recognized.

27. A control system according to claim 21, wherein said processing unit executes a task related to the object recognized.

28. A control system according to claim 21, wherein said processing unit commands other task executing device to execute a task related to the object recognized via said communication unit.

29. A control system according to claim 21, wherein said display device includes a reproducing unit reproducing the motion picture recorded on a recording medium,
said recording medium is recorded with a first motion picture and a second image related to an object corresponding to the first motion picture, and
said processing unit makes said reproducing unit reproduce from said recording medium the second image related to the object recognized and makes said display device display the reproduced second image.

30. A control system according to claim 21, wherein said server further includes a unit transmitting an information to an add-up device adding up the pieces of information, and
said processing unit notifies said server of the information on the object recognized via said communication unit, and makes said add-up device add up results of the recognition via said server.

31. A control system according to claim 21, wherein said display device further includes a reproducing unit reproducing the motion picture recorded on recording medium, and
said communication unit , when the motion picture to be reproduced receives the pointing manipulation, transmits, to said server, information for specifying this motion picture and information for specifying a position where the pointing manipulation is effected on the motion picture.

32. A server in linkage with a display device including a receiving unit receiving data containing a motion picture, a display unit displaying the motion picture, and a pointing unit pointing a position on the motion picture, said server comprising:
a communication unit receiving information on the position
where the pointing manipulation is effected from said display device;
a recognizing unit recognizing the object in the motion picture receiving the pointing manipulation on the basis of the information received from said display device; and
a processing unit executing a predetermined process related to the object recognized.

33. A server according to claim 32, wherein said processing unit transmits the information on the object recognized to said display device via said communication unit.

34. A server according to claim 32, wherein said processing unit executes a task related to the object recognized.

35. A server according to claim 32 , wherein said processing unit, via said communication unit, commands other task executing device to execute a task related to the object recognized.

36. A server according to claim 32, wherein said communication unit notifies an add-up server adding up pieces of information, of the information on the object recognized, and makes said add-up server add up results of the recognition.

37. A server according to claim 32, wherein said communication unit communicates with an E-mail server delivering an E-mail, and
said processing unit, via said communication unit, commands said E-mail server to deliver an E-mail related to the object recognized.

38. A server issuing a command to a data distribution system in linkage with a display device including a receiving unit receiving data containing a motion picture from a data distribution system, a display unit displaying the motion picture, and a pointing unit pointing a position on the motion picture, said server comprising:
a communication unit receiving information on the position where the pointing manipulation is effected on the motion picture from said display device;
a recognizing unit recognizing the object in the motion picture receiving the pointing manipulation on the basis of the information received from said display device;
a referring unit referring to an instruction related to the object; and
a commanding unit commanding said data distribution system to change over the data to be distributed in accordance with the instruction.

39. An add-up device comprising:
a receiving unit receiving pieces of information to be added up;
a category specifying unit retaining category information for categorizing the added-up information ;
an add-up unit categorizing the added-up information in accordance with the category information and adding up these piece of added-up information;
an information recording unit recording pieces of added-up information ruled out of the category information by said add-up unit; and
a generating unit generating a new category for categorizing the added-up information recorded on said information recording unit,
wherein said category specifying unit adds the generated category to said category information, and
said add-up unit adds up once again the added-up information on the basis of the category information with the new category.

40. An add-up device according to claim 39, wherein the added-up information is an answer to a questionnaire.

41. An add-up device according to claim 40, wherein the answer to the questionnaire is a piece of information about a position on a picture, and
the category information contains area information created corresponding to picture segments.

42. A processing device comprising:
a photographing device obtaining an image of a subject;
a signal generating unit attached to each of a plurality of positions on the subject;
a detection unit detecting signals transmitted from said signal generating units;
a recording unit recording a mapping between the image and the signal; and
a processing unit creating, from the signals, information for defining an occupy area on the image of the subject or a part of the subject.

43. A server supporting an agency of advertisement for a commercial article related to a motion picture segment not assumed as an object in linkage with a display device including a receiving unit receiving a motion picture containing a commercial article, a display unit displaying the motion picture, and a pointing unit pointing a position on the motion picture, said server comprising:
a receiving unit receiving information about the position
where the pointing manipulation is effected from said display device;
a recognizing unit recognizing an object in the motion picture receiving the pointing manipulation on the basis of the information received from said display device;
a recording unit, if unable to recognize the object with respect to the pointing manipulation, recording data on that position; and
a reporting unit adding up and reporting pieces of information on the recorded position.

44. A server supporting an information research about the motion picture in linkage with a display device including a receiving unit receiving data containing a motion picture, a display unit displaying the motion picture, and a pointing unit pointing a position on the motion picture, said server comprising:
a receiving unit receiving information about a position
where the pointing manipulation is effected from said display device;
a recognizing unit recognizing an object in the motion picture receiving the pointing manipulation on the basis of the information received from said display device;
a recording unit, if unable to recognize the object with respect to the pointing manipulation, recording data on that position; and
a reporting unit adding up and reporting pieces of information on the recorded position.

45. A display device comprising:
a receiving unit receiving data containing a motion picture from a data distribution system;
a display unit displaying the motion picture;
a pointing unit pointing a position on the motion picture; and
a communication unit communicating with a server for recognizing an object in the motion picture,
wherein said communication unit, when a motion picture of first data displayed on said display unit receives the pointing manipulation, transmits, to said server, apiece of information about a position on the motion picture receiving the pointing manipulation and a piece of information for specifying the motion picture,
said server commands said data distribution system to change over the data to be distributed in accordance with the position on the motion picture receiving the pointing manipulation,
said receiving unit receives second data changed over, and
said display unit displays the second data.

46. A storage medium readable by a machine, tangible embodying a program of instructions executable by the machine to control a display device including a display unit displaying a motion picture and a pointing unit pointing a position on the motion picture, comprising:
recognizing an object in the motion picture on which the pointing manipulation is effected; and
executing a predetermined process related to the object recognized.

47. A storage medium readable by a machine tangible embodying a program according to claim 46, wherein said display device further includes a receiving unit receiving data,
said receiving unit receives first data containing the motion picture, and second data related to the object in the motion picture contained in the first data, and
said predetermined process involves making said display device output the second data related to the object recognized.

48. A storage medium readable by a machine tangible embodying a program according to claim 47, wherein the second data contains an image related to the motion picture of the first data.

49. A storage medium readable by a machine tangible embodying a program according to claim 47, wherein the second data is multiplexed with the first data and thus distributed.

50. A storage medium readable by a machine tangible embodying a program according to claim 49, wherein the second data is embedded in a margin of the first data.

51. A storage medium readable by a machine tangible embodying a program according to claim 47, wherein the motion picture of the first data contains an image related to a commercial article or a service becoming an advertisement target, and
the second data is an advertisement of the article or the service.

52. A storage medium readable by a machine tangible embodying a program according to claim 46, wherein the predetermined process is an execution of an application program related to the object recognized.

53. A storage medium readable by a machine tangible embodying a program according to claim 46, wherein the predetermined process is an execution of a task related to the object recognized.

54. A storage medium readable by a machine tangible embodying a program according to claim 46, wherein said display device further includes a communication unit transmitting a command to other task executing device, and
said predetermined process involves commanding, via said communication unit, said other task executing device to execute a task related to the object recognized.

55. A storage medium readable by a machine tangible embodying a program according to claim 54, wherein said task executing device is an E-mail server delivering an E-mail, and the command is a request for transmitting E-mail data related to the object, and
said predetermined process involves making the transmitted E-mail data received via said communication unit.

56. A storage medium readable by a machine tangible embodying a program according to claim 46, wherein said display device further includes a communication unit transmitting information to a server adding up pieces of information, and
said predetermined process involves notifying said server of the information related to the recognized object via said communication unit, and making said server add up results of the recognition.

57. A storage medium readable by a machine tangible embodying a program according to claim 47, wherein the motion picture is formed of a plurality of frames,
said receiving unit further receives definition information for defining an area of the object of each frame, and
said recognizing involves collating a position on the motion picture receiving the pointing manipulation with the definition information with respect to the frame of the motion picture receiving the pointing manipulation.

58. A storage medium readable by a machine tangible embodying a program according to claim 57, further comprising a displaying the area in the motion picture with enhancement.

59. A storage medium readable by a machine tangible embodying a program according to claim 47, further comprising receiving information for describing a characteristic of the object, and
said predetermined process involves generating an object corresponding to the motion picture on the basis of the motion picture and the information for describing the characteristic of the object.

60. A storage medium readable by a machine tangible embodying a program according to claim 46, wherein said predetermined process involves, when the pointing manipulation occurs during the display of the motion picture contained in the first data, commanding said display device to output, after an end of displaying the motion picture, the second data related to the object recognized by the pointing manipulation.

61. A storage medium readable by a machine tangible embodying a program according to claim 60, wherein said display device further includes a recording unit recording the data, and
said predetermined process involves, when the object is recognized from the pointing manipulation during the display of the motion picture, commanding said recording unit to record the second data related to the object, and commanding said display device to output, after the end of displaying the motion picture, the second data recorded.

62. A storage medium readable by a machine tangible embodying a program according to claim 46, wherein said predetermined process involves, when the object is recognized from the pointing manipulation during the display of the motion picture contained in the first data, commanding said display device to effect a first changeover to an output of the second data related to the object.

63. A storage medium readable by a machine tangible embodying a program according to claim 62, wherein said predetermined process involves commanding said display device to executes a second changeover to displaying the motion picture after outputting the second data.

64. A storage medium readable by a machine tangible embodying a program according to claim 63, wherein said display device further includes a recording unit recording data, and
said predetermined process involves issuing a command of displaying, after outputting the second data, the motion picture from a point of the first changeover recorded on said recording unit.

65. A storage medium readable by a machine tangible embodying a program according to claim 60, further comprising receiving the first data, and receiving the second data.

66. A storage medium readable by a machine, tangible embodying a program of instructions executable by the machine including a communication unit so as to control a display device including a display unit displaying a motion picture and a pointing unit pointing a position on the motion picture, to perform method steps comprising:
transmitting the position on the motion picture receiving the pointing manipulation to a server including a recognizing unit recognizing an object in the motion picture receiving the pointing manipulation;
receiving, from said server, information on the object in the motion picture recognized by said server; and
executing a predetermined process related to the object recognized.

67. A storage medium readable by a machine tangible embodying a program according to claim 66, wherein said display device further includes a receiving unit receiving data,
said receiving unit receives first data containing the motion picture, and second data related to the object in the motion picture contained in the first data, and
said predetermined process involves making said display device output the second data related to the object recognized.

68. A storage medium readable by a machine tangible embodying a program according to claim 67, wherein the second data contains an image related to the motion picture of the first data.

69. A storage medium readable by a machine tangible embodying a program according to claim 67, wherein the second data is multiplexed with the first data and thus distributed.

70. A storage medium readable by a machine tangible embodying a program according to claim 69, wherein the second data is embedded in a margin of the first data.

71. A storage medium readable by a machine tangible embodying a program according to claim 66, wherein the predetermined process is an execution of an application program related to the object recognized.

72. A storage medium readable by a machine tangible embodying a program according to claim 66, wherein the predetermined process is an execution of a task related to the object recognized.

73. A storage medium readable by a machine tangible embodying a program according to claim 66, wherein said predetermined process involves commanding, via said communication unit, other task executing device to execute a task related to the object recognized.

74. A storage medium readable by a machine tangible embodying a program according to claim 46, wherein said display device includes a reproducing unit reproducing the motion picture recorded on a recording medium,
said recording medium is recorded with a first motion picture and a second image related to an object corresponding to the first motion picture, and
said predetermined process involves reproducing from said recording medium the second image related to the object recognized and making said display device display the reproduced second image.

75. A storage medium readable by a machine tangible embodying a program according to claim 66, wherein said server further includes a unit transmitting the information to an add-up device adding up the pieces of information, and
said predetermined process involves notifying said server of the information on the object recognized, and making said add-up device add up results of the recognition via said server.

76. A storage medium readable by a machine tangible embodying a program according to claim 66, further comprising reproducing the motion picture recorded on said recording medium,
wherein said transmitting involves, when the motion picture to be reproduced receives the pointing manipulation, transmitting, to said server, information for specifying this motion picture and information for specifying a position where the pointing manipulation is effected on the motion picture.

77. A storage medium readable by a machine, tangible embodying a program of instructions executable by the machine including a communication unit so as to operate in linkage with a display device including a receiving unit receiving data containing a motion picture, a display unit displaying the motion picture, and a pointing unit pointing a position on the motion picture, to perform method steps comprising:
receiving information on the position where the pointing manipulation is effected from said display device;
recognizing the object in the motion picture receiving the pointing manipulation on the basis of the information received from said display device; and
executing a predetermined process related to the object recognized.

78. A storage medium readable by a machine tangible embodying a program according to claim 77, wherein said predetermined process further includes transmitting an information on the object recognized to said display device.

79. A storage medium readable by a machine tangible embodying a program according to claim 77, wherein the predetermined process is an execution of a task related to the object recognized.

80. A storage medium readable by a machine tangible embodying a program according to claim 77, wherein said predetermined process involves commanding other task executing device to execute a task related to the object recognized via said communication unit.

81. A storage medium readable by a machine tangible embodying a program according to claim 77, wherein said predetermined process involves notifying an add-up server for adding up pieces of information, of the information on the object recognized, and making said add-up server add up results of the recognition.

82. A storage medium readable by a machine tangible embodying a program according to claim 77, wherein said communication unit communicates with an E-mail server delivering an E-mail, and
said predetermined process involves commanding said E-mail server to deliver an E-mail related to the object recognized via said communication unit.

83. A storage medium readable by a machine, tangible embodying a program of instructions executable by the machine including a communication unit so as to issue a command to a data distribution system in linkage with a display device including a receiving unit receiving data containing a motion picture from said data distribution system, a display unit displaying the motion picture and a pointing unit pointing a position on the motion picture, to perform method steps comprising:
receiving information on the position where the pointing manipulation is effected on the motion picture;
recognizing the object in the motion picture receiving the pointing manipulation on the basis of the information received from said display device;
referring to an instruction related to the object; and
commanding said data distribution system to change over the data to be distributed in accordance with the instruction.

84. A storage medium readable by a machine, tangible embodying a program of instructions executable by the machine including a communication unit and a recording unit , to perform method steps comprising:
receiving pieces of information to be added up;
referring to category information for categorizing the added-up information ;
categorizing the added-up information in accordance with the category information and adding up these piece of added-up information;
recording pieces of added-up information ruled out of the category information in said categorizing;
generating a new set of category information for categorizing the added-up information recorded on said information recording unit; and
categorizing and adding up once again the added-up information on the basis of the generated category information.

85. A storage medium readable by a machine tangible embodying a program according to claim 84, wherein the added-up information is an answer to a questionnaire.

86. A storage medium readable by a machine tangible embodying a program according to claim 85, wherein the answer to the questionnaire is a piece of information about a position on a picture, and
the category information contains area information created corresponding to motion picture segments

87. A storage medium readable by a machine tangible embodying a program of instructions executable by the machine to perform method steps comprising:
obtaining an image of a subject;
detecting signals transmitted from signal generating units attached to a plurality of positions on the subject;
recording a mapping between the image and the signal; and
creating, from the signals, information for defining an occupy area on the image of the subject or a part of the subject.

88. A storage medium readable by a machine, tangible embodying a program of instructions executable by the machine so as to operate in linkage with a display device including a receiving unit receiving a motion picture containing a commercial article, a display unit displaying the motion picture, and a pointing unit pointing a position on the motion picture, said program functioning to support the agency of advertisement for the commercial article related to a motion picture segment not assumed as an object, to perform method steps comprising:
receiving information about a position where the pointing manipulation is effected from said display device;
recognizing an object in the motion picture receiving the pointing manipulation on the basis of the information received from said display device;
recording information on that position if unable to recognize the object with respect to the pointing manipulation; and
adding up and reporting pieces of information on the recorded position.

89. A storage medium readable by a machine, tangible embodying a program of instructions executable by the machine so as to operate in linkage with a display device including a receiving unit receiving data containing a motion picture, a display unit displaying the motion picture, and a pointing unit pointing a position on the motion picture, said program functioning to support an information research about the motion picture, to perform method steps comprising:
receiving information about a position where the pointing manipulation is effected from said display device;
recognizing an object in the motion picture receiving the pointing manipulation on the basis of the information received from said display device;
recording information on that position if unable to recognize the object with respect to the pointing manipulation; and
adding up and reporting pieces of information on the recorded position.

90. A storage medium readable by a machine, tangible embodying a program of instructions executable by the machine to control a display device including:
a receiving unit receiving data containing a motion picture from a data distribution system;
a display unit displaying the motion picture;
a pointing unit pointing a position on the motion picture; and
a communication unit communicating with a server for recognizing an object in the motion picture,
said program comprising:
transmitting, when amotion picture of first data displayed on said display unit receives the pointing manipulation, a piece of information about a position on the motion picture receiving the pointing manipulation and a piece of information for specifying the motion picture to said server;
making said server command said data distribution system to change over the data to be distributed in accordance with the position on the motion picture receiving the pointing manipulation;
receiving second data changed over; and
displaying the second data.

91. A control method of controlling a display device including a display unit displaying a motion picture and a pointing unit pointing a position on the motion picture, said method comprising:
recognizing an object in the motion picture on which the pointing manipulation is effected; and
executing a predetermined process related to the object recognized.

92. A control method according to claim 91, wherein said display device further includes a receiving unit receiving data, said control method further comprising:
receiving, via said receiving unit, first data containing the motion picture, and second data related to the object in the motion picture contained in the first data, and
making said display device output the second data related to the object recognized.

93. A control method according to claim 92, wherein the second data contains an image related to the motion picture of the first data.

94. A control method according to claim 92 wherein the second data is multiplexed with the first data and thus distributed.

95. A control method according to claim 94, wherein the second data is embedded in a margin of the first data.

96. A control method according to claim 92, wherein the motion picture of the first data contains an image related to a commercial article or a service becoming an advertisement target, and
the second data is an advertisement of the article or the service.

97. A control method according to claim 91, wherein the predetermined process is an execution of an application program related to the object recognized.

98. A control method according to claim 91, wherein the predetermined process is an execution of a task related to the object recognized.

99. A control method according to claim 91, wherein said display device further includes a communication unit transmitting a command to other task executing device, and
said predetermined process involves commanding said other task executing device to execute a task related to the object recognized via said communication unit.

100. A control method according to claim 99, wherein said task executing device is an E-mail server delivering an E-mail, and the command is a request for transmitting E-mail data related to the object, and
said predetermined process involves making the transmitted E-mail data received via said communication unit.

101. A control method according to claim 91, wherein said display device further includes a communication unit transmitting information to a add-up server adding up pieces of information, and
said predetermined process involves notifying said server of the information related to the recognized object via said communication unit, and making said server add up results of the recognition.

102. A control method according to claim 92, wherein the motion picture is formed of a plurality of frames,
said receiving involves further receives definition information for defining an area of the object of each frame, and
said recognizing involves collating a position on the motion picture receiving the pointing manipulation with the definition information with respect to the frame of the motion picture receiving the pointing manipulation.

103. A control method according to claim 102, further comprising displaying the area in the motion picture with enhancement.

104. A control method according to claim 92, further comprising receiving information for describing a characteristic of the object, and
said predetermined process involves generating an object corresponding to the motion picture on the basis of the motion picture and the information for describing the characteristic of the object.

105. A control method according to claim 91, wherein said predetermined process involves, when the pointing manipulation occurs during the display of the motion picture contained in the first data, commanding said display device to output, after an end of displaying the motion picture, the second data related to the object recognized by the pointing manipulation.

106. A control method according to claim 105, wherein said predetermined process further includes recording, when the object is recognized from the pointing manipulation during the display of the motion picture, the second data related to the object, and outputting the second data to said display device after the end of displaying the motion picture.

107. A control method according to claim 91, wherein said predetermined process involves, when the object is recognized from the pointing manipulation during the display of the motion picture contained in the first data, commanding said display device to effect a first changeover to an output of the second data related to the object.

108. A control method according to claim 107, wherein said processing step involves commanding said display device to executes a second changeover to displaying the motion picture after outputting the second data.

109. A control method according to claim 108, wherein said display device further includes a recording unit recording data, and
said processing step involves issuing a command of displaying the motion picture from a point of the first changeover recorded on said recording unit after outputting the second data.

110. A control method according to claim 105, further comprising receiving the first data, and receiving the second data.

111. A control method of controlling a display device including a display unit displaying a motion picture and a pointing unit pointing a position on the motion picture, said method comprising:
transmitting the position on the motion picture receiving the pointing manipulation to a server including a recognizing unit recognizing an object in the motion picture receiving the pointing manipulation;
receiving, from said server, information on the object in the motion picture recognized by said server; and
executing a predetermined process related to the object recognized.

112. A control method according to claim 111, wherein said display device further includes a receiving unit receiving data,
said receiving unit receives first data containing the motion picture, and second data related to the object in the motion picture contained in the first data, and
said predetermined process involves making said display device output the second data related to the object recognized.

113. A control method according to claim 112, wherein the second data contains an image related to the motion picture of the first data.

114. A control method according to claim 112, wherein the second data is multiplexed with the first data and thus distributed.

115. A control method according to claim 114, wherein the second data is embedded in a margin of the first data.

116. A control method according to claim 111, wherein the predetermined process is an execution of an application program related to the object recognized.

117. A control method according to claim 111, wherein the predetermined process is an execution of a task related to the object recognized.

118. A control method according to claim 111, wherein said predetermined process involves commanding, via said communication unit, other task executing device to execute a task related to the object recognized.

119. A control method according to claim 91, wherein said display device includes a reproducing unit reproducing the motion picture recorded on a recording medium,
said recording medium is recorded with a first motion picture and a second image related to an object corresponding to the first motion picture, and
said predetermined process involves reproducing from said recording medium the second image related to the object recognized and making said display device display the reproduced second image.

120. A control method according to claim 111, wherein said server further includes a unit transmitting the information to an add-up device for adding up the pieces of information, and
said predetermined process involves notifying said server of the information on the object recognized, and making said add-up device add up results of the recognition via said server.

121. A control method according to claim 111, further comprising reproducing the motion picture recorded on recording medium,
wherein said transmitting involves, when the motion picture to be reproduced receives the pointing manipulation, transmitting, to said server, information for specifying this motion picture and information for specifying a position where the pointing manipulation is effected on the motion picture.

122. An information processing method for a computer including a communication unit to operate in linkage with a display device including a receiving unit receiving data containing a motion picture, a display unit displaying the motion picture, and a pointing unit pointing a position on the motion picture, said method comprising:
receiving information on the position where the pointing manipulation is effected from said display device;
recognizing the object in the motion picture receiving the pointing manipulation on the basis of the information received from said display device; and
executing a predetermined process related to the object recognized.

123. An information processing method according to claim 122, wherein said predetermined process further includes transmitting an information on the object recognized to said display device.

124. An information processing method according to claim 122, wherein the predetermined process is an execution of a task related to the object recognized.

125. An information processing method according to claim 122, wherein said predetermined process involves commanding, via said communication unit, other task executing device to execute the task related to the object recognized.

126. An information processing method according to claim 122, wherein said predetermined process involves notifying a ad-up server adding up pieces of information, of the information on the object recognized, and making said add-up server add up results of the recognition.

127. An information processing method according to claim 122, wherein said communication unit communicates with an E-mail server delivering an E-mail, and
said predetermined process involves commanding said E-mail server to deliver an E-mail related to the object recognized via said communication unit.

128. An information processing method for a computer including a communication unit to issue a command to a data distribution system in linkage with a display device including a receiving unit receiving data containing a motion picture from said data distribution system, a display unit displaying the motion picture and a pointing unit pointing a position on the motion picture, said method comprising:
receiving information on the position where the pointing manipulation is effected on the motion picture;
recognizing the object in the motion picture receiving the pointing manipulation on the basis of the information received from said display device;
referring to an instruction related to the object; and
commanding said data distribution system to change over the data to be distributed in accordance with the instruction.

129. An information processing method comprising:
receiving pieces of information to be added up;
referring to category information for categorizing the added-up information;
categorizing the added-up information in accordance with the category information and adding up these piece of added-up information;
recording pieces of added-up information ruled out of the category information in said categorizing;
generating a new set of category information for categorizing the added-up information recorded; and
categorizing and adding up once again the added-up information on the basis of the generated category information.

130. An information processing method according to claim 129, wherein the added-up information is an answer to a questionnaire.

131. An information processing method according to claim 130, wherein the answer to the questionnaire is a piece of information about a position on a picture, and
the category information contains area information created corresponding to motion picture segments.

132. An information processing method comprising:
obtaining an image of a subject;
detecting signals transmitted from signal generating units attached to a plurality of positions on the subject;
recording a mapping between the image and the signal; and
creating, from the signals, information for defining an occupy area on the image of the subject or a part of the subject.

133. An information processing method for operating a computer in linkage with a display device including a receiving unit receiving a motion picture containing a commercial article, a display unit displaying the motion picture, and a pointing unit pointing a position on the motion picture, said method schemed to support an agency of advertisement for the commercial article related to a motion picture segment not assumed as an object, comprising:
receiving information about the position where the pointing manipulation is effected from said display device;
recognizing an object in the motion picture receiving the pointing manipulation on the basis of the information received from said display device;
recording data on the position if unable to recognize the object with respect to the pointing manipulation; and
adding up and reporting pieces of information on the recorded position.

134. An information processing method for operating a computer in linkage with a display device including a receiving unit receiving data containing a motion picture, a display unit displaying the motion picture, and a pointing unit pointing a position on the motion picture, said method schemed to support an information research about the motion picture, comprising:
receiving information about a position where the pointing manipulation is effected from said display device;
recognizing an object in the motion picture receiving the pointing manipulation on the basis of the information received from said display device;
recording data on the position if unable to recognize the object with respect to the pointing manipulation; and
adding up and reporting pieces of information on the recorded position.

135. An information processing method of controlling a display device including:
a receiving unit receiving data containing amotion picture from a data distribution system;
a display unit displaying the motion picture;
a pointing unit pointing a position on the motion picture; and
a communication unit communicating with a server for recognizing an object in the motion picture,
said method comprising:
transmitting, when a motion picture of first data displayed on said display unit receives the pointing manipulation, a piece of information about a position on the motion picture receiving the pointing manipulation and a piece of information for specifying the motion picture to said server;
making said server command said data distribution system to change over the data to be distributed in accordance with the position on the motion picture receiving the pointing manipulation;
receiving second data changed over; and
displaying the second data.
